# EUROPEAN PATENT APPLICATION

(11) **EP 4 803 998 A1**
(43) Date of publication of application: **09.09.2026**
(21) Application number: 24901146.1
(22) Date of filing: 06.12.2024
(51) Int. Cl.: G06F 3/0484, G06F 3/04817, G06F 3/14, G06N 20/00

(54) **ELECTRONIC DEVICE, METHOD, AND NON-TRANSITORY COMPUTER-READABLE RECORDING MEDIUM FOR DISPLAYING INFORMATION ON LOCK SCREEN**

(30) Priority: 07.12.2023 KR 20230177127; 19.01.2024 KR 20240009099; 11.04.2024 KR 20240048963; 28.10.2024 WO PCT/KR2024/016568
(71) Applicant: Samsung Electronics Co., Ltd., Suwon-si, Gyeonggi-do 16677 (KR)
(72) Inventor: HAN, Jiyoung, Suwon-si Gyeonggi-do 16677 (KR); PARK, Eunhae, Suwon-si Gyeonggi-do 16677 (KR)
(74) Representative: HGF
(86) International application number: PCT/KR2024/020007
(87) International publication number: WO 2025/121960

(57) **Abstract**

An electronic device is disclosed. The electronic device may cause a lock screen including a widget located between a first icon and a second icon to be displayed through a display in a locked state of the electronic device. The electronic device may display information corresponding to a first application through the widget. The electronic device may obtain a notification from a second application while the lock screen is displayed. The electronic device may enlarge the widget to the position of the first icon at least partially on the basis of determining that the second application is related to the first icon, and display the notification through the widget. The electronic device may display the notification through the widget at least partially on the basis of determining that the second application is not related to the first icon and the second icon.

## Description

### [Technical Field]

The following descriptions relate to an electronic device, a method, and a non-transitory computer-readable recording medium for displaying information on a lock screen.

### [Background Art]

A lock state may be a state for preventing an electronic device from executing a function deviating from an intention of a user, or preventing another user from accessing the electronic device.

In a lock state, the electronic device may display a lock screen. The lock screen may display predesignated information (e.g., a time or a notification) on a wallpaper (or a background screen).

### [Disclosure]

### [Technical Solution]

An electronic device is disclosed. The electronic device may include a display. The electronic device may include at least one processor including processing circuitry. The electronic device may include memory comprising one or more storage media storing instructions. The instructions, when executed individually or collectively by the at least one processor, may cause the electronic device to display, in a lock state of the electronic device, a lock screen including a widget located between a first icon and a second icon through the display. The instructions, when executed individually or collectively by the at least one processor, may cause the electronic device to display, through the widget, information corresponding to a first application. The instructions, when executed individually or collectively by the at least one processor, may cause the electronic device to obtain, while displaying the lock screen, a notification from a second application. The instructions, when executed individually or collectively by the at least one processor, may cause the electronic device to, based at least in part on determining that the second application is associated with the first icon, expand the widget to a location of the first icon and display the notification through the widget. The instructions, when executed individually or collectively by the at least one processor, may cause the electronic device to, based at least in part on determining that the second application is not associated with the first icon and the second icon, display the notification through the widget.

A method is disclosed. The method may be performed by an electronic device including a display. The method may include displaying, in a lock state of the electronic device, a lock screen including a widget located between a first icon and a second icon through the display. The method may include displaying, through the widget, information corresponding to a first application. The method may include obtaining a notification from a second application while displaying the lock screen. The method may include, based at least in part on determining that the second application is associated with the first icon, expanding the widget to a location of the first icon and displaying the notification through the widget. The method may include, based at least in part on determining that the second application is not associated with the first icon and the second icon, displaying the notification through the widget.

A non-transitory computer readable storage medium is disclosed. The non-transitory computer readable storage medium may store a program including instructions. The instructions, when executed individually or collectively by at least one processor of an electronic device including a display, may cause the electronic device to display, in a lock state of the electronic device, a lock screen including a widget located between a first icon and a second icon through the display. The instructions, when executed individually or collectively by the at least one processor, may cause the electronic device to display, through the widget, information corresponding to a first application. The instructions, when executed individually or collectively by the at least one processor, may cause the electronic device to obtain, while displaying the lock screen, a notification from a second application. The instructions, when executed individually or collectively by the at least one processor, may cause the electronic device to, based at least in part on determining that the second application is associated with the first icon, expand the widget to a location of the first icon and display the notification through the widget. The instructions, when executed individually or collectively by the at least one processor, may cause the electronic device to, based at least in part on determining that the second application is not associated with the first icon and the second icon, display the notification through the widget.

### [Description of the Drawings]

FIG. 1 is a block diagram of an electronic device in a network environment according to various embodiments.
FIGS. 2A to 2G illustrate an example of a lock screen of an electronic device according to an embodiment.
FIG. 3 illustrates an example of a change of a widget included in a lock screen of an electronic device according to an embodiment.
FIG. 4 illustrates an example of a change of a widget included in a lock screen of an electronic device according to an embodiment.
FIG. 5 illustrates an example of a change of a widget included in a lock screen of an electronic device according to an embodiment.
FIG. 6 illustrates an example of a change of a lock screen of an electronic device according to an embodiment.
FIG. 7 illustrates an example of a change of a widget included in a lock screen of an electronic device according to an embodiment.
FIG. 8A illustrates an example of a lock screen of an electronic device according to an embodiment.
FIG. 8B illustrates an example of a lock screen of an electronic device according to an embodiment.
FIG. 9 illustrates an example of a lock screen of an electronic device according to an embodiment.
FIG. 10 illustrates an example of a change of a lock screen of an electronic device according to an embodiment.
FIG. 11 illustrates an example of a change of a lock screen of an electronic device according to an embodiment.
FIG. 12 illustrates an example of a change of a lock screen of an electronic device according to an embodiment.
FIG. 13 illustrates an example of a user interface (UI) for setting a lock screen of an electronic device according to an embodiment.
FIGS. 14A to 14C illustrate an example of a widget indicating a notification on a screen displayed by an electronic device according to an embodiment.
FIG. 15 illustrates an example of a change of a widget indicating a notification on a screen displayed by an electronic device according to an embodiment.
FIG. 16 illustrates an example of a change of a widget indicating a notification on a screen displayed by an electronic device according to an embodiment.
FIG. 17 illustrates an example of a change of a widget indicating a notification on a screen displayed by an electronic device according to an embodiment.
FIG. 18 illustrates an example of an operation of expanding a widget indicating a notification on a screen displayed by an electronic device according to an embodiment.
FIG. 19 illustrates an example of a change of a widget indicating a notification on a screen displayed by an electronic device according to an embodiment.
FIG. 20 illustrates an example of a widget displayed by an electronic device according to an embodiment.
FIG. 21 is a flowchart illustrating an operation of an electronic device according to an embodiment.
FIG. 22A illustrates an example of switching between widgets on a screen displayed by an electronic device according to an embodiment.
FIG. 22B illustrates an example of switching between widgets on a lock screen of an electronic device according to an embodiment.
FIG. 22C illustrates an example of a change of a widget on a lock screen of an electronic device according to an embodiment.
FIG. 22D illustrates an example of a change of a widget for a notification on a screen displayed by an electronic device according to an embodiment.
FIG. 23A illustrates an example of a change of a widget on a lock screen of an electronic device according to an embodiment.
FIG. 23B illustrates an example of a change of a widget on a lock screen of an electronic device according to an embodiment.
FIG. 24A illustrates an example of a change of a widget according to an input to a widget on a lock screen of an electronic device according to an embodiment.
FIG. 24B illustrates an example of a change of a widget according to an input to a widget on a lock screen of an electronic device according to an embodiment.
FIG. 24C illustrates an example of a change of a widget according to an input to a widget on a lock screen of an electronic device according to an embodiment.
FIG. 25A illustrates an example of a change of a widget on a lock screen of an electronic device according to an embodiment.
FIG. 25B illustrates an example of a change of a widget on a lock screen of an electronic device according to an embodiment.
FIG. 25C illustrates an example of a change of a widget on a lock screen of an electronic device according to an embodiment.
FIG. 26A illustrates an example of a change of a widget on a lock screen of an electronic device according to an embodiment.
FIG. 26B illustrates an example of a change of a widget on a lock screen of an electronic device according to an embodiment.
FIG. 26C illustrates an example of a change of a widget on a lock screen of an electronic device according to an embodiment.
FIG. 26D illustrates an example of a change of a widget on a lock screen of an electronic device according to an embodiment.
FIG. 27A illustrates an example of a change of a widget while changing from a screen of an application to a lock screen according to an embodiment.
FIG. 27B illustrates an example of a change of a widget on a lock screen according to an embodiment.
FIG. 28 illustrates an example of a situation in which a widget is displayed for a notification on a lock screen according to an embodiment.
FIG. 29 illustrates an example of a change of a widget on a lock screen according to an embodiment.
FIG. 30 illustrates an example of a widget displayed according to charging of an electronic device according to an embodiment.
FIG. 31 illustrates an example of a widget displayed according to a connection between an electronic device and another electronic device according to an embodiment.
FIG. 32 illustrates an example of a widget for payment in an electronic device according to an embodiment.
FIG. 33 illustrates an example of a screen for providing a notification in an electronic device according to an embodiment.
FIG. 34A illustrates an example of a screen for providing a notification in an electronic device according to an embodiment.
FIG. 34B illustrates an example of a screen for providing a notification in an electronic device according to an embodiment.
FIG. 35 illustrates an example of a visual object changed according to a mode of an electronic device according to an embodiment.
FIG. 36 illustrates an example of lock screens changed according to a mode of an electronic device according to an embodiment.
FIG. 37A illustrates an example of an electronic device according to an embodiment.
FIG. 37B illustrates an example of a screen displayed in an electronic device according to an embodiment.
FIG. 37C illustrates an example of a widget displayed in an electronic device according to an embodiment.
FIG. 38A illustrates an example of a widget linked between an electronic device and another electronic device according to an embodiment.
FIG. 38B illustrates an example of a widget displayed in another electronic device according to an embodiment.
FIG. 39 illustrates an example of a widget of an electronic device controlled through another electronic device according to an embodiment.
FIG. 40 illustrates an example of a widget indicating a screen displayed through another electronic device according to an embodiment.
FIG. 41 illustrates an example of a screen for setting a mode in a lock state of an electronic device according to an embodiment.
FIG. 42A illustrates an example of an always on display (AoD) screen that changes a widget according to an event in a lock state of an electronic device according to an embodiment.
FIG. 42B illustrates an example of a screen for changing a widget according to an event in a lock state of an electronic device according to an embodiment.
FIG. 43A illustrates an example of a screen of an electronic device according to an embodiment.
FIG. 43B illustrates an example of layers included in a screen of an electronic device according to an embodiment.
FIG. 44 illustrates an example of a lock screen of an electronic device according to an embodiment.
FIG. 45A is a flowchart illustrating an operation of an electronic device according to an embodiment.
FIG. 45B is a flowchart illustrating an operation of an electronic device according to an embodiment.
FIG. 46 illustrates a structure of a generative AI model of an electronic device according to an embodiment.
FIG. 47 illustrates an operation of changing a screen according to an event identified while an electronic device displays an AoD screen according to an embodiment.
FIG. 48 illustrates an operation of changing a widget according to an event identified while an electronic device displays a lock screen according to an embodiment.
FIG. 49A illustrates an operation of changing a widget as a mode is changed while an electronic device displays a lock screen according to an embodiment.
FIG. 49B illustrates an operation of changing a widget as a mode is changed while an electronic device displays a lock screen according to an embodiment.
FIG. 49C illustrates an operation of changing a widget as a mode is changed while an electronic device displays a lock screen according to an embodiment.
FIG. 50A illustrates an operation of dismissing a widget according to a received user input while an electronic device displays a lock screen according to an embodiment.
FIG. 50B illustrates an operation of dismissing a widget according to a received user input while an electronic device displays a lock screen according to an embodiment.
FIG. 51 illustrates an operation of changing a widget according to an event identified while an electronic device displays a lock screen according to an embodiment.
FIG. 52 illustrates an operation in which an electronic device switches between an AoD screen and a lock screen according to an embodiment.
FIG. 53 illustrates an example of widget areas displayed on an AoD screen according to an embodiment.
FIG. 54 illustrates an example of a widget on a screen displayed by an electronic device according to an embodiment.
FIG. 55 illustrates an example of information included in a widget displayed by an electronic device according to an embodiment.
FIG. 56 illustrates an example of setting screens displayed by an electronic device according to an embodiment.
FIG. 57A is a diagram illustrating a change of widgets displayed by an electronic device according to an embodiment.
FIG. 57B is a diagram illustrating a change of widgets displayed by an electronic device according to an embodiment.
FIG. 58A is a diagram illustrating a change of widgets displayed by an electronic device according to an embodiment.
FIG. 58B is a diagram illustrating a change of widgets displayed by an electronic device according to an embodiment.

### [Mode for Invention]

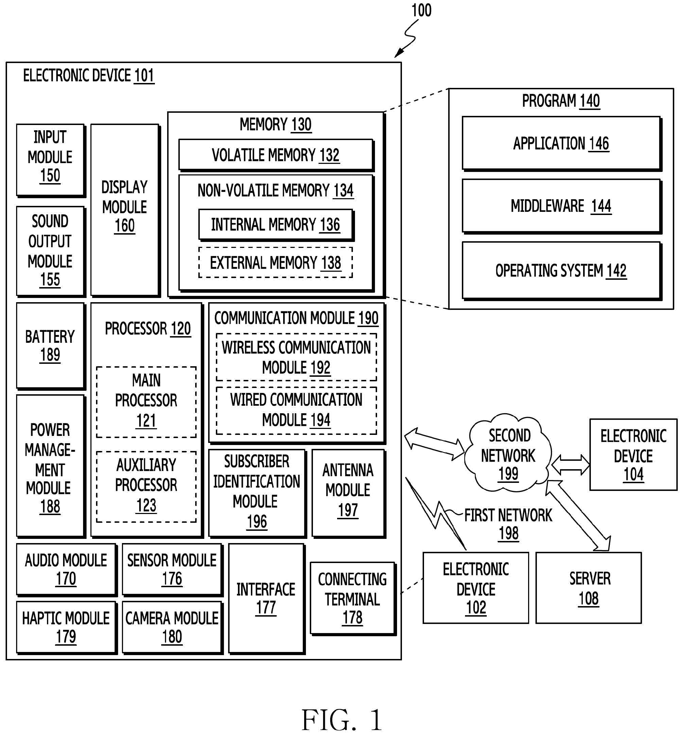

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

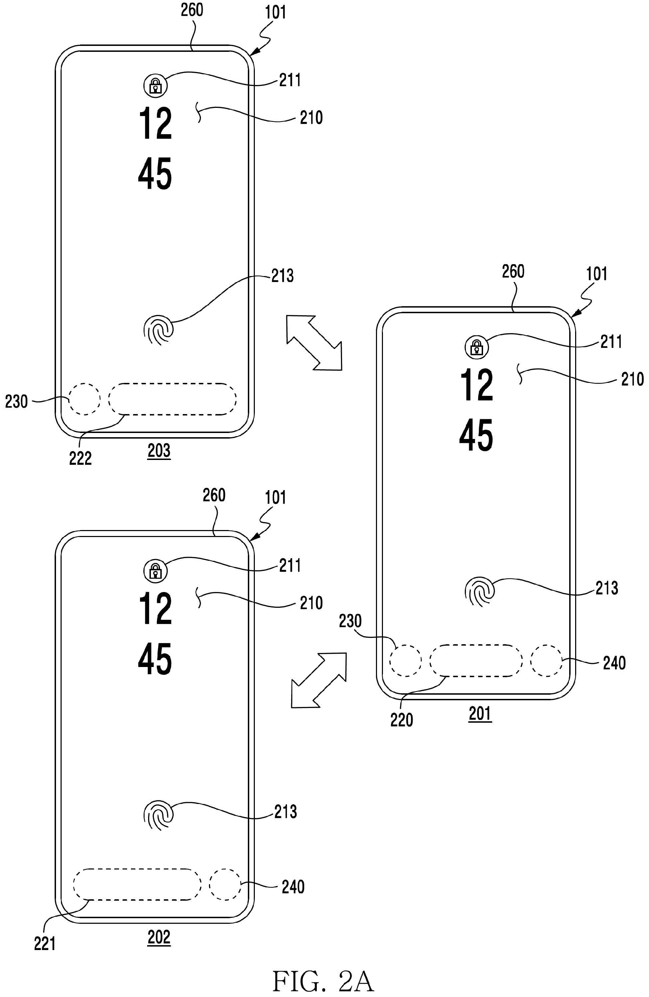

FIGS. 2A to 2G illustrate an example of a lock screen of an electronic device according to an embodiment.

The electronic device 101 of FIGS. 2A to 2G may be described with reference to configurations of the electronic device 101 of FIG. 1.

Referring to a state 201 of FIG. 2A, the electronic device 101 may display a lock screen in a lock state through a display 260 (e.g., the display module 160 of FIG. 1). In an embodiment, the lock state may be a state in which access to the electronic device 101 is restricted. In an embodiment, the access to the electronic device 101 being restricted may include that execution of an application other than allowed applications is restricted. In an embodiment, the access to the electronic device 101 being restricted may include that display of information other than allowed information is restricted. In an embodiment, the lock screen may refer to a screen displayed on the display 260 in the lock state.

Referring to the state 201 of FIG. 2A, the lock screen may include a background area 210. In an embodiment, a wallpaper (or a background image) may be displayed in the background area 210. In an embodiment, the wallpaper displayed in the background area 210 of the lock screen may be a predesignated image. In an embodiment, the wallpaper displayed in the background area 210 of the lock screen may be an image changed according to a state of the electronic device 101. In an embodiment, a visual object 211 (e.g., a lock image) indicating the lock state and/or a visual object 213 (e.g., a fingerprint image) indicating an input area for obtaining an input (e.g., a fingerprint image) for releasing the lock state (or an area in which the sensor module 176 (e.g., a biometric sensor, a fingerprint sensor) is located) may be displayed in the background area 210.

In an embodiment, a lock screen may include a widget area 220. In an embodiment, a widget for displaying information associated with an application may be displayed in the widget area 220. In an embodiment, a widget for displaying information (or a notification) generated by an application being executed (in a background) may be displayed in the widget area 220. In an embodiment, a widget may be classified into an information widget, a management widget, or a hybrid widget for information and management. In an embodiment, the information widget may display an information element (e.g., current weather, currently playing song information, the number of steps, and exercise time) provided by an application associated with the widget. In an embodiment, the management widget may display a function element (e.g., next song play, pause, answering a call, hanging up a call) provided by an application associated with the widget. For example, the electronic device 101 may control some functions of an application associated with the widget, in response to a selection of a function element provided by the management widget. In an embodiment, the hybrid widget may display an information element and a function element provided by an application associated with the widget. For example, the widget may be referred to as a mini application for an application associated with the widget.

For example, the widget may include one or more objects to display information (or a notification) generated by an application. For example, the one or more objects may include an image and/or text.

In an embodiment, the widget area 220 may be located at a designated location of a lock screen. For example, the widget area 220 may be located between a first icon area 230 and a second icon area 240. For example, a distance spaced between the widget area 220 and the first icon area 230 may be the same as a distance spaced between the widget area 220 and the second icon area 240. In an embodiment, the widget area 220 may be located below a visual object 213 (or an input area). In an embodiment, the widget area 220 may be located not to overlap the visual object 213 (or the input area).

In an embodiment, the widget area 220 may have the same location in a height direction as the first icon area 230. For example, a length of the widget area 220 in the height direction may be the same as a length of the first icon area 230 in the height direction. For example, a horizontal line connecting a top (or a bottom) of the widget area 220 may be the same as a horizontal line connecting a top (or a bottom) of the first icon area 230.

In an embodiment, the widget area 220 may have the same location in a height direction as the second icon area 240. For example, a length of the widget area 220 in the height direction may be the same as a length of the second icon area 240 in the height direction. For example, a horizontal line connecting a top (or a bottom) of the widget area 220 may be the same as a horizontal line connecting a top (or a bottom) of the second icon area 240.

In an embodiment, the widget area 220 may be located at a relatively lower portion of a lock screen. For example, interactive objects (e.g., icon areas 230 and 240) and/or information elements (e.g., weather) displayed on the lock screen may be located on at least the same line as the widget area 220. For example, areas in which interactive objects displayed on the lock screen are displayed (e.g., icon areas 230 and 240) and/or information elements (e.g., weather) may be displayed at an upper portion of a horizontal line connecting a bottom (or a center) (or a top) of the widget area 220. For example, areas in which interactive objects displayed on the lock screen are displayed (e.g., icon areas 230 and 240) and/or information elements (e.g., weather) may not be displayed at a lower portion of a horizontal line connecting a bottom (or a center) (or a top) of the widget area 220. However, it is not limited thereto.

In an embodiment, the widget area 220 may be located at a relatively central portion of the lock screen. For example, the widget area 220 may be disposed based on a vertical line connecting a center of the lock screen. For example, the widget area 220 may be disposed such that an area on a left side of the vertical line and an area on a right side of the vertical line are the same. However, it is not limited thereto.

In an embodiment, the electronic device 101 may change the widget area 220 and/or the icon areas 230 and 240 displayed on the lock screen based on an event.

For example, in a state 202 of FIG. 2A, the electronic device 101 may display, on the display 260, a widget of an application associated with the first icon area 230 at a widget area 221 in which a first side (or a left side) of the widget area 220 is expanded in a direction of the first icon area 230, based on an event generated from an application associated with the first icon area 230.

For example, in a state 203 of FIG. 2A, the electronic device 101 may display, on the display 260, a widget of an application associated with the second icon area 240 in a widget area 222 in which a second side (or a right side) of the widget area 220 is expanded in a direction of the second icon area 240, based on an event generated from an application associated with the second icon area 240.

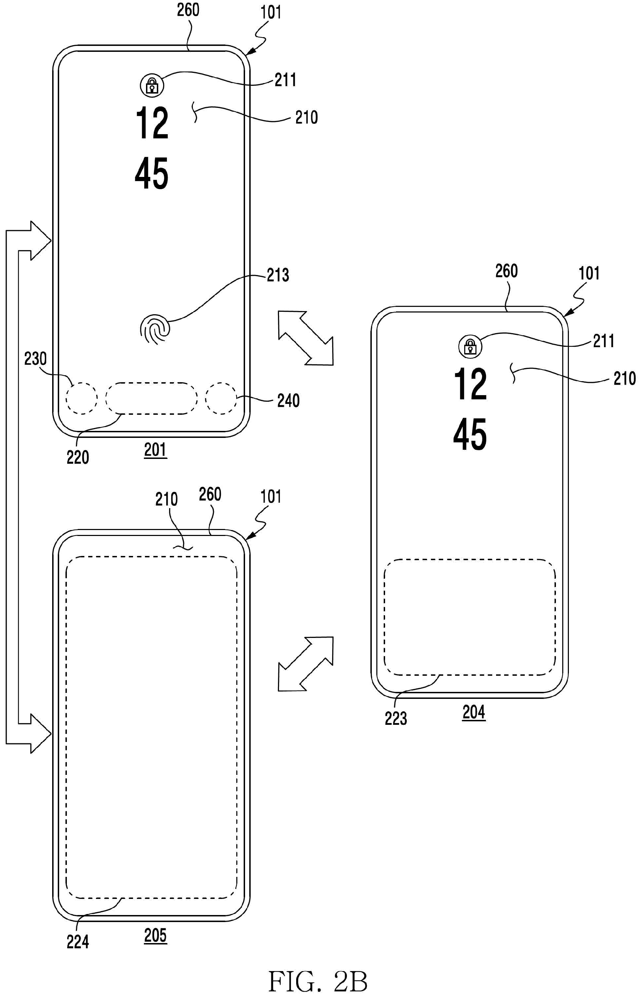

For example, referring to states 201 and 204 of FIG. 2B, the electronic device 101 may change the widget area 220 into a widget area 223 in which a top and sides of the widget area 220 are expanded, based on a tap input (or a double tap input) to the widget area 220. For example, referring to the states 201 and 204 of FIG. 2B, the electronic device 101 may change the widget area 223 into the widget area 220 based on a tap input (or a double tap input) to an area other than the widget area 223.

For example, referring to states 204 and 205 of FIG. 2B, the electronic device 101 may change the widget area 223 into a widget area 224 in which a top of the widget area 223 is expanded, based on a tap input (or a double tap input) to the widget area 223. For example, referring to states 204 and 205 of FIG. 2B, the electronic device 101 may change the widget area 224 into the widget area 223, based on a tap input (or a double tap input) to an area other than the widget area 224.

For example, referring to states 201 and 205 of FIG. 2B, the electronic device 101 may change the widget area 220 into the widget area 224 in which a top and sides of the widget area 220 are expanded, based on a tap input (or a double tap input) to the widget area 220. For example, referring to states 201 and 205 of FIG. 2B, the electronic device 101 may change the widget area 224 into the widget area 220 based on a tap input (or a double tap input) to an area other than the widget area 224.

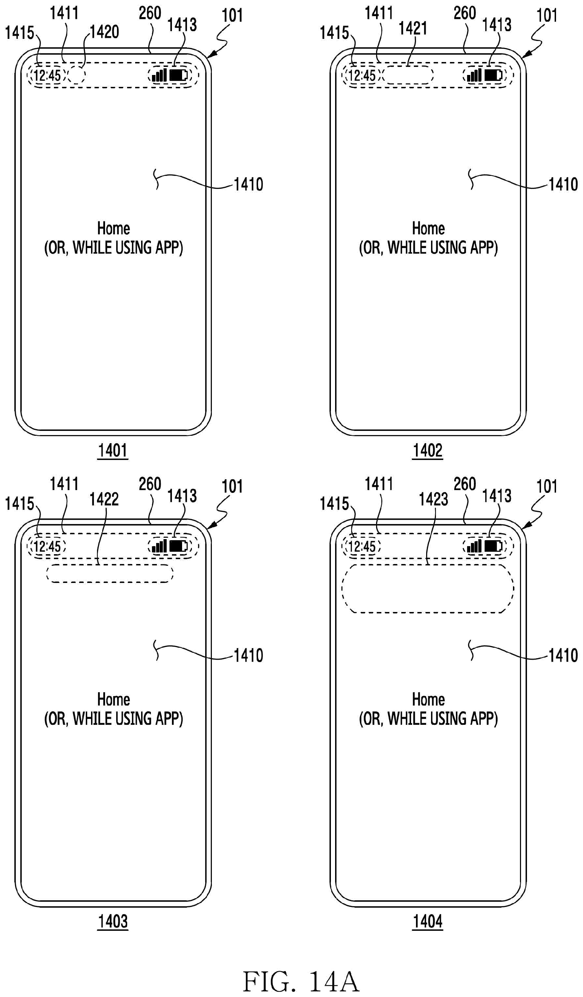

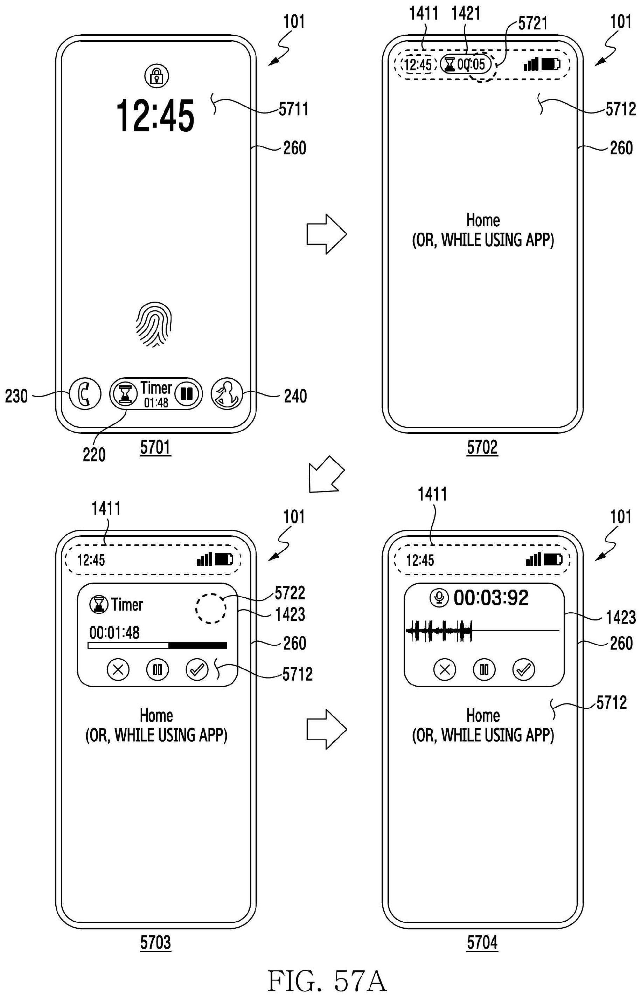

In an embodiment, in a case that the electronic device 101 is unlocked in each of states 201, 204 and 205 of FIG. 2B, the electronic device 101 may display a screen according to one of states 1401 or 1402 illustrated through FIG. 14A. For example, in a case that the electronic device 101 is unlocked in each of states 201, 204 and 205 of FIG. 2B, the electronic device 101 may display a screen 5712 according to a state 5702 illustrated through FIG. 57A.

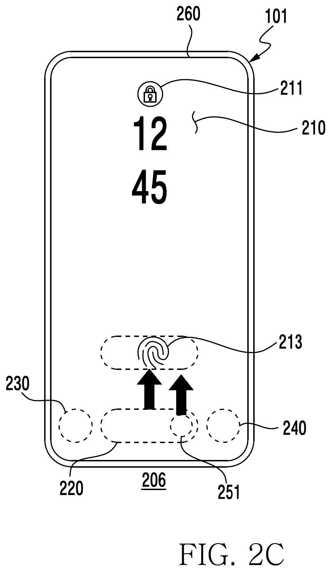

For example, referring to a state 206 of FIG. 2C, the electronic device 101 may move the widget area 220 based on a direction and a distance corresponding to a swipe input 251 during the swipe input 251 to the widget area 220. For example, the electronic device 101 may display the moved widget area 220 at an original location based on the swipe input 251 being released.

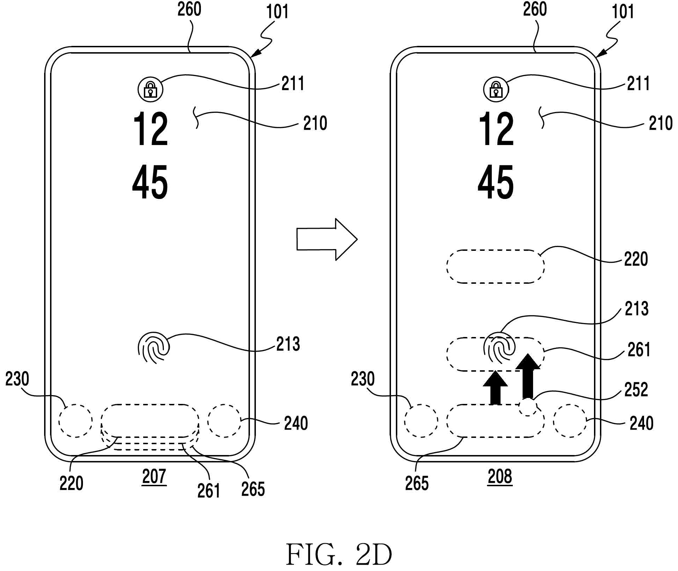

For example, referring to a state 207 of FIG. 2D, when the number of widgets capable of being displayed in the widget area 220 is two or more, the electronic device 101 may display widget areas 261 and 265 indicating that widgets having a next priority exist. For example, referring to a state 208 of FIG. 2D, the electronic device 101 may move the widget area 220 and the widget areas 261 and 265, based on a direction and a distance corresponding to a swipe input 252 during the swipe input 252 to the widget area 220. A distance in which the widget areas 261 and 265 are moved may be shorter than a distance in which the widget area 220 is moved. For example, the electronic device 101 may display the widget area 220 at a layer after the widget areas 261 and 265, based on the swipe input 252 being released. For example, based on the swipe input 252 being released, the electronic device 101 may display the widget area 220 such that the widget area 220 is covered by the widget areas 261 and 265. For example, based on the swipe input 252 being released, the electronic device 101 may display a widget area 261 having a next priority at a frontmost location. Displaying the widget area 261 at the frontmost location may include displaying the widget area 261 at a location of the widget area 220 before the swipe input 252.

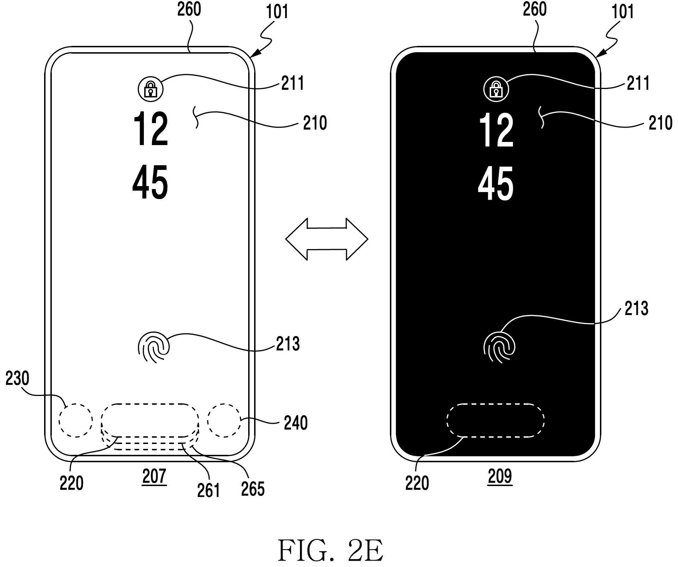

For example, referring to states 207 and 209 of FIG. 2E, the electronic device 101 may display a screen according to an always on display (AoD), based on a designated condition. For example, referring to state 209 of FIG. 2E, the screen according to the AoD may be a screen for low power operation of the electronic device 101. The screen according to the AoD may include a background screen of a designated color (e.g., black). In the screen according to the AoD, icon areas 230 and 240 may not be displayed. In the screen according to the AoD, only one widget area 220 having a highest priority among widget areas 220, 261 and 265 may be displayed. In an embodiment, the low power operation of the electronic device 101 may include a processor 120 of the electronic device 101 being operated in a low power state (e.g., an operating frequency of the processor 120 being lowered and/or at least a portion of the processor 120 entering a sleep state). In an embodiment, the low power operation of the electronic device 101 may include the display 260 of the electronic device 101 being operated in a low power state (e.g., a screen update cycle displayed on the display 260 becoming longer and/or a brightness of the display 260 being reduced).

In an embodiment, the electronic device 101 may, while displaying a screen according to the AoD, update a widget displayed in the widget area 220 to be the same as an update cycle of the screen according to the AoD. For example, in a case that the update cycle of the screen according to the AoD is 1 minute, the electronic device 101 may display, in the widget area 220, information updated every 1 minute. For example, in a case that an application displayed in the widget area 220 is a timer, a time displayed in the widget area 220 may be displayed identically (e.g., 3 minutes 35 seconds are displayed during an update cycle (e.g., 1 minute)) while the screen according to the AoD is not updated. Alternatively, for example, in a case that an application displayed in the widget area 220 includes time information, the electronic device 101 may display only information indicating that the application is running, instead of displaying the time information in the widget area 220 of the screen according to the AoD.

In an embodiment, the electronic device 101 may set different update cycles for a widget displayed in the widget area 220, while displaying a screen according to the AoD (hereinafter, may be referred to as an AoD screen). For example, the electronic device 101 may update the AoD screen with a relatively short cycle for a designated time (e.g., 10 seconds, 30 seconds, and 1 minute) after being switched from a lock screen to the AoD screen. For example, the relatively short cycle may be shorter than a reference update cycle (e.g., 1 minute) of the AoD screen. For example, the relatively short cycle may be based on time-related information displayed in the widget area 220 in the AoD screen. For example, in a case that a smallest unit of time expression in the widget area 220 in the AoD screen is a second, the electronic device 101 may, for the designated time, update the widget area 220 in the AoD screen in a unit of 1 second. For example, in a case that a smallest unit of time expression in the widget area 220 in the AoD screen is a millisecond, the electronic device 101 may, for the designated time, update the widget area 220 in the AoD screen in a unit of a millisecond. For example, in a case that a smallest unit of time expression in the widget area 220 in the AoD screen is a millisecond, the electronic device 101 may stop (or delete) display of a millisecond unit as the lock screen is switched to the AoD screen.

For example, the electronic device 101 may update the AoD screen with a relatively long cycle after a designated time (e.g., 10 seconds, 30 seconds and 1 minute) has elapsed after being switched from the lock screen to the AoD screen. For example, the relatively long cycle may be the same as a reference update cycle of the AoD screen. For example, in a case that the reference update cycle of the AoD screen is 1 minute, the electronic device 101 may update the widget area 220 in the AoD screen in a unit of 1 minute.

In an embodiment, the electronic device 101 may simplify (or abbreviate) time-related information in a widget displayed in the widget area 220 while displaying the AoD screen. For example, the electronic device 101 may determine, based on an update cycle of a widget displayed in the widget area 220, time-related information to be displayed in the widget, while displaying the AoD screen. For example, in a case that the AoD screen (or the widget) is updated with a relatively short cycle, the electronic device 101 may display, in the widget displayed in the widget area 220, time information including up to a time unit corresponding to the short cycle. For example, in a case that the AoD screen (or the widget) is updated with a relatively long cycle, the electronic device 101 may display, in the widget displayed in the widget area 220, time information including up to a time unit corresponding to the long cycle.

For example, the electronic device 101 may update a time expression in a widget while updating an AoD screen in a relatively short cycle (e.g., second unit, or millisecond unit) for a designated time (e.g., 10 seconds, 30 seconds, or 1 minute) after being switched to the AoD screen. For example, the time expression may include a time expression including a second unit (e.g., 36 seconds). For example, the time expression may include a time expression including a second unit and a minute unit (e.g., 3 minutes 36 seconds). For example, the time expression may include a time expression including a second unit and units of a minute unit or more (e.g., 1 hour 3 minutes 36 seconds, 1 day 3 minutes 36 seconds, and the like). For example, updating a time expression may include that the time expression indicates time flow. For example, updating a time expression may include that a time expression of 3 minutes 35 seconds is changed to a time expression of 3 minutes 36 seconds after 1 second.

For example, the electronic device 101 may display and/or update a simplified time expression while updating the AoD screen in a relatively long cycle after the designated time (e.g., 10 seconds, 30 seconds, or 1 minute) has elapsed after being switched from the lock screen to the AoD screen. The simplified time expression may include omitting a time expression of a second unit. In an embodiment, the simplified time expression may include replacing a display of some time units with a specific expression (e.g., "--") while maintaining a format of the time expression. For example, updating the simplified time expression may include that the time expression of 3 minutes 35 seconds is changed to a time expression of 3 minutes -- seconds at a next update. For example, "-- seconds" may include not displaying a time of a second unit (or replacing with a specific expression). However, it is not limited thereto. The simplified time expression may include omitting a time expression of units of a second unit or more.

For example, in a case that health information including an exercise time (e.g., hh:mm:ss format) and a distance (e.g., 1.50 km) is displayed in the widget area 220 within the lock screen, the electronic device 101 may update the exercise time (e.g., hh:mm:ss format) and the distance (e.g., 1.50 km) in real time. For example, while displaying the health information in the widget area 220 within the lock screen, the electronic device 101 may update a time expression of the hh:mm:ss format in a unit of seconds (e.g., ss). For example, while displaying the health information in the widget area 220 within the lock screen, the electronic device 101 may update a distance expression of a meter unit of a distance format in a unit of 0.01 kilometers.

For example, in a case that health information is displayed in the widget area 220 within the AoD screen, the electronic device 101 may update an exercise time (e.g., hh:mm:ss format) and a distance (e.g., 1.50 km) in real time (or, in a relatively short cycle) for a designated time (e.g., 10 seconds, 30 seconds, 1 minute) after being switched from the lock screen to the AoD screen. For example, while displaying the health information in the widget area 220 within the AoD screen, the electronic device 101 may update a time expression of the hh:mm:ss format in a unit of seconds (e.g., ss). For example, while displaying the health information in the widget area 220 within the AoD screen, the electronic device 101 may update a distance expression of a meter unit of a distance format in a unit of 0.01 kilometers.

For example, in a case that the health information is displayed in the widget area 220 within the AoD screen, the electronic device 101 may update an exercise time (e.g., hh:mm:ss format) and a distance (e.g., 1.50 km) in a relatively long cycle after a designated time (e.g., 10 seconds, 30 seconds, 1 minute) after being switched from the lock screen to the AoD screen. For example, the electronic device 101 may simplify and display an exercise time (e.g., hh:mm:ss format) and a distance (e.g., 1.50 km) after a designated time (e.g., 10 seconds, 30 seconds, 1 minute) after being switched from the lock screen to the AoD screen. For example, while displaying the AoD screen after a designated time (e.g., 10 seconds, 30 seconds, 1 minute), the electronic device 101 may change an expression of a unit of seconds (e.g., ss) among a time expression of the hh:mm:ss format to "--", and may update in a unit of 1 minute (or, a reference update cycle). For example, while displaying the AoD screen after a designated time (e.g., 10 seconds, 30 seconds, 1 minute), the electronic device 101 may update a distance expression of a meter unit of a distance format in a unit of 1 minute (or, a reference update cycle).

For example, in a case that stopwatch information including a time (e.g., mm:ss:ms format) is displayed in the widget area 220 within the lock screen, the electronic device 101 may update a time (e.g., mm:ss:ms format) in real time. For example, while displaying the stopwatch information in the widget area 220 within the lock screen, the electronic device 101 may update the time expression of the mm:ss:ms format in a unit of milliseconds.

For example, in a case that the stopwatch information is displayed in the widget area 220 within the AoD screen, the electronic device 101 may update a time (e.g., mm:ss:ms format) in a relatively short cycle for a designated time (e.g., 10 seconds, 30 seconds, 1 minute) after being switched from the lock screen to the AoD screen. For example, while displaying the stopwatch information in the widget area 220 within the AoD screen, the electronic device 101 may delete a unit of milliseconds (e.g., ms) among a time expression of mm:ss:ms format (or, change to an alternative expression (e.g., "--")). For example, while displaying the stopwatch information in the widget area 220 within the AoD screen, the electronic device 101 may update the time expression of the mm:ss:ms format in a unit of seconds (e.g., ss).

For example, in a case that the stopwatch information is displayed in the widget area 220 within the AoD screen, the electronic device 101 may update a time (e.g., mm:ss:ms format) in a relatively long cycle after a designated time (e.g., 10 seconds, 30 seconds, 1 minute) after being switched from the lock screen to the AoD screen. For example, the electronic device 101 may simplify and display a time (e.g., mm:ss:ms format) after a designated time (e.g., 10 seconds, 30 seconds, 1 minute) after being switched from the lock screen to the AoD screen. For example, while displaying the AoD screen after a designated time (e.g., 10 seconds, 30 seconds, 1 minute), the electronic device 101 may delete a unit of milliseconds (e.g., ms) among a time expression of mm:ss:ms format (or, change to an alternative expression (e.g., "--")). For example, while displaying the AoD screen after a designated time (e.g., 10 seconds, 30 seconds, 1 minute), the electronic device 101 may change a time expression of a unit of seconds (e.g., ss) of mm:ss:ms format to "--", and may update in a unit of 1 minute (or, a reference update cycle).

For example, in a case that timer information including a time (e.g., ss:ms format) is displayed in the widget area 220 within the lock screen, the electronic device 101 may update a time (e.g., ss:ms format) in real time. For example, while displaying the timer information in the widget area 220 within the lock screen, the electronic device 101 may update a time expression of the ss:ms format in a unit of seconds.

For example, in a case that the timer information is displayed in the widget area 220 within the AoD screen, the electronic device 101 may update a time (e.g., ss:ms format) in a relatively short cycle for a designated time (e.g., 10 seconds, 30 seconds, 1 minute) after being switched from the lock screen to the AoD screen. For example, while displaying the timer information in the widget area 220 within the AoD screen, the electronic device 101 may update a time expression of the ss:ms format in a unit of seconds (e.g., ss).

For example, in a case that the timer information is displayed in the widget area 220 within the AoD screen, the electronic device 101 may update a time (e.g., ss:ms format) in a relatively long cycle after a designated time (e.g., 10 seconds, 30 seconds, 1 minute) after being switched from the lock screen to the AoD screen. For example, the electronic device 101 may simplify and display a time (e.g., ss:ms format) after a designated time (e.g., 10 seconds, 30 seconds, 1 minute) after being switched from the lock screen to the AoD screen. For example, while displaying the AoD screen after a designated time (e.g., 10 seconds, 30 seconds, 1 minute), the electronic device 101 may change a time expression of a unit of seconds (e.g., ss) of the ss:ms format to "--", and may update in a unit of 1 minute (or, a reference update cycle).

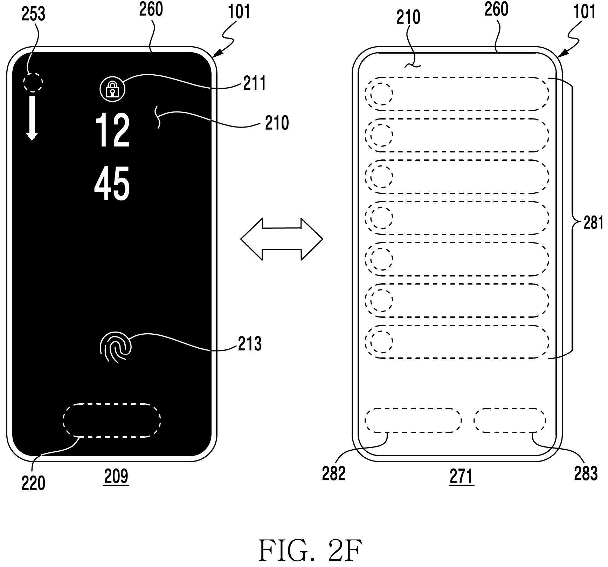

For example, referring to states 209 and 271 of FIG. 2F, the electronic device 101 may display a screen including a list 281 of one or more notifications and visual objects 282 and 283 for setting related to the notifications, based on an input 253 (e.g., a swipe input at a designated location) while displaying a screen according to the AoD. A widget area 220, a first icon area 230, and a second icon area 240 may not be displayed on a screen including the list 281 and the visual objects 282 and 283. The screen including the list 281 and the visual objects 282 and 283 may be distinguished from a screen displayed while the electronic device 101 is driven in a low power state. For example, the screen including the list 281 and the visual objects 282 and 283 may be a screen displayed while the electronic device 101 is driven in a normal power state. For example, the screen including the list 281 and the visual objects 282 and 283 may be a screen other than the screen according to the AoD displayed while the electronic device 101 is in a lock state.

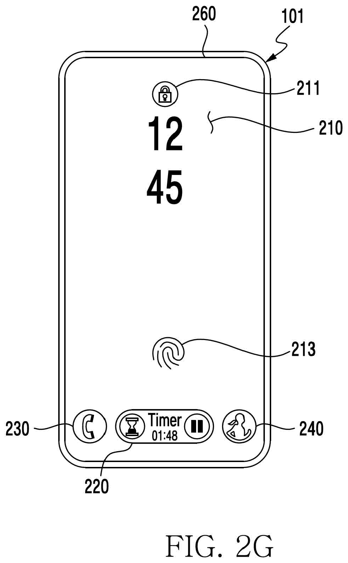

In an embodiment, visual objects (or images) (or a user interface (UI)) (or shortcuts) indicating a related application may be displayed in icon areas 230 and 240. In an embodiment, the icon areas 230 and 240 may display information (or notifications) generated by the related application. In an embodiment, the electronic device 101 may execute a function of an application related to the icon areas 230 and 240, based on an input to the icon areas 230 and 240. For example, referring to FIG. 2G, in a case that the first icon area 230 is related to a phone application, the electronic device 101 may display a screen of the phone application based on an input (e.g., a touch input) to the first icon area 230. For example, referring to FIG. 2G, in a case that the second icon area 240 is related to an exercise application, the electronic device 101 may display a screen of the exercise application, based on an input (e.g., a touch input) to the second icon area 240. However, it is not limited thereto.

In an embodiment, the electronic device 101 may change information (or an application generating the information) displayed by the widget area 220, based on an input to the widget area 220.

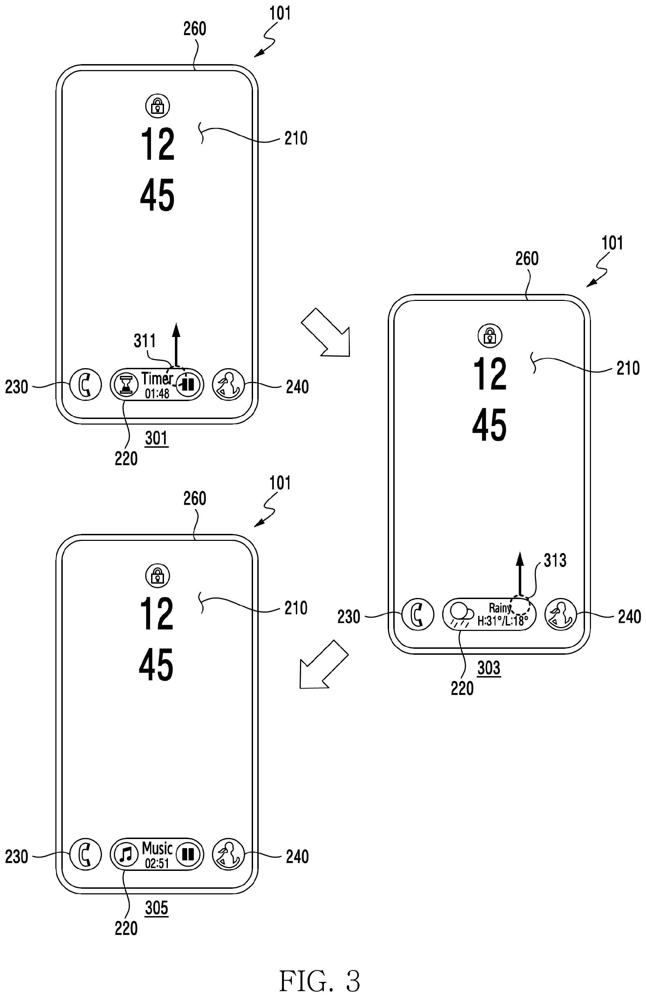

For example, the electronic device 101 may change information (or the application generating the information) displayed by the widget area 220 to next information (or a next application), based on a swipe input (or a drag input) (or a flick input) (or a pan input) (or a slide input) with respect to the widget area 220. For example, the electronic device 101 may change the information (or the application generating the information) displayed by the widget area 220 to the next information (or the next application), based on an upward input in the widget area 220. For example, the electronic device 101 may change the information (or the application generating the information) displayed by the widget area 220 to previous information (or a previous application), based on a downward input in the widget area 220. Hereinafter, a change of the information displayed by the widget area 220 based on the swipe input (or the drag input) (or the flick input) (or the pan input) (or the slide input) may be described with reference to FIG. 3.

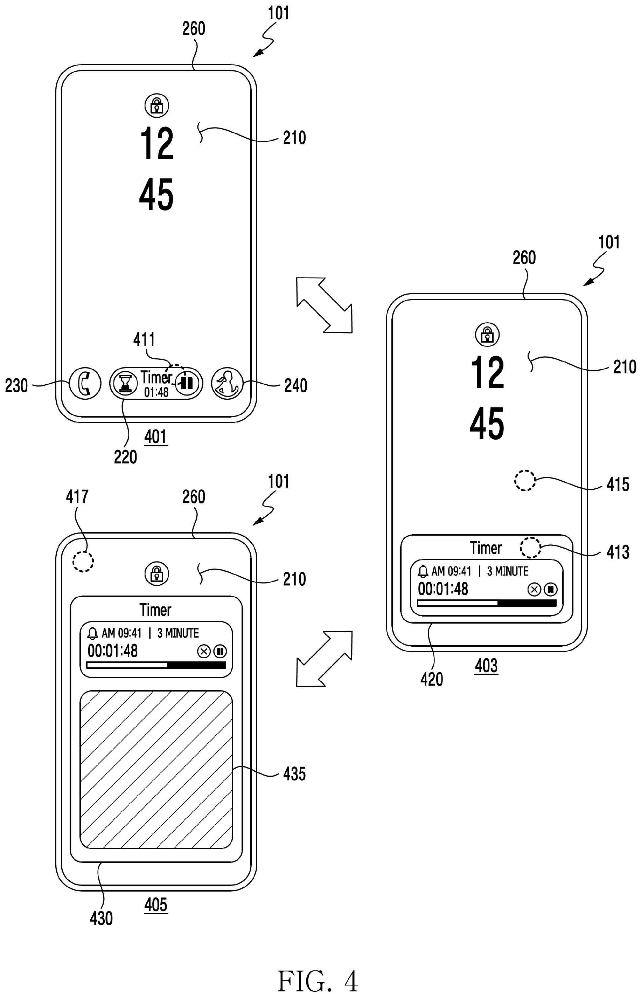

For example, the electronic device 101 may change an area of the widget area 220, based on a tap input (or a double tap input) (or a press input) (or a long press input) with respect to the widget area 220. For example, the electronic device 101 may change an area of the widget area 220, based on a tap input (or a double tap input) (or a press input) (or a long press input) with respect to an area other than the widget area 220. Hereinafter, a change of an area of the widget area 220 based on an input may be described with reference to FIG. 4.

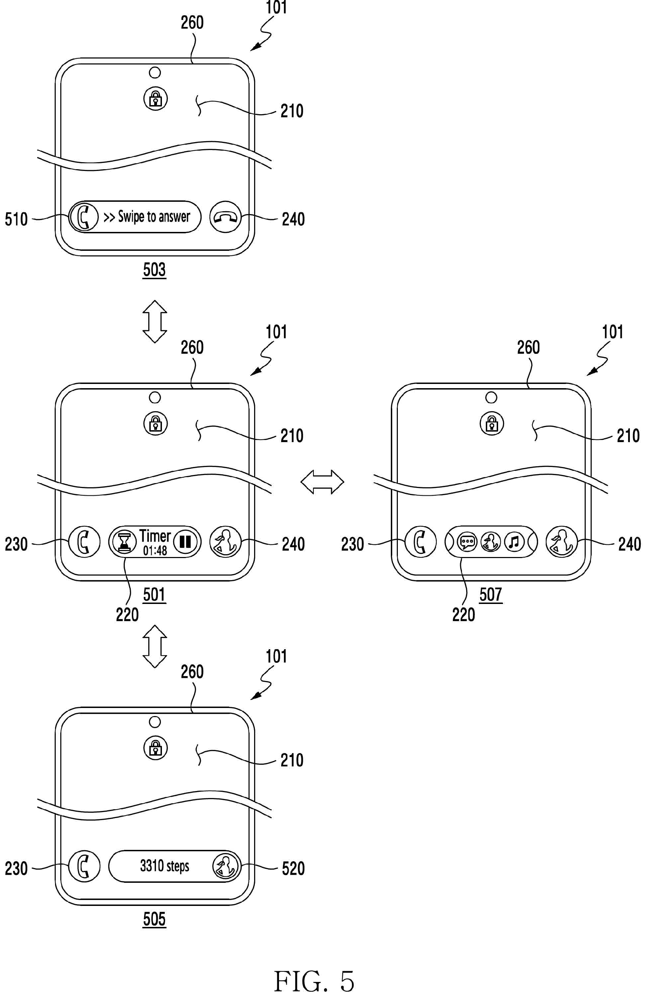

For example, the electronic device 101 may change display of the widget area 220 based on an event. In an embodiment, the event may include an event by an application related to the widget area 220, the first icon area 230, or the second icon area 240. In an embodiment, the event may include an event related to a state (or setting) of the electronic device 101. Hereinafter, a change of the display of the widget area 220 based on the event may be described with reference to FIG. 5.

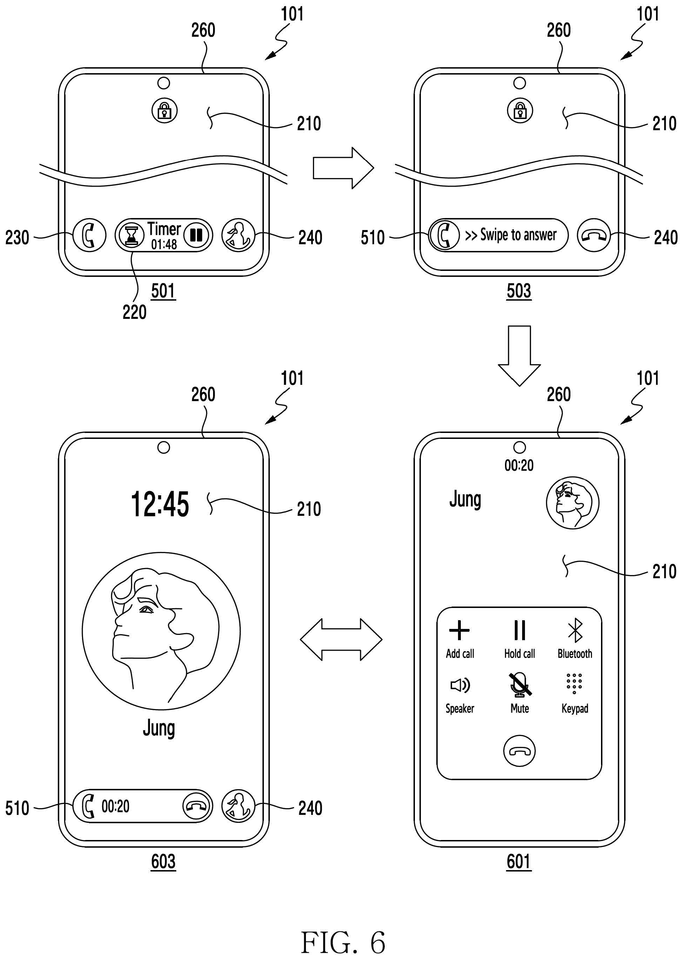

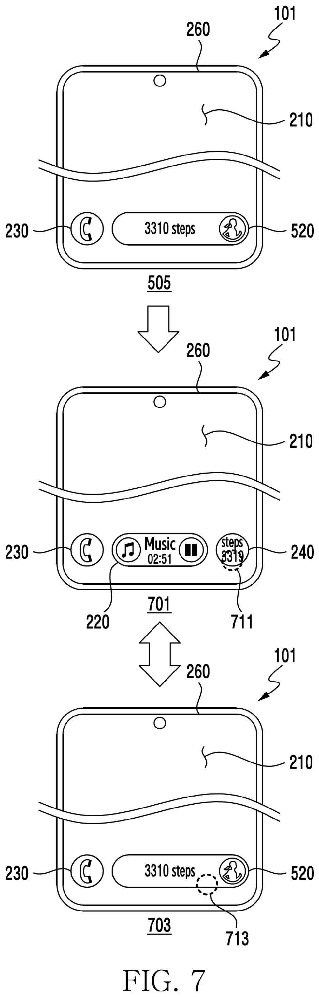

For example, the electronic device 101 may change the display of the widget area 220 based on an interaction with a user (or an operation of the user). For example, the interaction with the user (or the operation of the user) may include release of a lock state, execution of an application, and/or entry into the lock state. Hereinafter, the change of the display of the widget area 220 based on the interaction may be described with reference to FIG. 6 and FIG. 7.

In an embodiment, the electronic device 101 may link the widget area 220 and a wallpaper displayed in the background area 210. For example, the link between the widget area 220 and the background area 210 may include that the background area 210 is changed according to a change of a widget displayed in the widget area 220. For example, the link between the widget area 220 and the background area 210 may include that a widget displayed in the widget area 220 is changed according to a change of the background area 210. In an embodiment, the change of the widget may include a change of an application related to the widget area 220, a change of information indicated (or displayed) by the widget, and/or a change of a size (or a display area) of the widget.

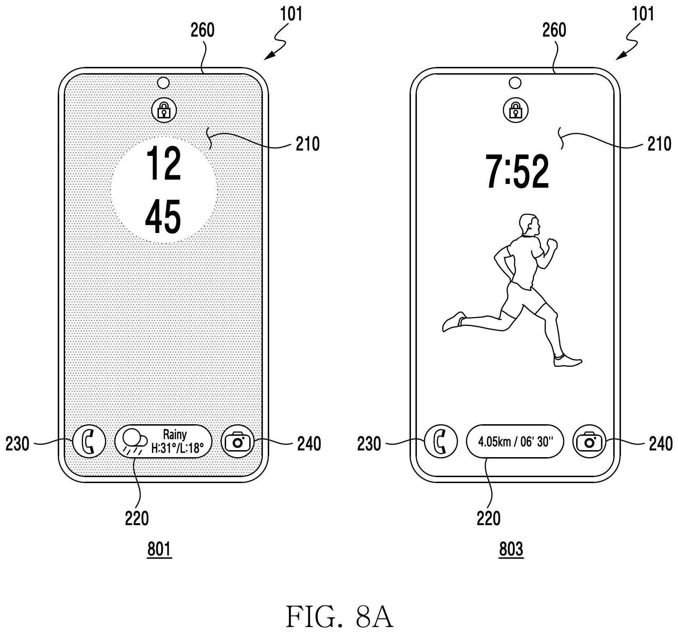

For example, the electronic device 101 may determine information (or an application generating the information) to be displayed by the widget area 220 in a lock state, based on a wallpaper displayed in the background area 210. Hereinafter, an operation of determining a widget to be displayed in the widget area 220 in the lock state based on the wallpaper displayed in the background area 210 may be described with reference to FIG. 8A.

For example, the electronic device 101 may determine a wallpaper to be displayed in the background area 210 and a widget to be displayed in the widget area 220 (or information to be displayed by the widget (or an application generating the information)), based on a mode (or a routine) of the electronic device 101. In an embodiment, the mode (or the routine) of the electronic device 101 may be a state in which a function related to do-not-disturb, app use restriction, power consumption (e.g., a power saving mode), and/or a sound mode (or volume) is set according to a current activity, a location, or a situation. For example, the mode (or the routine) may include modes for sleep, a movie theater, driving, exercise, relaxation, or work. However, it is not limited thereto.

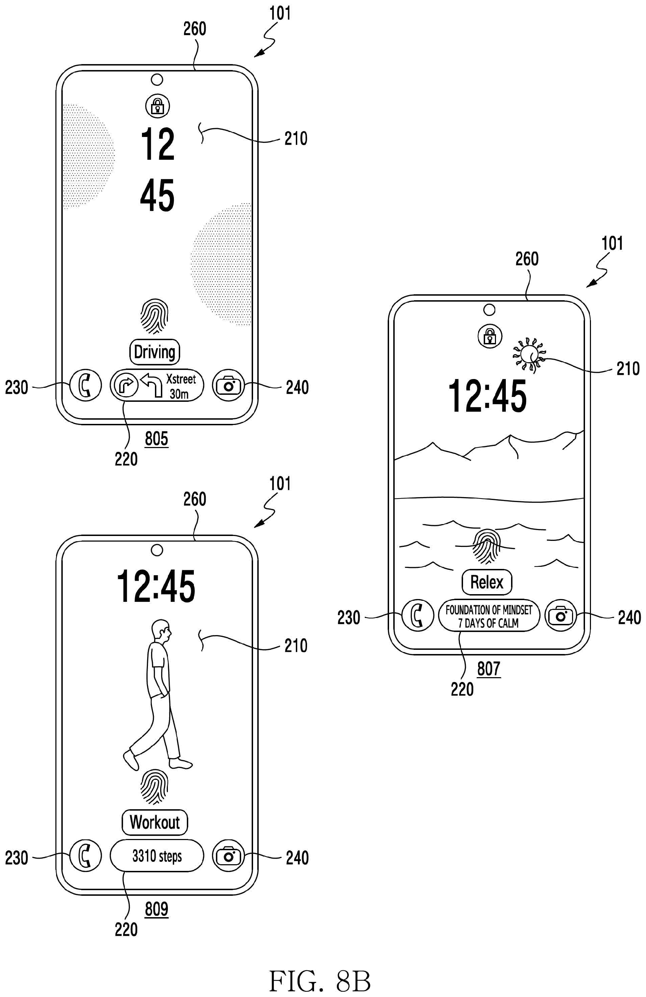

Hereinafter, an operation of determining the wallpaper displayed in the background area 210 and the widget to be displayed in the lock state based on the mode of the electronic device 101 may be described with reference to FIG. 8B.

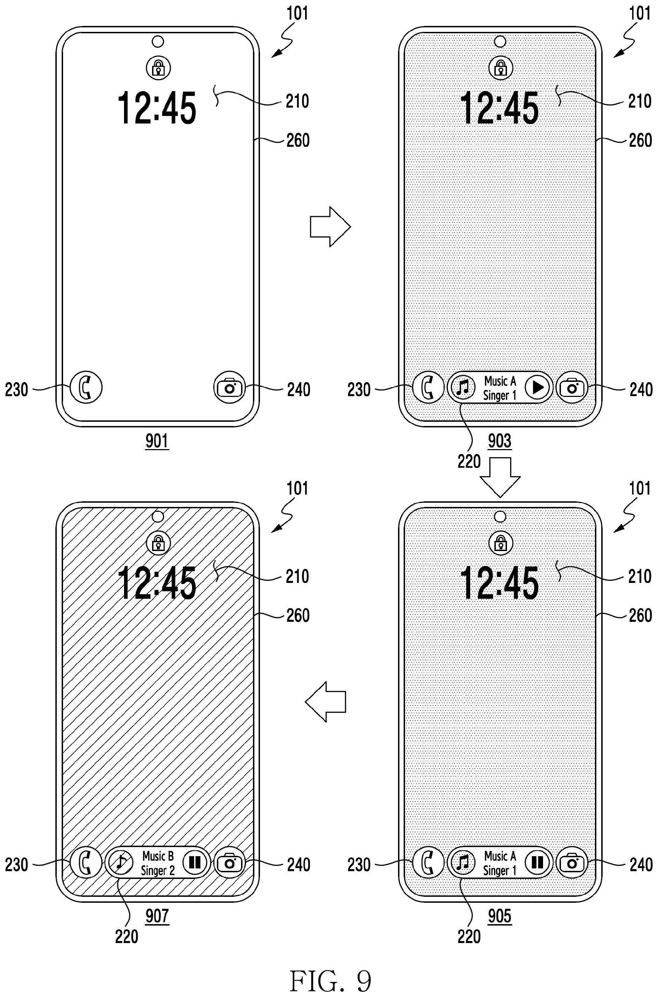

For example, the electronic device 101 may determine (or generate) a wallpaper displayed in the background area 210, based on the information displayed by the widget (or the application generating the information). Hereinafter, an operation of determining the wallpaper displayed in the background area 210 based on the information displayed by the widget (or the application generating the information) may be described with reference to FIG. 9.

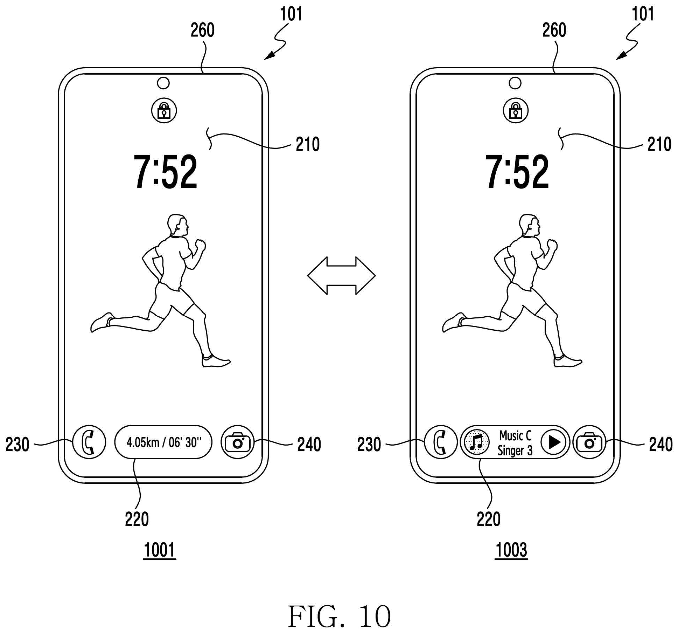

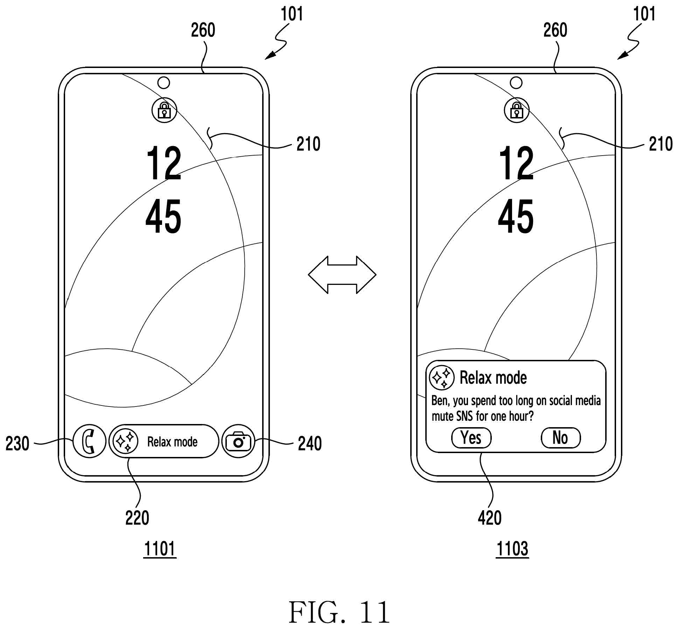

For example, the electronic device 101 may determine a wallpaper to be displayed in the background area 210 and information to be displayed by a widget (or an application generating the information), based on a task (or a state) (or a usage pattern) of the electronic device 101. Hereinafter, an operation of determining the wallpaper displayed in the background area 210 and the widget to be displayed in the lock state based on the task (or the state) of the electronic device 101 may be described with reference to FIG. 10 and FIG. 11.

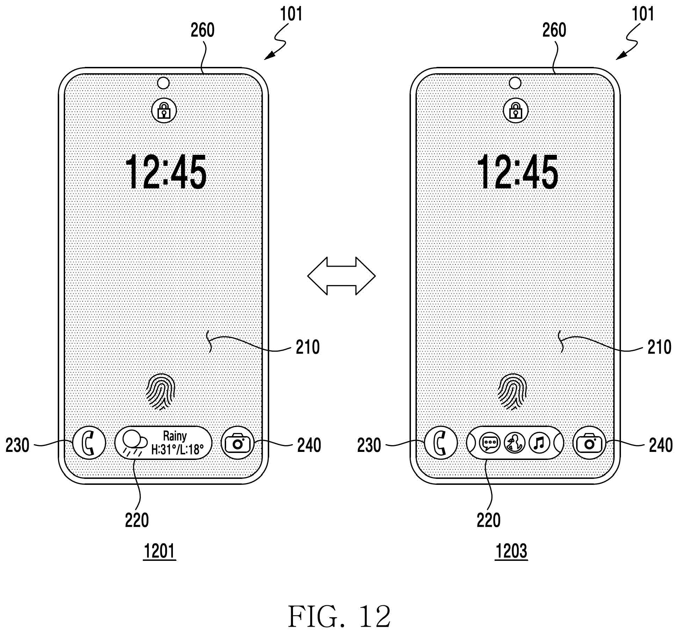

For example, the electronic device 101 may determine a wallpaper to be displayed in the background area 210 and information to be displayed by a widget (or an application generating the information), based on a usage pattern of the electronic device 101. Hereinafter, an operation of determining the wallpaper displayed in the background area 210 and the widget to be displayed in the lock state based on the usage pattern of the electronic device 101 may be described with reference to FIG. 12.

As described above, the electronic device 101 may provide a notification (or information) to a user in the lock state. In addition, the electronic device 101 may display notification (or information) in a widget at a location convenient for access while the user holds the electronic device 101, such that control of the widget by the user may become easy. In addition, the electronic device 101 displays notification (or information) in a widget located in an area excluding a center area of the display 260, such that the center area of the display 260 may not be covered.

FIG. 3 illustrates an example of a change of a widget included in a lock screen of an electronic device according to an embodiment.

FIG. 3 may be described with reference to FIG. 1 and FIGS. 2A to 2G.

Referring to FIG. 3, in a state 301, the electronic device 101 may display a lock screen in a lock state. For example, the electronic device 101 may display a lock screen including a background area 210 in which a wallpaper (or a background image) is displayed, icon areas 230 and 240 and a widget area 220. In an embodiment, in the first icon area 230, a visual object (or an image) (or a user interface (UI)) (or a shortcut) related to a phone application may be displayed. In an embodiment, in the second icon area 240, a visual object (or an image) (or a UI) (or a shortcut) related to an exercise application may be displayed. In an embodiment, the widget area 220 may display a widget including information related to a timer. For example, a widget displayed in the widget area 220 in the state 301 may be an information widget displaying time information currently being measured.

In the state 301, the electronic device 101 may obtain an input 311 associated with the widget area 220. For example, the electronic device 101 may obtain a swipe input (or a drag input) (or a flick input) (or a pen input) (or a slide input) to the widget area 220. For example, the electronic device 101 may obtain an upward input 311 in the widget area 220.

In an embodiment, the electronic device 101 may change a widget (or an application generating information displayed by the widget) displayed in the widget area 220, based on the input 311 associated with the widget area 220. For example, the electronic device 101 may change the widget (or the application generating the information displayed by the widget) displayed in the widget area 220 according to a display order of applications capable of displaying a widget in the widget area 220. For example, based on an application in a next order of a timer, the electronic device 101 may determine an application for displaying a widget in the widget area 220. Referring to FIG. 3, in the state 303, the electronic device 101 may determine a weather application as an application for displaying a widget (or information) in the widget area 220.

In the state 303, the electronic device 101 may obtain an input 313 associated with the widget area 220. For example, the electronic device 101 may obtain a swipe input (or a drag input) (or a flick input) (or a pen input) (or a slide input) to the widget area 220. For example, the electronic device 101 may obtain an upward input 313 in the widget area 220.

In an embodiment, the electronic device 101 may change an application for displaying information in the widget area 220, based on the input 313 associated with the widget area 220. For example, the electronic device 101 may identify an application in a next order of a weather application according to a display order of applications capable of displaying information in the widget area 220. Referring to FIG. 3, in the state 305, the electronic device 101 may determine a music application as an application for displaying information (or displaying a widget) in the widget area 220.

An operation of changing information (or an application generating the information) displayed in the widget area 220 to next information (or a next application), based on an upward input 311 or 313 in the widget area 220 is illustrated through FIG. 3. The electronic device 101 may change information (or an application generating the information) displayed in the widget area 220 to previous information (or next application), based on a downward input in the widget area 220. For example, in the state 305, based on a downward input (e.g., a swipe input, a drag input, a flick input, a pen input, or a slide input) in the widget area 220, the electronic device 101 may display a widget of the weather application, which is a previous order of the music application, in the widget area 220. For example, in the state 303, based on the downward input (e.g., a swipe input, a drag input, a flick input, a pen input, or a slide input) in the widget area 220, the electronic device 101 may display a widget of a timer, which is a previous order of the weather application, in the widget area 220.

As described above, the electronic device 101 may provide notifications (or information) of ongoing activities (or applications being executed) to a user in a lock state. In addition, as the electronic device 101 may sequentially change the notifications (or the information) of the ongoing activities (or the applications being executed) according to an input of the user, the user may easily check information of an application currently being executed.

FIG. 4 illustrates an example of a change of a widget included in a lock screen of an electronic device according to an embodiment.

FIG. 4 may be described with reference to FIG. 1 and FIGS. 2A to 2G.

Referring to FIG. 4, in a state 401, the electronic device 101 may display a lock screen in a lock state. For example, the electronic device 101 may display a lock screen including a background area 210 in which a wallpaper (or a background image) is displayed, icon areas 230 and 240, and a widget area 220. In an embodiment, a visual object (or an image) (or a UI) (or a shortcut) associated with a phone application may be displayed in the first icon area 230. In an embodiment, a visual object (or an image) (or a UI) (or a shortcut) associated with an exercise application may be displayed in the second icon area 240. In an embodiment, the widget area 220 may display a widget associated with a timer.

In the state 401, the electronic device 101 may obtain an input 411 to the widget area 220. For example, the electronic device 101 may obtain a tap input (or a double tap input) (or a press input) (or a long press input) to the widget area 220.

In an embodiment, the electronic device 101 may change an area (or a display area) (or a size) of the widget area 220, based on the input 411 to the widget area 220. For example, the electronic device 101 may expand the area (or the display area) (or the size) of the widget area 220.

For example, the electronic device 101 may expand a location of an upper end of the widget area 220 in a height direction. For example, the electronic device 101 may expand a location of a lateral side of the widget area 220 in a width direction. For example, the electronic device 101 may expand the area (or the display area) (or the size) of the widget area 220 in a direction in which the first icon area 230 is located. For example, the electronic device 101 may expand the area (or the display area) (or the size) of the widget area 220 to cover an area in which the first icon area 230 is located. For example, the electronic device 101 may expand the area (or the display area) (or the size) of the widget area 220 in a direction in which the second icon area 240 is located. For example, the electronic device 101 may expand the area (or the display area) (or the size) of the widget area 220 to cover an area in which the second icon area 240 is located. In an embodiment, a location of a lower end of the widget area 220 may not be changed. However, it is not limited thereto.

Referring to FIG. 4, in a state 403, the electronic device 101 may display a widget in a widget area 420 (or the widget area 223 of FIG. 2B) in which the upper end and lateral sides of the widget area 220 are expanded.

In the state 403, the electronic device 101 may obtain an input 413 to the expanded widget area 420. For example, the electronic device 101 may obtain a tap input (or a double tap input) (or a press input) (or a long press input) to the expanded widget area 420.

In an embodiment, the electronic device 101 may change the widget area 420 in the expanded state (or the display area) (or the size), based on the input 413 to the widget area 420 in the expanded state. For example, the electronic device 101 may expand the widget area 420 in the expanded state (or the display area) (or the size). For example, the electronic device 101 may expand a location of the upper end of the widget area 420 in the expanded state in the height direction. For example, the electronic device 101 may set a widget area 430 in the expanded state in an entire area allocated to the lock screen (or the widget area 224 of FIG. 2B) in the display 260. However, it is not limited thereto. The electronic device 101 may set the widget area 430 in the expanded state in a remaining area excluding a partial area for the background area 210 among the area allocated to the lock screen in the display 260. Referring to FIG. 4, in a state 405, the electronic device 101 may set the widget area 430 in a state where the upper end and the lateral sides of the widget area 220 are expanded, on the display 260. In the state 405, an area for displaying additional information 435 may be further displayed in the widget area 430 in the expanded state. A size expanded from the widget area 420 in the expanded state to the widget area 430 in the expanded state may be determined based on an amount of the additional information 435. However, it is not limited thereto.

In the state 403, the electronic device 101 may obtain an input 415 to an area other than the widget area 420. For example, the electronic device 101 may obtain a tap input (or a double tap input) (or a press input) (or a long press input) to the area other than the widget area 420.

In an embodiment, the electronic device 101 may change the area (or the display area) (or the size) of the widget area 420 based on the input 415 to the area other than the widget area 420. For example, the electronic device 101 may reduce the area (or the display area) (or the size) of the widget area 420. For example, the electronic device 101 may reduce a location of the upper end of the widget area 420 in the height direction. For example, the electronic device 101 may reduce the location of the lateral side of the widget area 420 in the width direction. For example, the electronic device 101 may reduce the area (or the display area) (or the size) of the widget area 420 by a size allocated to the widget area 220 in the state 401.

In the state 405, the electronic device 101 may obtain an input 417 to an area other than the widget area 430. For example, the electronic device 101 may obtain a tap input (or a double tap input) (or a press input) (or a long press input) to the area other than the widget area 430.

In an embodiment, the electronic device 101 may change the widget area 430 (or the display area) (or the size) based on the input 417 to the area other than the widget area 430. For example, the electronic device 101 may reduce the widget area 430 (or the display area) (or the size). For example, the electronic device 101 may reduce a location of the upper end of the widget area 430 in the height direction. For example, the electronic device 101 may reduce the widget area 430 (or the display area) (or the size) by a size allocated to the widget area 420 in the state 403. However, it is not limited thereto. For example, the electronic device 101 may reduce the widget area 430 (or the display area) (or the size) by a size allocated to the widget area 220 in the state 401.

As described above, the electronic device 101 may provide a notification (or information) to a user in the expanded widget area 420 or 430 in the lock state. Accordingly, the user may check information associated with an application of the widget area 220 in more detail.

FIG. 5 illustrates an example of a change of a widget included in a lock screen of an electronic device according to an embodiment.

FIG. 5 may be described with reference to FIG. 1 and FIGS. 2A to 2G.

Referring to FIG. 5, in a state 501, the electronic device 101 may display a lock screen in a lock state. For example, the electronic device 101 may display a lock screen including a background area 210 in which a wallpaper (or a background image) is displayed, icon areas 230 and 240, and a widget area 220. In an embodiment, a visual object (or an image) (or a UI) (or a shortcut) associated with a phone application may be displayed in the first icon area 230. In an embodiment, a visual object (or an image) (or a UI) (or a shortcut) associated with an exercise application may be displayed in the second icon area 240. In an embodiment, the widget area 220 may display a widget associated with a timer.

In the state 501, the electronic device 101 may identify an event. In an embodiment, the event may include an event by an application associated with the widget area 220, the first icon area 230, or the second icon area 240. For example, the event may be identification of a display request of a notification of the application associated with the widget area 220, the first icon area 230, or the second icon area 240. In an embodiment, the event may include an event associated with a state (or setting) of the electronic device 101. For example, the event may be identification of a change of the state (or the setting) of the electronic device 101.

In an embodiment, in the state 501, the electronic device 101 may identify an event generated from an application associated with the first icon area 230. For example, the electronic device 101 may identify an event indicating that a call request is received from the phone application.

In an embodiment, the electronic device 101 may change the widget area 220 (or the display area) (or the size), based on an event generated from the application associated with the first icon area 230. For example, the electronic device 101 may expand the widget area 220 (or the display area) (or the size). For example, the electronic device 101 may expand a location of a lateral side of the widget area 220 in a width direction. For example, the electronic device 101 may expand the widget area 220 (or the display area) (or the size) in a direction in which the first icon area 230 is located. For example, the electronic device 101 may expand the widget area 220 (or the display area) (or the size) to cover the area in which the first icon area 230 is located.

Referring to FIG. 5, in a state 503, the electronic device 101 may display a widget 510 in a state where a first lateral side (or a left lateral side) of the widget area 220 is expanded in the direction of the first icon area 230 (or the widget area 221 of FIG. 2A), on the display 260. In an embodiment, the electronic device 101 may change the display of the second icon area 240 to display a visual object associated with the application of the first icon area 230. For example, in the state 503, the electronic device 101 may change the display of the second icon area 240 such that the second icon area 240 displays a visual object for rejecting the call request. However, it is not limited thereto. The electronic device 101 may maintain the display of the second icon area 240.

In an embodiment, in the state 501, the electronic device 101 may identify an event generated from an application associated with the second icon area 240. For example, the electronic device 101 may identify an event indicating that an exercise goal is achieved from the exercise application.

In an embodiment, the electronic device 101 may change the widget area 220 (or the display area) (or the size) based on an event generated from an application associated with the second icon area 240. For example, the electronic device 101 may expand the widget area 220 (or the display area) (or the size). For example, the electronic device 101 may expand a location of a lateral side of the widget area 220 in a width direction. For example, the electronic device 101 may expand the widget area 220 (or the display area) (or the size) in a direction in which the second icon area 240 is located. For example, the electronic device 101 may expand the widget area 220 (or the display area) (or the size) to cover an area in which the second icon area 240 is located.

Referring to FIG. 5, in a state 505, the electronic device 101 may display a widget 520 in a state where a second lateral side (or a right lateral side) of the widget area 220 is expanded in a direction of the second icon area 240 (or the widget area 222 of FIG. 2A), on the display 260. In an embodiment, the electronic device 101 may maintain the display of the first icon area 230. However, it is not limited thereto. For example, the electronic device 101 may change the display of the first icon area 230 to display a visual object associated with the application of the second icon area 240.

In an embodiment, in the state 501, the electronic device 101 may identify an event generated from an application not associated with the first icon area 230 and the second icon area 240 (or an event associated with a state (or setting) of the electronic device 101).

In an embodiment, the electronic device 101 may not change the widget area 220 (or the display area) (or the size), based on an event generated from an application not associated with the first icon area 230 and the second icon area 240.

In an embodiment, in a state 507, the electronic device 101 may change an application generating information displayed by the widget area 220, based on the event generated from the application not associated with the first icon area 230 and the second icon area 240. For example, the electronic device 101 may display information of the application generating the event in the widget area 220.

As described above, the electronic device 101 may provide a notification (or information) to a user in the expanded widget 510 or 520 in the lock state. Accordingly, the user may check information associated with the application of the widget area 220 in more detail. In addition, the user may more precisely control the application through the expanded widget 510 or 520.

FIG. 6 illustrates an example of a change of a lock screen of an electronic device according to an embodiment.

FIG. 6 may be described with reference to FIG. 1, FIGS. 2A to 2G, and FIG. 5. States 501 and 503 of FIG. 6 may respectively correspond to the states 501 and 503 of FIG. 5.

Referring to FIG. 6, in a state 501, the electronic device 101 may display a lock screen in a lock state. In the state 501, the electronic device 101 may identify an event indicating that a call request is received from a phone application. In a state 503, the electronic device 101 may display a widget 510 in a state where a first lateral side (or a left lateral side) of the widget area 220 is expanded in a direction of the first icon area 230, on the display 260. In the state 503, the electronic device 101 may change a display of the second icon area 240 such that the second icon area 240 displays a visual object for rejecting the call request.

In an embodiment, in the state 503, the electronic device 101 may obtain an input for approving the call request. For example, the electronic device 101 may obtain an input (e.g., a swipe input, a drag input, a flick input, a pen input, or a slide input) to the widget 510 for approving the call request. For example, the input for approving the call request may be an input moving from a left end of the widget 510 to the right (e.g., a swipe input, a drag input, a flick input, a pen input, or a slide input).

In an embodiment, in a state 601, the electronic device 101 may display a screen indicating a call state (or that a call is in progress) in the lock state based on the input for approving the call request.

In an embodiment, in a state 601, the electronic device 101 may obtain an input for reducing a screen indicating a call state (or that a call is in progress) (e.g., a touch input to a home button). In an embodiment, the electronic device 101 may display a lock screen including the background area 210, the second icon area 240, and the widget 510 based on an input for reducing a screen (e.g., a touch input to a home button). Referring to FIG. 6, in a state 603, a visual object indicating a previously associated application (e.g., an exercise application) may be displayed in the second icon area 240. In the state 603, a visual object indicating a call state (or that a call is in progress) may be displayed in the widget 510. In the state 603, a visual object indicating information (or profile information) associated with a counterpart on the call may be displayed in the background area 210. In an embodiment, even in the state 503, a visual object indicating information (or profile information) associated with a counterpart who has transmitted the call request may be displayed in the background area 210.

As described above, the electronic device 101 may provide a notification (or information) to a user in the expanded widget 510 in the lock state. Accordingly, the user may check information associated with the application of the widget area 220 in more detail. In addition, the user may more precisely control the application through the expanded widget 510.

FIG. 7 illustrates an example of a change of a widget included in a lock screen of an electronic device according to an embodiment.

FIG. 7 may be described with reference to FIG. 1, FIGS. 2A to 2G, and FIG. 5. A state 505 of FIG. 7 may correspond to the state 505 of FIG. 5.

Referring to FIG. 7, in the state 505, the electronic device 101 may display the widget 520 in a state where a second lateral side (or a right lateral side) of the widget area 220 is expanded in a direction of the second icon area 240, on the display 260. In an embodiment, the electronic device 101 may maintain a display of the first icon area 230.

In an embodiment, in the state 505, the electronic device 101 may release the lock state. For example, the electronic device 101 may release the lock state of the electronic device 101, based on a user input requesting release of the lock state. For example, while the lock state is released (or during a normal use state), the electronic device 101 may execute at least one application based on the user input. For example, while the lock state is released (or during the normal use state), the electronic device 101 may execute a music application and play music based on the user input. For example, while at least one application is being executed, the electronic device 101 may be changed to the lock state. For example, the electronic device 101 may be changed to the lock state based on the user input requesting the lock state. For example, the electronic device 101 may be changed to the lock state based on that the user input is not input for a specified time or more.

In an embodiment, in a state 701, in a lock state, the electronic device 101 may display a lock screen including the background area 210, the widget area 220, and icon areas 230 and 240. In an embodiment, the electronic device 101 may display the widget area 220 indicating information of a music application being executed (e.g., music being played). In an embodiment, the electronic device 101 may display the second icon area 240 indicating information of an exercise application being executed (e.g., current step count). For example, the second icon area 240 may indicate information generated by the exercise application (e.g., the current step count) instead of a visual object indicating the exercise application associated with the second icon area 240.

In the state 701, the electronic device 101 may obtain an input 711 to the second icon area 240. For example, the electronic device 101 may obtain a tap input (or a double tap input) (or a press input) (or a long press input) to the second icon area 240.

In an embodiment, the electronic device 101 may change the widget area 220 (or the display area) (or the size), based on the input 711 to the second icon area 240. For example, the electronic device 101 may expand the second icon area 240 (or the display area) (or the size). For example, in a state 703, the electronic device 101 may display a widget 520 in a state where a second lateral side (or a right lateral side) of the widget area 220 is expanded in a direction of the second icon area 240, on the display 260.

In the state 703, the electronic device 101 may obtain an input 713 (e.g., a swipe input, a drag input, a flick input, a pen input, or a slide input) to the widget 520. For example, the electronic device 101 may obtain an upward input 713 (e.g., a swipe input, a drag input, a flick input, a pen input, or a slide input) in the widget 520.

In an embodiment, based on the input 713 to the widget 520, the electronic device 101 may display the lock screen including the background area 210, the widget area 220, and the icon areas 230 and 240. For example, the electronic device 101 may display information of an application (e.g., a music application) previously displayed in the widget area 220.

As described above, in the electronic device 101, an application generating a notification (or information) displayed in a widget may be switched among applications being executed. Accordingly, a user may more easily select an application for which confirmation of information is required.

FIG. 8A illustrates an example of a lock screen of an electronic device according to an embodiment.

FIG. 8A may be described with reference to FIG. 1, and FIGS. 2A to 2G.

Referring to FIG. 8A, in a state 801, the electronic device 101 may display a lock screen in a lock state. For example, the electronic device 101 may display the lock screen including a background area 210 in which a wallpaper (or a background image) is displayed, icon areas 230 and 240, and a widget area 220.

In an embodiment, the widget area 220 may display information of an application associated with the wallpaper displayed in the background area 210. For example, in the state 801, the electronic device 101 may set the widget area 220 to indicate information of a weather application (e.g., weather information of a user's location (or a set location), a forecast, insight widget information, and a related notification), based on the wallpaper indicating weather of the location of the user.

In an embodiment, when entering the lock state from a state where the lock state is released (or a use state), the electronic device 101 may display the lock screen including the wallpaper indicating the weather of the location of the user and the widget area 220 displaying the information of the weather application associated with the wallpaper. In an embodiment, when the display 260 is changed from an off state to an on state in the lock state, the electronic device 101 may display the lock screen including the wallpaper indicating the weather of the location of the user and the widget area 220 displaying the information of the weather application associated with the wallpaper.

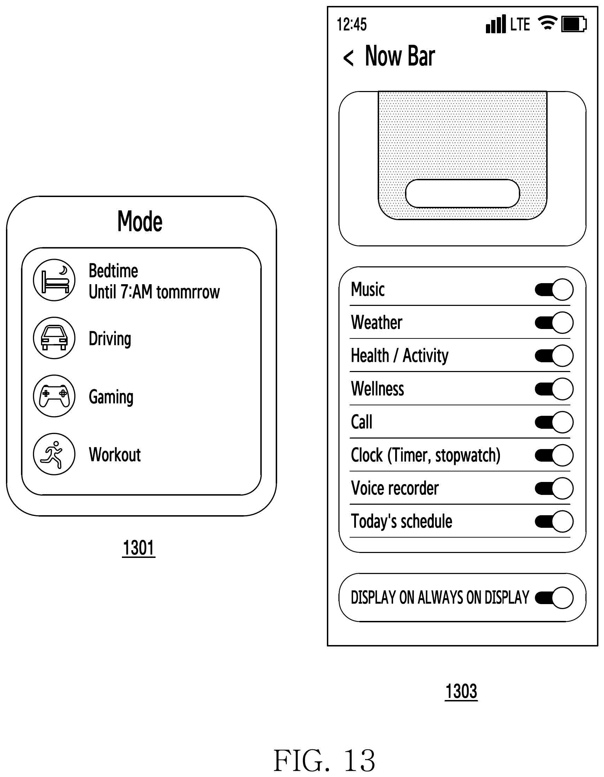

In an embodiment, the electronic device 101 may change the wallpaper. For example, the electronic device 101 may change the wallpaper based on a user input to a menu for changing the wallpaper (or a menu (e.g., the menu 1301 of FIG. 13) for setting a mode of the electronic device 101). For example, the wallpaper may be changed in a state where the lock state is released (or the use state). However, it is not limited thereto. In an embodiment, the electronic device 101 may change the wallpaper according to a state of the electronic device 101 (or a state of a user using the electronic device 101).

For example, the electronic device 101 may display information of an application associated with the wallpaper displayed in the background area 210 in the widget area 220 in the lock state, based on the wallpaper being changed. For example, in a state 803, the electronic device 101 may set the widget area 220 to represent information of an exercise application (e.g., a step count, a notification phrase according to goal achievement, a notification during exercise (e.g., the most useful information in exercise), or a notification provided by an exercise service), based on a wallpaper associated with health information.

In an embodiment, when entering the lock state from the state where the lock state is released (or the use state), the electronic device 101 may display a lock screen including the wallpaper indicating the health information and the widget area 220 displaying the information of the exercise application associated with the wallpaper. In an embodiment, when the display 260 is changed from the off state to the on state in the lock state, the electronic device 101 may display the lock screen including the wallpaper indicating the health information and the widget area 220 displaying the information of the exercise application associated with the wallpaper.

As described above, in the electronic device 101, an application generating a notification (or information) displayed in a widget may be switched according to the wallpaper of the background area 210. Accordingly, the electronic device 101 may provide, to the user, a lock screen having unity between the wallpaper and the widget area 220.

FIG. 8B illustrates an example of a lock screen of an electronic device according to an embodiment.

FIG. 8B may be described with reference to FIG. 1, and FIGS. 2A to 2G.

Referring to FIG. 8B, in a state 805, the electronic device 101 may display a lock screen in a lock state. For example, the electronic device 101 may display the lock screen including the background area 210 in which a wallpaper (or a background image) is displayed, icon areas 230 and 240, and a widget area 220.

In an embodiment, the widget area 220 may display information of an application associated with a mode (or a routine) of the electronic device 101. In an embodiment, the mode (or the routine) of the electronic device 101 may be a state in which a function associated with do not disturb, app use restriction, power consumption (e.g., a power saving mode), and/or a sound mode (or volume) is set according to a current activity, a location, or a situation. For example, the mode (or the routine) may include modes for sleep, a theater, driving, exercise, relaxation, or work. In an embodiment, the mode (or the routine) of the electronic device 101 may be set based on a user input to a menu (e.g., the menu 1301 of FIG. 13) for setting a mode.

For example, in the state 805, the electronic device 101 may change the wallpaper of the background area 210 and the widget area 220 to be associated with driving, based on that the mode for driving is set. For example, the electronic device 101 may display information of a map application (or a weather application) in the widget area 220, based on that the mode for driving is set. For example, the electronic device 101 may display a wallpaper indicating an image associated with driving (or weather) in the background area 210, based on that the mode for driving is set.

For example, in a state 807, the electronic device 101 may change the wallpaper of the background area 210 and the widget area 220 to be associated with relaxation, based on that the mode for relaxation is set. For example, the electronic device 101 may display information of a music application for playing music for meditation in the widget area 220, based on that the mode for relaxation is set. For example, the electronic device 101 may display a wallpaper indicating an image associated with relaxation in the background area 210, based on that the mode for relaxation is set. For example, the electronic device 101 may play music through the music application, based on that the mode for relaxation is set.

For example, in a state 809, the electronic device 101 may change the wallpaper of the background area 210 and the widget area 220 to be associated with exercise, based on that the mode for exercise is set. For example, the electronic device 101 may display information of an exercise application in the widget area 220, based on that the mode for exercise is set. For example, the electronic device 101 may display a wallpaper indicating an image associated with exercise in the background area 210, based on that the mode for exercise is set.

As described above, in the electronic device 101, an application generating a notification (or information) displayed in a widget and a wallpaper of the background area 210 may be switched according to the mode of the electronic device 101. Accordingly, the electronic device 101 may provide, to a user, a lock screen having unity between the wallpaper and the widget area 220.

FIG. 9 illustrates an example of a lock screen of an electronic device according to an embodiment.

FIG. 9 may be described with reference to FIG. 1, and FIGS. 2A to 2G.

Referring to FIG. 9, in a state 901, the electronic device 101 may display a lock screen in a lock state through the display 260. In the state 901, the lock screen may include a background area 210 and icon areas 230 and 240. In the state 901, the lock screen may not include a widget area 220. In an embodiment, based on that an application executed in a background (or a foreground) associated with the widget area 220 (or capable of displaying information in the widget area 220) does not exist, the lock screen may not include the widget area 220.

In an embodiment, in the state 901, the electronic device 101 may identify a state change of the electronic device 101. For example, the state change of the electronic device 101 may include a (wireless) connection with an external electronic device. For example, the external electronic device may be an earphone (or earbuds) (or a wireless earphone) (or a headset).

In an embodiment, based on being connected to the external electronic device, the electronic device 101 may change a display of the widget area 220 to indicate an application associated with the connected external electronic device. For example, referring to a state 903, in a case that the external electronic device is an earphone (or earbuds) (or a wireless earphone) (or a headset), the electronic device 101 may change the display of the widget area 220 to indicate a music application, based on being connected to the external electronic device. However, it is not limited thereto. In an embodiment, when the external electronic device is a wearable device (e.g., a smart watch), the electronic device 101 may change the display of the widget area 220 to indicate an exercise application, based on being connected to the external electronic device. In an embodiment, in a case that the external electronic device is a device for supplying power to the electronic device 101, the electronic device 101 may change the display of the widget area 220 to indicate information associated with a battery (e.g., a current charging amount) based on being connected to the external electronic device. For example, the information associated with the battery (e.g., the current charging amount) may be displayed such that a gauge of the widget area 220 is increased as the battery of the electronic device 101 is charged. In an embodiment, when the external electronic device is a vehicle, the electronic device 101 may change the display of the widget area 220 to indicate a map application (e.g., navigation), based on being connected to the external electronic device. In an embodiment, in a case that the external electronic device is an access point (AP) of a specified area (or in a case that the electronic device 101 is connected to a local area network (LAN) through the external electronic device), the electronic device 101 may change the display of the widget area 220 to indicate an application (e.g., SmartThings) for controlling another external electronic device, based on being connected to the external electronic device.

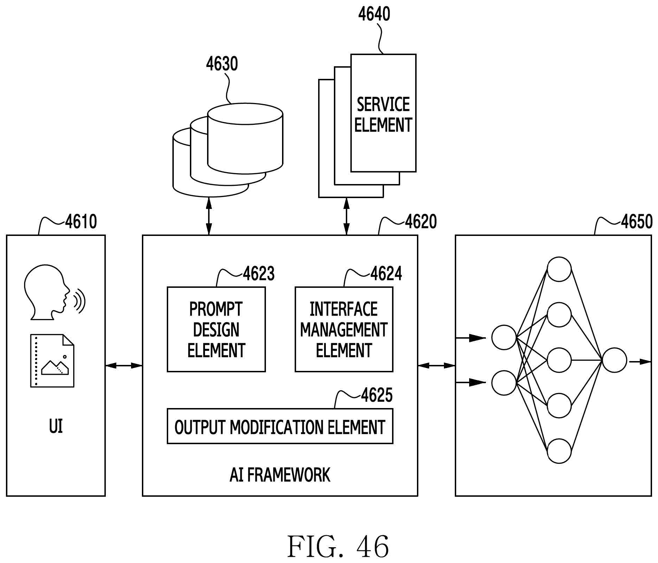

In the state 903, the electronic device 101 may change a display of the wallpaper, along with the change of the display of the widget area 220, to display an image associated with the music application in the background area 210. For example, the wallpaper may be generated to indicate information (e.g., song information in a standby state (or a pause state)) of the music application. For example, the wallpaper may be generated by an on-device generative artificial intelligence (AI) module of the electronic device 101. However, it is not limited thereto. For example, as the wallpaper, a wallpaper associated with the information (e.g., the song information in the standby state (or the pause state)) of the application may be selected among a plurality of wallpapers. For example, the wallpaper may be generated through the AI model 4650 of FIG. 46.

In the state 903, the music application may be in a state of not playing music. In the state 903, based on an input to the widget area 220 (e.g., an input requesting playback of music), the electronic device 101 may play the music. In an embodiment, in a state 905, based on the playback of the music, the electronic device 101 may change the display of the widget area 220 to represent that the music is played.

In an embodiment, in the state 905, as the music is played, the electronic device 101 may play a next music. In this case, in the state 905, the electronic device 101 may change the wallpaper of the background area 210 to indicate information of the next music, along with the change of the display of the widget area 220 such that the widget area 220 represents the next music being played.

As described above, in the electronic device 101, an application generating a notification (or information) displayed in a widget may be determined according to a type of the external electronic device connected to the electronic device 101. Accordingly, in the electronic device 101, the wallpaper of the background area 210 may be changed according to the widget area 220 and information displayed by the widget area 220. Accordingly, the electronic device 101 may provide, to a user, a lock screen having unity between the wallpaper and the widget area 220.

FIG. 10 illustrates an example of a change of a lock screen of an electronic device according to an embodiment.

FIG. 10 may be described with reference to FIG. 1 and FIGS. 2A to 2G.

Referring to FIG. 10, in a state 1001, the electronic device 101 may display a lock screen in a lock state. For example, the electronic device 101 may display a lock screen including a background area 210 in which a wallpaper (or a background image) is displayed, icon areas 230 and 240, and a widget area 220.

In the state 1001, the electronic device 101 may identify a task (or a state) (or a use pattern) of the electronic device 101. In an embodiment, the task (or the state) (or the use pattern) of the electronic device 101 may include a function executed by a user through the electronic device 101. For example, in the state 1001, the electronic device 101 may identify that the user is in a state of displaying a record associated with exercise (or running) through the widget area 220 while exercising (or running).

For example, in the state 1001, while the task of the electronic device 101 is in progress, the electronic device 101 may change the display of the widget area 220 such that the widget area 220 indicates a suggestion associated with the task. For example, referring to a state 1003, when the user is exercising (or running), the electronic device 101 may change the display of the widget area 220 to suggest listening to music during the exercise (or the running), based on that the exercise (or the running) is continued. For example, in the state 1003, the electronic device 101 may change the display of the widget area 220 such that the widget area 220 indicates a music application.

For example, in the state 1003, when the user does not react to the suggestion associated with the task (or when a user input to the widget area 220 is not obtained for a specified time), the electronic device 101 may restore the display of the widget area 220 (or change the display of the widget area 220 such that the widget area 220 indicates an application associated with the exercise).

As described above, the electronic device 101 may change the widget area 220 to indicate a suggestion corresponding to the use pattern (or the state) (or the task) of the user. Accordingly, many inputs may not be required to execute a function necessary for the user.

FIG. 11 illustrates an example of a change of a lock screen of an electronic device according to an embodiment.

FIG. 11 may be described with reference to FIG. 1 and FIGS. 2A to 2G.

Referring to FIG. 11, in a state 1101, the electronic device 101 may display a lock screen in a lock state. For example, the electronic device 101 may display a lock screen including a background area 210 in which a wallpaper (or a background image) is displayed, icon areas 230 and 240, and a widget area 220.

In the state 1101, the electronic device 101 may identify a task (or a state) (or a use pattern) of the electronic device 101. In an embodiment, the electronic device 101 may identify the task (or the state) (or the use pattern) of the electronic device 101 while a mode (e.g., a relaxation mode) of the electronic device 101 is executed.

For example, in the state 1101, the electronic device 101 may change the display of the widget area 220 such that the widget area 220 indicates a suggestion associated with a mode of the electronic device 101, according to the use pattern of the electronic device 101. For example, referring to a state 1103, when a user continuously uses the electronic device 101 during the relaxation mode, the electronic device 101 may change the display of the widget area 220 to suggest refraining from using the electronic device 101.

For example, in the state 1103, when the user reacts to the suggestion associated with the task (or when the user stops using the electronic device 101), the electronic device 101 may restore the display of the widget area 220 (or change the display of the widget area 220 such that the widget area 220 indicates an application associated with exercise).

As described above, the electronic device 101 may change the widget area 220 to indicate a suggestion corresponding to the use pattern (or the state) (or the task) of the user. Accordingly, it is possible to guide the user to a required action according to a mode set by the user.

FIG. 12 illustrates an example of a change of a lock screen of an electronic device according to an embodiment.

FIG. 12 may be described with reference to FIG. 1 and FIGS. 2A to 2G.

Referring to FIG. 12, in a state 1201, the electronic device 101 may display a lock screen in a lock state. For example, the electronic device 101 may display a lock screen including a background area 210 in which a wallpaper (or a background image) is displayed, icon areas 230 and 240, and a widget area 220.

In the state 1201, the electronic device 101 may identify a use pattern of a user. In an embodiment, the electronic device 101 may identify a routine (e.g., quitting time) of the user.

For example, in the state 1201, according to the use pattern of the electronic device 101, the electronic device 101 may change the display of the widget area 220 such that the widget area 220 indicates a suggestion associated with the use pattern of the user. For example, referring to a state 1203, the display of the widget area 220 may be changed to indicate icons of applications used by the user during the quitting time.

For example, in the state 1203, the electronic device 101 may execute an application corresponding to a selected icon, based on an input selecting one icon from among icons included in the widget area 220. In this case, when a user input (or user authentication) is required for unlocking, the electronic device 101 may execute an application in an unlocked state after obtaining the user input (or authenticating the user) through a screen for unlocking.

As described above, the electronic device 101 may change the widget area 220 to indicate a suggestion corresponding to a use pattern (or a state) (or a task) of the user. Accordingly, it is possible to suggest applications that are highly likely to be used by the user.

FIG. 13 illustrates an example of a user interface (UI) for setting a lock screen of an electronic device according to an embodiment.

FIG. 13 may be described with reference to FIG. 1 and FIGS. 2A to 2G.

Referring to FIG. 13, a menu 1301 may be a menu for setting a mode of the electronic device 101. In an embodiment, the electronic device 101 may change the mode of the electronic device 101, based on an input selecting one of modes (e.g., sleep, driving, game, or work). Accordingly, the electronic device 101 may change a wallpaper of the background area 210 corresponding to the changed mode. In addition, the electronic device 101 may set the widget area 220 to indicate an application corresponding to the changed mode on a lock screen in a lock state.

Referring to FIG. 13, a menu 1303 may be a menu for setting applications changeable according to an input to the widget area 220 (or an input for changing information (or an application generating the information) displayed by the widget area 220) (e.g., a swipe input, a drag input, a flick input, a pen input, or a slide input), on the lock screen of the electronic device 101. In an embodiment, the electronic device 101 may determine the changeable applications on the lock screen in the lock state, based on an input selecting one or more applications among the applications (e.g., music, weather, health/activity, wellness, phone, clock, recording, or schedule). Accordingly, the electronic device 101 may change the application generating the information displayed by the widget area 220 among the applications selected in the menu 1303, based on the input to the widget area 220.

FIGS. 14A to 14C illustrate an example of a change of a widget indicating a notification on a screen displayed by an electronic device according to an embodiment.

FIGS. 14A to 14C may be described with reference to FIG. 1, FIGS. 2A to 2G, and FIG. 4.

Referring to FIG. 14A, in a state 1401, a widget area 1420 (or a horizontal bar) (or a notification bar) (or a status bar) may be distinguished from the widget area 220 of FIGS. 2A to 2G. For example, the widget area 1420 may be displayed at the top of a screen of the display 260. For example, the widget area 1420 may be displayed on a left side of the screen of the display 260.

In an embodiment, a widget may be displayed in the widget area 1420. The widget in the widget area 1420 may display information associated with an application. In an embodiment, the widget may display information (or a notification) generated by an application being executed (in a background). In an embodiment, the widget may be classified into an information widget, a management widget, or a hybrid widget for information and management. For example, the widget may include one or more objects to display the information (or the notification) generated by the application. For example, the one or more objects may include an image and/or text.

In an embodiment, the widget area 1420 may be displayed in a notification area 1411. In an embodiment, the notification area 1411 may be displayed at the top of the screen of the display 260. In an embodiment, the notification area 1411 may include an area 1413 in which a visual object indicating a state (e.g., a battery state, a communication state) of the electronic device is displayed and/or an area 1415 in which a visual object indicating a current time is displayed.

In an embodiment, the widget area 1420 may be displayed in an unlocked state (or a use state). In this case, a screen (e.g., a home screen, or a screen of an application, or apps screen) other than a lock screen may be displayed in a background area 1410 of the display 260. However, it is not limited thereto. In an embodiment, the widget area 1420 may be displayed in a lock state. In this case, the lock screen may be displayed in the background area 1410 of the display 260.

In an embodiment, the electronic device 101 may change the widget area 1420 displayed in the unlocked state (or the use state) based on an event.

For example, referring to states 1401 and 1402 of FIG. 14A, the electronic device 101 may change, based on the event generated from the application, the widget area 1420 to a widget area 1421 in a state where a first lateral side (or a right lateral side) of the widget area 1420 is expanded in a direction. In the state 1402, after a widget is displayed in the widget area 1421 for a specified time, the widget area 1421 may be changed to the widget area 1420.

For example, referring to states 1401 and 1403 of FIG. 14A, the electronic device 101 may change the widget area 1420 to a widget area 1422 in a state expanded more than the widget area 1420, based on an input to the widget area 1420. For example, the widget area 1422 may be displayed at a location that does not overlap with the notification area 1411 (e.g., below the notification area 1411). However, it is not limited thereto. For example, referring to states 1402 and 1403 of FIG. 14A, the electronic device 101 may change the widget area 1421 to the widget area 1422 in a state expanded more than the widget area 1421, based on an input to the widget area 1421. In the state 1403, after a widget is displayed in the widget area 1422 for a specified time, the widget area 1422 may be changed to the widget area 1420.

For example, referring to states 1403 and 1404 of FIG. 14A, the electronic device 101 may change the widget area 1422 to a widget area 1423 in a state expanded more than the widget area 1422, based on an input to the widget area 1422. In the state 1403, after a widget is displayed in the widget area 1422 for a specified time, the widget area 1422 may be changed to the widget area 1420.

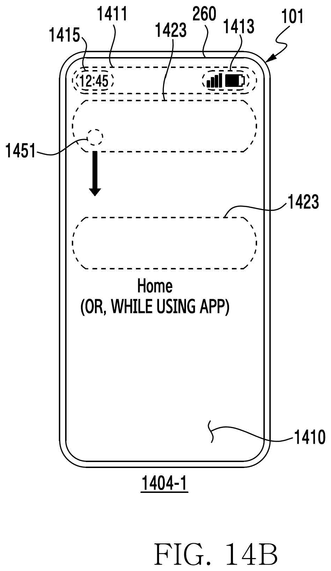

For example, referring to a state 1404-1 of FIG. 14B, the electronic device 101 may move the widget area 1423, based on a direction and a distance corresponding to a swipe input 251 with respect to the widget area 1423 during the swipe input 251. For example, the electronic device 101 may display the moved widget area 1423 at an original location, based on that the swipe input 251 is released.

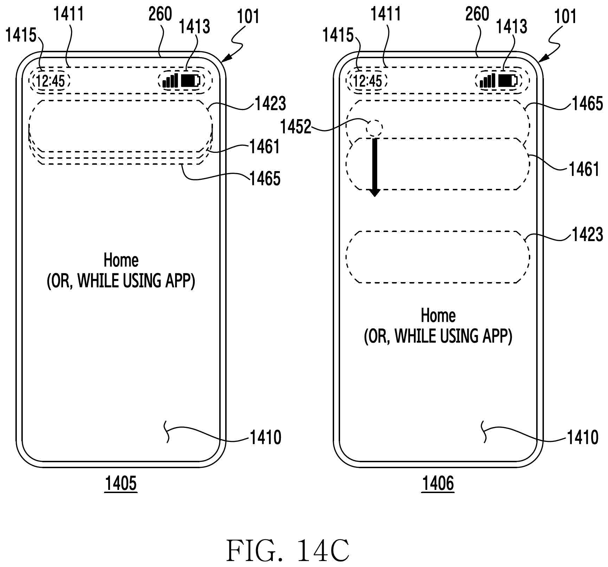

For example, referring to a state 1405 of FIG. 14C, when the number of widgets capable of being displayed in the widget area 1423 is two or more, the electronic device 101 may display widget areas 1461 and 1465 indicating that widgets having next priorities exist. For example, referring to a state 1406 of FIG. 14C, the electronic device 101 may move the widget area 1423 and the widget areas 1461 and 1465, based on a direction and a distance corresponding to a swipe input 1452 with respect to the widget area 1423 during the swipe input 1452. A distance by which the widget areas 1461 and 1465 are moved may be shorter than a distance by which the widget area 1423 is moved. For example, the electronic device 101 may display the widget area 1423 in a layer next to the widget areas 1461 and 1465, based on that the swipe input 1452 is released. For example, based on that the swipe input 1452 is released, the electronic device 101 may display the widget area 1423 such that the widget area 1423 is covered by the widget areas 1461 and 1465. For example, based on that the swipe input 1452 is released, the electronic device 101 may display the widget area 1461 having the next priority at the very front. Displaying the widget area 1461 at the very front may include displaying the widget area 1461 at a location of the widget area 1423 before the swipe input 1452.

When the electronic device 101 is unlocked after the widget 1421 is displayed, an area in which information of an application indicated by the widget 1421 is displayed may be reduced. For example, in the unlocked state 1401, the information may be displayed together with other objects within a notification area 1411. In the unlocked state 1401, a screen (e.g., a home screen, or a screen of an application, or an apps screen) other than a lock screen may be displayed in a background area 1410 of the display 260. However, it is not limited thereto. In a state 1402, after the widget 1421 is displayed for a specified time, the area in which the information of the application indicated by the widget 1421 is displayed may be reduced. For example, in the state 1401, the information may be displayed together with other objects within the notification area 1411.

In the state 1401, the electronic device 101 may obtain an input selecting an icon indicating an application being executed in a background in the notification area 1411. In an embodiment, based on the input selecting an icon in the state 1403, the electronic device 101 may expand and display the widget 1420. When the electronic device 101 is unlocked after the widget 1421 is displayed, the area in which the information of the application indicated by the widget 1421 is displayed may be reduced. For example, in the unlocked state 1401, the information may be displayed together with other objects within the notification area 1411. In the unlocked state 1401, a screen (e.g., the home screen, or the screen of the application, or the apps screen) other than the lock screen may be displayed in the background area 1410 of the display 260. However, it is not limited thereto.

In the state 1403, the electronic device 101 may obtain an input selecting an area other than the widget area 1422. In an embodiment, based on the input selecting an area other than the widget area 1422 in the state 1403, the electronic device 101 may display the information displayed in the widget area 1422 together with other objects within the notification area 1411.

In states 1401 and 1402, the electronic device 101 may obtain a new notification of an application. In an embodiment, the electronic device 101 may display a widget indicating the new notification in widget areas 1420 and 1421, based on the new notification in the states 1401 and 1402.

In states 1401, 1402, 1403, and 1404, the electronic device 101 may be changed to a lock state. For example, in the states 1401, 1402, 1403, and 1404, the electronic device 101 may be changed to the lock state, based on a user input requesting the lock state. For example, in the states 1401, 1402, 1403, and 1404, the electronic device 101 may be changed to the lock state, based on that a user input is not input for a specified time or more.

Based on being changed to the lock state from the unlocked states 1401, 1402, 1403, and 1404, the electronic device 101 may display a lock screen in the lock state in the state 401. For example, the electronic device 101 may display a lock screen including a background area 210 in which a wallpaper (or a background image) is displayed, icon areas 230 and 240, and a widget area 220. In an embodiment, information associated with a timer displayed in the notification area 1411 (or the widget area 1420) in the unlocked state may be displayed in the widget area 220.

In the state 401, the electronic device 101 may change the widget area 220 (or a display area) (or a size) in the lock state, based on an input 411 to the widget area 220.

As described above, the electronic device 101 may arrange a location of a widget providing information to a user at the top or bottom, according to the lock state and/or the unlocked state. Accordingly, the electronic device 101 may arrange the widget providing the information at a location where the information is well recognized by the user in the lock state and does not restrict usability of the user in the unlocked state.

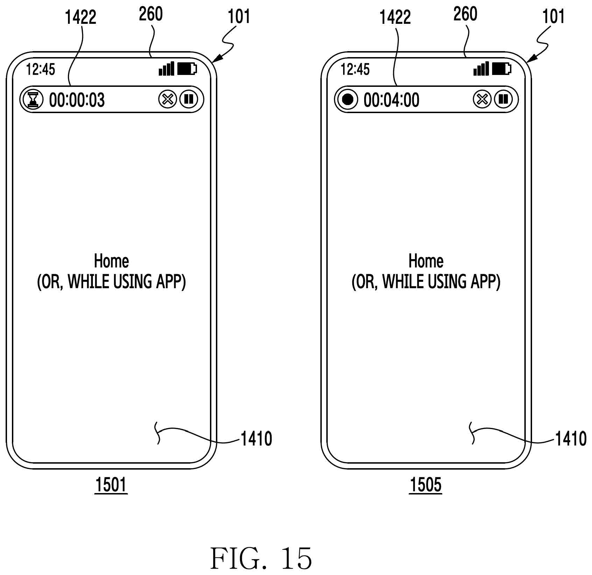

FIG. 15 illustrates an example of a change of a widget indicating a notification on a screen displayed by an electronic device according to an embodiment.

FIG. 15 may be described with reference to FIG. 1, FIGS. 2A to 2G, FIG. 4, and FIGS. 14A to 14C.

Referring to FIG. 15, in a state 1501, the electronic device 101 may obtain an input associated with a widget area 1422 (or a widget displayed in the widget area 1422). For example, the electronic device 101 may obtain a swipe input (or a drag input) (or a flick input) (or a pen input) (or a slide input) to the widget area 1422. For example, the electronic device 101 may obtain an upward input in the widget area 1422.

In an embodiment, the electronic device 101 may change an application generating information displayed by a widget displayed in the widget area 1422, based on the input associated with the widget area 1422. For example, the electronic device 101 may change an application generating information to be displayed in the widget area 1422 according to an order of applications capable of displaying information in the widget area 1422. For example, the electronic device 101 may determine the application generating the information displayed by the widget area 1422, based on an application in a next order of a timer. In a state 1505, the electronic device 101 may determine a recording application as the application displaying information in the widget area 1422.

Referring to FIG. 15, in the state 1505, the electronic device 101 may obtain an input associated with the widget area 1422 (or a widget displayed in the widget area 1422). For example, the electronic device 101 may obtain a swipe input (or a drag input) (or a flick input) (or a pen input) (or a slide input) to the widget area 1422. For example, the electronic device 101 may obtain a downward input in the widget area 1422.

In an embodiment, the electronic device 101 may change an application generating information to be displayed in the widget area 1422, based on the input associated with the widget area 1422. For example, the electronic device 101 may change the application generating the information to be displayed in the widget area 1422 according to an order of applications capable of displaying information in the widget area 1422. For example, the electronic device 101 may determine an application generating information to be displayed in the widget area 1422, based on an application in a next order of a recording application. For example, the electronic device 101 may determine a timer having the next order of the recording application as the application displaying information in the widget area 1422.

As described above, the electronic device 101 may provide a user with notifications (or information) of ongoing activities (or applications being executed), in an unlocked state. In addition, as the electronic device 101 sequentially changes the notifications (or the information) of the ongoing activities (or the applications being executed) according to a user input, the user may easily check information of an application currently being executed.

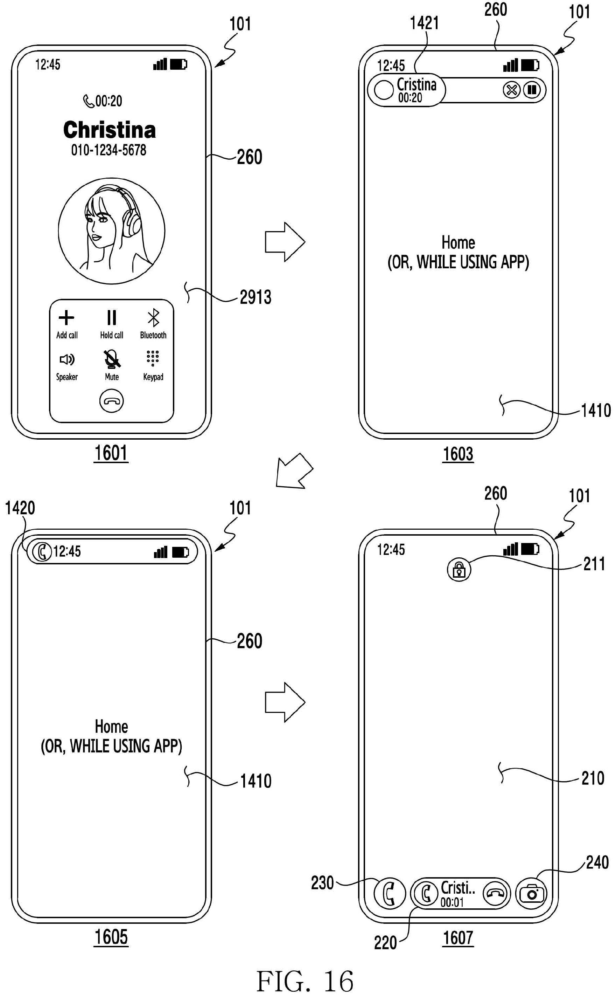

FIG. 16 illustrates an example of a change of a widget indicating a notification on a screen displayed by an electronic device according to an embodiment.

FIG. 16 may be described with reference to FIG. 1 and FIGS. 2A to 2G.

Referring to FIG. 16, in a state 1601, the electronic device 101 may display a screen indicating a call state (or that a call is in progress), in an unlocked state. In the state 1601, the electronic device 101 may obtain an input for reducing the screen indicating the call state (or that the call is in progress) (e.g., a touch input to a home button). In an embodiment, the electronic device 101 may display a screen including a background area 1410 and a widget area 1421, based on an input for reducing a screen (e.g., a touch input to a home button).

Referring to FIG. 16, in a state 1603, after a widget is displayed in the widget area 1421 for a specified time, the widget area 1421 displaying information of a call application may be reduced to the widget area 1420. For example, in a state 1605, call information may be displayed in the widget area 1420 within a notification area (e.g., the notification area 1411 of FIG. 14A).

In states 1603 and 1605, the electronic device 101 may be changed to a lock state. For example, in the states 1603 and 1605, the electronic device 101 may be changed to the lock state based on a user input requesting the lock state.

Based on the change from the unlocked states 1603 and 1605 to the lock state, the electronic device 101 may display a lock screen in the lock state, in a state 1607. For example, the electronic device 101 may display a lock screen including a background area 210 in which a wallpaper (or a background image) is displayed, icon areas 230 and 240, and a widget area 220. In an embodiment, the electronic device 101 may display information associated with a phone call displayed in the widget area 1420 or the widget area 1421 in the unlocked state, in the widget area 220.

As described above, the electronic device 101 may arrange a location of a widget providing information to a user at the top or bottom, according to the lock state and/or the unlocked state. Accordingly, the electronic device 101 may arrange the widget providing the information at a location where the information is well recognized by the user in the lock state and does not restrict usability of the user in the unlocked state.

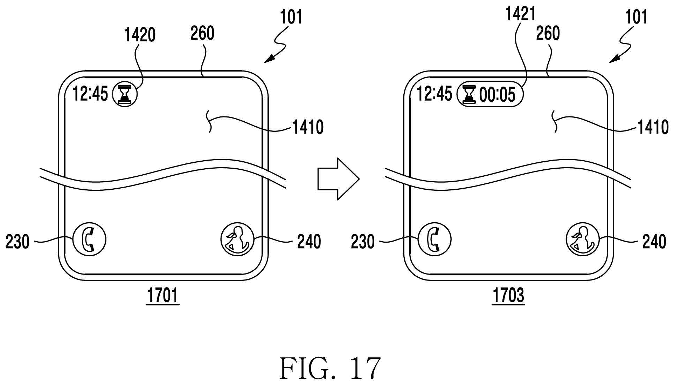

FIG. 17 illustrates an example of a change of a widget indicating a notification on a screen displayed by an electronic device according to an embodiment.

FIG. 17 may be described with reference to FIG. 1 and FIGS. 2A to 2G.

Referring to FIG. 17, in a lock state 1701 of the electronic device 101, the electronic device 101 may display a widget in a widget area 1420 in a reduced state. For example, the electronic device 101 may change a widget area (or a display area) (or a size) in which the widget is displayed, based on a notification (or an event) of an application associated with the widget. In an embodiment, the notification (or the event) may indicate that necessary information and/or interest information is generated. For example, the notification (or the event) may indicate that expiration of a timer is imminent. For example, the notification (or the event) may indicate that food delivery is imminent. For example, the notification (or the event) may indicate that arrival at a destination is imminent.

For example, in a lock state 1703 of the electronic device 101, the electronic device 101 may change the widget area 1420 to a widget area 1421 expanded to the right. For example, the electronic device 101 may expand and display information associated with the notification (or the event), in the expanded widget area 1421.

As described above, the electronic device 101 may provide a user with the notification (or the information), in the expanded widget area 1421. Accordingly, the user may check information associated with the application of the widget area 220 in more detail.

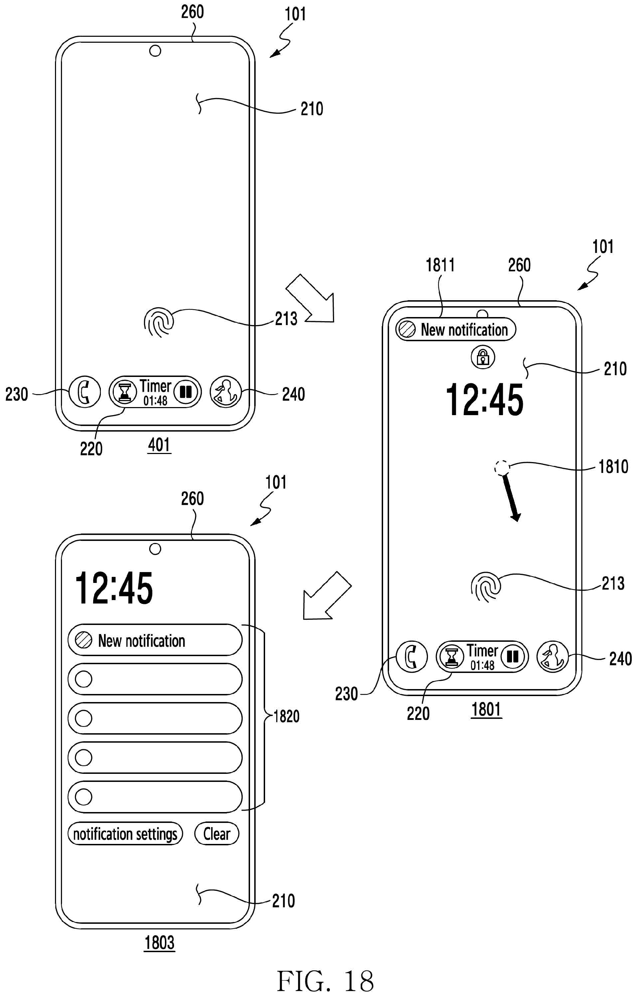

FIG. 18 illustrates an example of an operation of expanding a widget indicating a notification on a screen displayed by an electronic device according to an embodiment.

FIG. 18 may be described with reference to FIG. 1 and FIGS. 2A to 2G.

Referring to FIG. 18, in a state 401, the electronic device 101 may display a lock screen in a lock state. For example, the electronic device 101 may display a lock screen including a background area 210 in which a wallpaper (or a background image) is displayed, icon areas 230 and 240, and a widget area 220.

In the state 401, the electronic device 101 may identify an event. In an embodiment, the event may be identification of a display request of a notification of an application not associated with the widget area 220, the first icon area 230, or the second icon area 240. However, it is not limited thereto.

In an embodiment, in a state 1801, the electronic device 101 may display a widget in a widget area 1811 at the top, based on an event generated from an application not associated with the widget area 220, the first icon area 230, or the second icon area 240. In an embodiment, the widget area 1811 may have a length longer than the widget areas 1420 and 1421 of FIG. 14A. However, it is not limited thereto. In an embodiment, the widget area 1811 may have a size of any one of the widget areas 1420, 1421, 1422, and 1423 of FIG. 14A.

In the state 1801, the electronic device 101 may obtain an input 1810 for expanding a notification. In an embodiment, the input 1810 may be a swipe input. However, it is not limited thereto.

In an embodiment, in a state 1803, the electronic device 101 may display a screen including a list 1820 of one or more notifications on the display 260, in the lock state. In this case, the widget area 220, the first icon area 230, and the second icon area 240 may disappear from the lock screen. However, it is not limited thereto. The widget area 220, the first icon area 230, or the second icon area 240 may not disappear from the lock screen.

As described above, the electronic device 101 may provide one or more notifications (or information) to a user in a list form, in the lock state. Accordingly, the user may check information associated with the application of the widget area 220 in more detail.

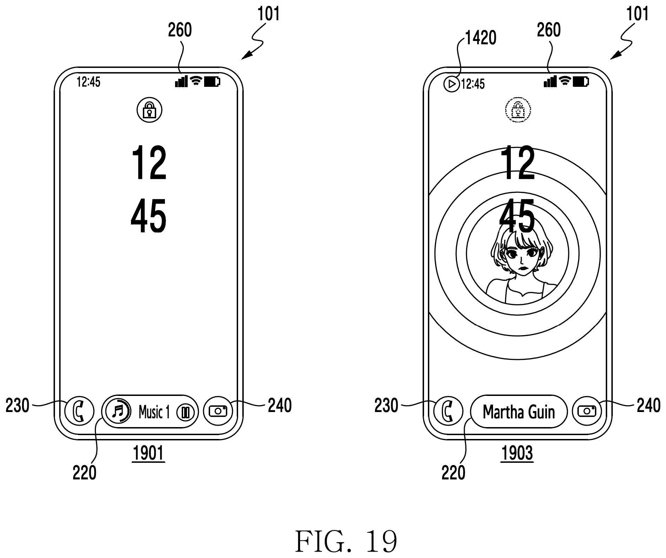

FIG. 19 illustrates an example of a change of a widget indicating a notification on a screen displayed by an electronic device according to an embodiment.

FIG. 19 may be described with reference to FIG. 1 and FIGS. 2A to 2G.

Referring to FIG. 19, in a state 1901, the electronic device 101 may display a lock screen in a lock state. For example, the electronic device 101 may display a lock screen including a background area in which a wallpaper (or a background image) is displayed, icon areas 230 and 240, and a widget area 220.

In an embodiment, in the state 1901, the electronic device 101 may identify an event indicating that a call request is received from a phone application. In an embodiment, in a state 1903, the electronic device 101 may display, in the widget area 220, a visual object indicating that the call request is received, based on an event.

In an embodiment, in the state 1903, the electronic device 101 may display, in a widget area 1420, information (e.g., information of a music application) displayed in the widget area 220 in the state 1901, based on the event.

As described above, while providing information to a user through a widget located at the bottom, the electronic device 101 may provide information being displayed through a widget located at the top, based on a notification. Accordingly, as an event occurs, the electronic device 101 may display information indicating the event and previously displayed information through different widgets.

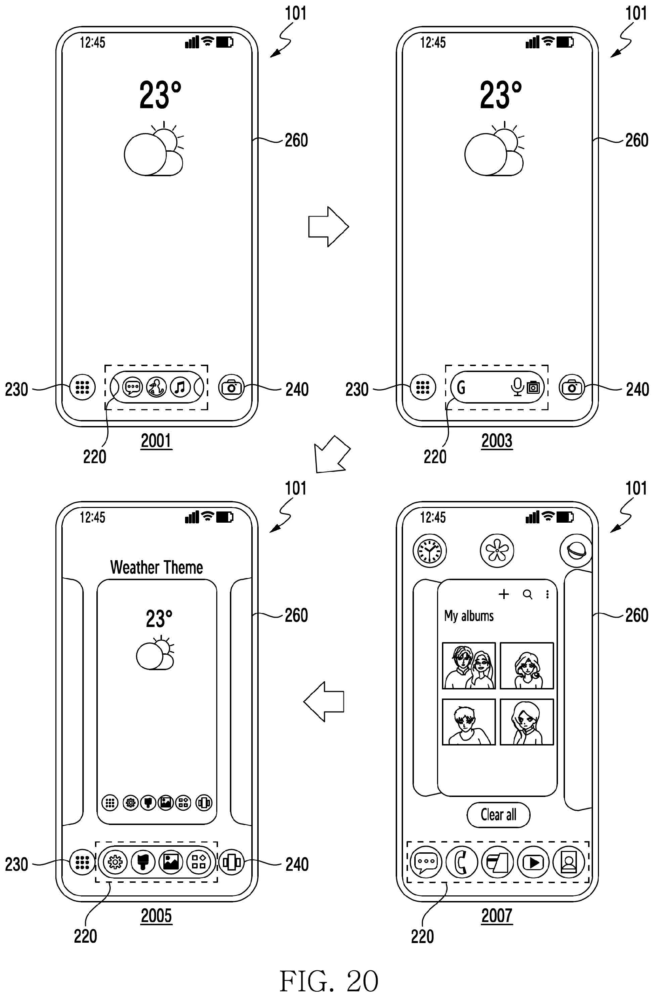

FIG. 20 illustrates an example of a widget displayed by an electronic device according to an embodiment.

FIG. 20 may be described with reference to FIG. 1 and FIGS. 2A to 2G.

Referring to FIG. 20, states 2001, 2003, 2005, and 2007 illustrate a method in which the electronic device 101 displays various information in areas of the icon areas 230 and 240 and the widget area 220, in an unlocked state.

Referring to the state 2001, the electronic device 101 may suggest icons of various applications executable through the widget area 220, on a home screen (or an execution screen of an application) (or an apps screen).

Referring to the state 2003, the electronic device 101 may display an image object for search through the widget area 220, on the home screen (or the execution screen of the application) (or the apps screen).

Referring to the state 2005, the electronic device 101 may display icons indicating functions for editing the home screen in the areas of the icon areas 230 and 240 and the widget area 220, on a screen for setting the home screen.

Referring to the state 2007, the electronic device 101 may suggest icons of various executable applications in the areas of the icon areas 230 and 240 and the widget area 220, on a recent screen indicating recently executed applications.

As described above, the electronic device 101 may suggest various functions through the areas of the icon areas 230 and 240 and the widget area 220.

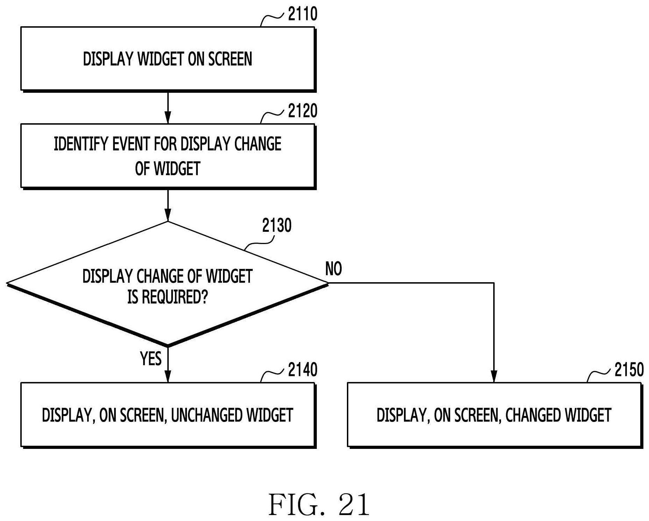

FIG. 21 is a flowchart illustrating an operation of an electronic device according to an embodiment.

FIG. 21 may be described with reference to FIG. 1 and FIGS. 2A to 2G.

Referring to FIG. 21, in operation 2110, the electronic device 101 may display a widget on a screen. In an embodiment, the electronic device 101 may display a widget on a screen indicating a lock screen, in a lock state. In an embodiment, the electronic device 101 may display a widget in the widget area 220, in the lock state. In an embodiment, the widget may display information associated with an application. In an embodiment, the widget may display information (or a notification) generated by an application being executed (in a background). In an embodiment, the widget may be classified into an information widget, a management widget, or a hybrid widget for information and management. For example, the widget may include one or more objects to display the information (or the notification) generated by the application. For example, the one or more objects may include an image and/or text.

In an embodiment, the electronic device 101 may display the widget at a specified location (e.g., the widget area 220) of the screen. For example, the electronic device 101 may display the widget in the widget area 220 between a first icon area 230 and a second icon area 240. In an embodiment, the widget area 220 may have the same location in a height direction as the first icon area 230. In an embodiment, the widget area 220 may have the same location in the height direction as the second icon area 240. In an embodiment, the widget area 220 may be located at a relatively lower part of the lock screen. In an embodiment, the widget area 220 may be located at a relatively central part of the screen.

In operation 2120, the electronic device 101 may identify an event. For example, the event may include an input to the widget (or the widget area 220 in which the widget is displayed), an input to an area other than the widget area 220, a connection with an external electronic device, a change of a mode of the electronic device 101, a change of a task of the electronic device 101, or a notification from an application. However, it is not limited thereto.

In operation 2130, the electronic device 101 may determine whether a display change of the widget is required.

For example, when a tap input to the widget is input, the electronic device 101 may determine that the display change of the widget is required. For example, when a tap input to an area other than the widget is input, the electronic device 101 may determine that the display change of the widget is required. For example, when a notification of an application associated with the widget or the icon areas 230 and 240 is identified, the electronic device 101 may determine that the display change of the widget is required. For example, when a tap input to the icon areas 230 and 240 is input, the electronic device 101 may determine that the display change of the widget is required. However, it is not limited thereto.

In operation 2130, based on determining that the display change of the widget is required, the electronic device 101 may perform operation 2140. In operation 2130, based on determining that the display change of the widget is not required, the electronic device 101 may perform operation 2150.

In operation 2140, the electronic device 101 may display, on a screen, the changed widget. In an embodiment, the widget being changed may include that a size of the widget area 220 in which the widget is displayed is changed. In an embodiment, the widget being changed may include that information displayed by the widget (or an application generating the information) is changed.

In operation 2150, the electronic device 101 may display, on a screen, the unchanged widget. For example, the electronic device 101 may display the information of the widget in the widget area 220 while maintaining the size of the widget area 220 in which the widget is displayed. For example, the electronic device 101 may change a wallpaper of the background area 210 while maintaining the display of the widget (e.g., displaying information on music being played).

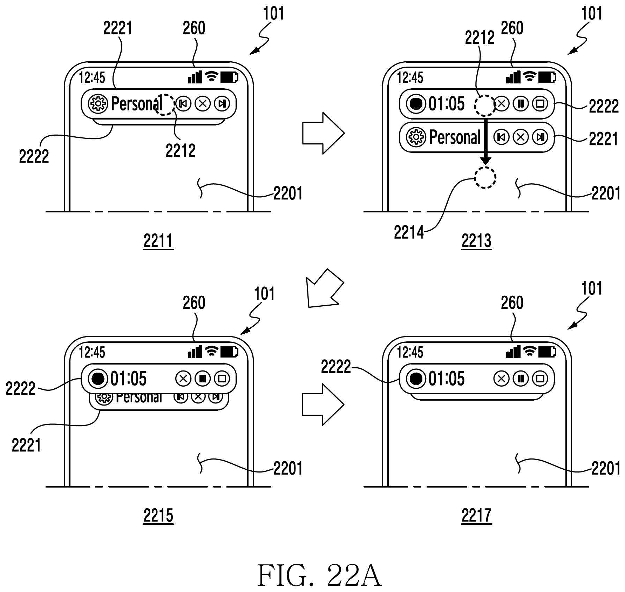

FIG. 22A illustrates an example of switching between widgets on a screen displayed by an electronic device according to an embodiment.

FIG. 22A may be described with reference to FIG. 1, FIGS. 2A to 2G, FIGS. 14A to 14C, FIG. 15, FIG. 16, FIG. 17, and FIG. 18.

FIG. 22A illustrates states 2211, 2213, 2215, and 2217 during which a widget displayed in a widget area (e.g., the widget area 1422 of FIG. 14A) is changed.

For example, the state 2211 may illustrate a situation in which the electronic device 101 identifies an input 2212 for selecting a widget 2221. In the state 2211, a widget 2221 may be displayed at the top (e.g., the widget area 1422 of FIG. 14A) of a background area 2201. In an embodiment, a screen (e.g., a home screen, or a screen of an application, or an apps screen) other than a lock screen may be displayed in the background area 2201.

In an embodiment, in the state 2211, the electronic device 101 may display another widget 2222 for another application being executed (in a background or a foreground), in a peripheral area of the widget 2221. In an embodiment, the another widget 2222 may be displayed in the background area 2201 in a state of being at least partially covered by the widget 2221. In an embodiment, the another application may be an application having a next display order of the application for the widget 2221. For example, the display order may be an order of applications capable of displaying a widget in an area where the widget area 1422 of FIG. 14A is displayed.

For example, the state 2213 may illustrate a situation in which the electronic device 101 identifies an additional input 2214 continuous to the input 2212. In an embodiment, the input 2212 and the additional input 2214 may be included in an input (e.g., a swipe input, a drag input, a flick input, a pen input, or a slide input) for changing a widget displayed in the widget area 1422.

In an embodiment, in the state 2213, the electronic device 101 may move a display location of the widget 2221, based on a movement direction of the additional input 2214 to the widget 2221. In an embodiment, in the state 2213, the electronic device 101 may move the display location of the widget 2221 downward as the additional input 2214 to the widget 2221 is moved downward. As the display location of the widget 2221 is moved, the another widget 2222 may be displayed in the background area 2201, in an exposed state. As the display location of the widget 2221 is moved out of a widget area, another widget 2222 of an application having a next display order may be exposed. As the display location of the widget 2221 leaves the widget area (e.g., the widget area 1422 of FIG. 14A), the another widget 2222 located in the widget area may be displayed in the background area 2201 in the exposed state.

In an embodiment, the electronic device 101 may change the display order of the widget 2221, based on that the additional input 2214 satisfies a specified change condition of the display order. In an embodiment, the electronic device 101 may change the display order of the application for the widget 2221 to the last order, based on that the additional input 2214 satisfies the specified change condition. For example, the electronic device 101 may identify that the specified change condition is satisfied when the additional input 2214 moves by a specified distance or more, and/or when a movement speed of the additional input 2214 exceeds a specified movement speed.

In an embodiment, in the state 2213, the electronic device 101 may identify that the input to the widget 2221 is released. In an embodiment, in the state 2213, the electronic device 101 may identify that the input to the widget 2221 is released after changing the display order of the widget 2221.

For example, the state 2215 may illustrate a situation in which the electronic device 101 applies a graphic effect to the widget 2221 to display the widget 2222 instead of the widget 2221 in the widget area 1422, as the input for changing the widget is released.

In an embodiment, in the state 2215, the electronic device 101 may move the display location of the widget 2221, based on identifying that the input 2212 selecting the widget 2221 is released. In an embodiment, in the state 2215, the electronic device 101 may move the display location of the widget 2221, based on identifying that the input 2212 is released after changing the display order of the widget 2221. For example, in the state 2215, the electronic device 101 may move the widget 2221 such that the widget 2221 is located in the widget area.

In an embodiment, in the state 2215, the electronic device 101 may change the display of the widget 2221 and/or the widget 2222. For example, the electronic device 101 may change a color and/or a size of the widget 2221. For example, the electronic device 101 may change the color of the widget 2221 to a dark color (e.g., gray) or a dark tone. For example, the electronic device 101 may change the size of the widget 2221 to be smaller than a size corresponding to the widget area. For example, the electronic device 101 may change the size of the widget 2221 such that a graphic effect in which the widget 2221 is reduced or a graphic effect in which the widget 2221 moves away is applied. For example, the electronic device 101 may change a size of the widget 2222. For example, the electronic device 101 may change the size of the widget 2222 to the size corresponding to the widget area. For example, the electronic device 101 may change the size of the widget 2222 such that a graphic effect in which the widget 2222 is expanded or a graphic effect in which the widget 2222 approaches is applied. However, a graphic effect applied to the widgets 2221 and 2222 is not limited thereto.

For example, the state 2217 may illustrate a situation in which the electronic device 101 displays the widget 2222 instead of the widget 2221 in an area, as the input for changing the widget is released. In an embodiment, in the state 2217, the electronic device 101 may display the widget 2221 in the background area 2201 such that the widget 2221 is at least partially covered by the another widget 2222.

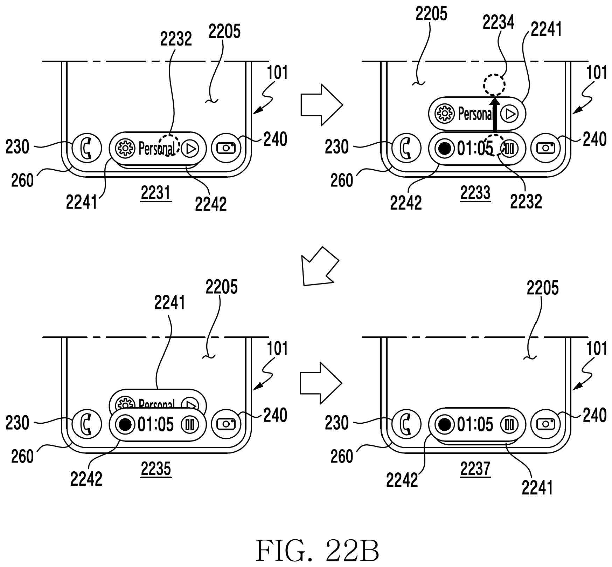

FIG. 22B illustrates an example of switching between widgets on a lock screen of an electronic device according to an embodiment.

FIG. 22B may be described with reference to FIG. 1, FIGS. 2A to 2G, and FIG. 3.

FIG. 22B illustrates states 2231, 2233, 2235, and 2237 during which a widget displayed in a widget area (e.g., the widget area 220 illustrated in FIGS. 2A to 2G) is changed.

For example, the state 2231 may illustrate a situation in which the electronic device 101 identifies an input 2232 for selecting a widget 2241. In the state 2231, the widget 2241 may be displayed at a bottom (e.g., the widget area 220) of a background area 2205. In an embodiment, a lock screen may be displayed in the background area 2205.

In an embodiment, in the state 2231, the electronic device 101 may display another widget 2242 for another application being executed (in a background or a foreground), in a peripheral area of the widget 2241. In an embodiment, the another widget 2242 may be displayed in the background area 2205 in a state of being at least partially covered by the widget 2241. In an embodiment, the another application may be an application having a next display order of an application for the widget 2241. For example, the display order may be an order of applications capable of displaying a widget in the widget area 220.

For example, the state 2233 may illustrate a situation in which the electronic device 101 identifies an additional input 2234 continuous to the input 2232. In an embodiment, the input 2232 and the additional input 2234 may be included in an input (e.g., a swipe input, a drag input, a flick input, a pen input, or a slide input) for changing the widget displayed in the widget area 220.

In an embodiment, in the state 2233, the electronic device 101 may move a display location of the widget 2241, based on a movement direction of the additional input 2234 to the widget 2241. In an embodiment, in the state 2233, the electronic device 101 may move the display location of the widget 2241 upward as the additional input 2234 to the widget 2241 is moved upward. As the display location of the widget 2241 is moved, the another widget 2242 may be displayed in the background area 2205 in an exposed state. As the display location of the widget 2241 is moved out of the widget area, the another widget 2242 of the application having the next display order may be exposed. As the display location of the widget 2241 leaves the widget area 220, the another widget 2242 located in the widget area 220 may be displayed in the background area 2205 in the exposed state.

In an embodiment, the electronic device 101 may change the display order of the widget 2241, based on that the additional input 2234 satisfies a specified change condition of the display order. In an embodiment, the electronic device 101 may change the display order of an application for the widget 2241 to the last order, based on that the additional input 2234 satisfies the specified change condition. For example, the electronic device 101 may identify that the specified change condition is satisfied when the additional input 2234 moves by a specified distance or more, and/or when a movement speed of the additional input 2234 exceeds a specified movement speed.

In an embodiment, in a state 2233, the electronic device 101 may identify that the input to the widget 2241 is released. In an embodiment, in the state 2233, the electronic device 101 may identify that the input to the widget 2241 is released after changing the display order of the widget 2241.

For example, a state 2235 may illustrate a situation in which the electronic device 101 applies a graphic effect to the widget 2241 to display the widget 2242 instead of the widget 2241 in the area 220 as the input for changing the widget is released.

In an embodiment, in the state 2235, the electronic device 101 may move a display location of the widget 2241, based on identifying that the input 2232 selecting the widget 2241 is released. In an embodiment, in the state 2235, the electronic device 101 may move the display location of the widget 2241, based on identifying that the input 2232 is released after changing the display order of the widget 2241. For example, in the state 2235, the electronic device 101 may move the widget 2242 such that the widget 2242 is located in the widget area 220.

In an embodiment, in the state 2235, the electronic device 101 may change a display of the widget 2241 and/or the widget 2242. For example, the electronic device 101 may change a color and/or a size of the widget 2241. For example, the electronic device 101 may change the color of the widget 2241 to a dark color (e.g., gray) or a dark tone. For example, the electronic device 101 may change the size of the widget 2241 to be smaller than a size corresponding to the widget area 220. For example, the electronic device 101 may change a size of the widget 2242. For example, the electronic device 101 may change the size of the widget 2242 to the size corresponding to the widget area 220. For example, the electronic device 101 may change the size of the widget 2242 such that a graphic effect in which the widget 2242 is expanded or a graphic effect in which the widget 2242 approaches is applied. However, the graphic effect applied to the widget 2242 is not limited thereto.

For example, a state 2237 may illustrate a situation in which the electronic device 101 displays the widget 2242 instead of the widget 2241 in the area 220 as the input for changing the widget is released.

In an embodiment, in the state 2237, the electronic device 101 may display the widget 2241 in the background area 2205 such that the widget 2241 is at least partially covered by the another widget 2242.

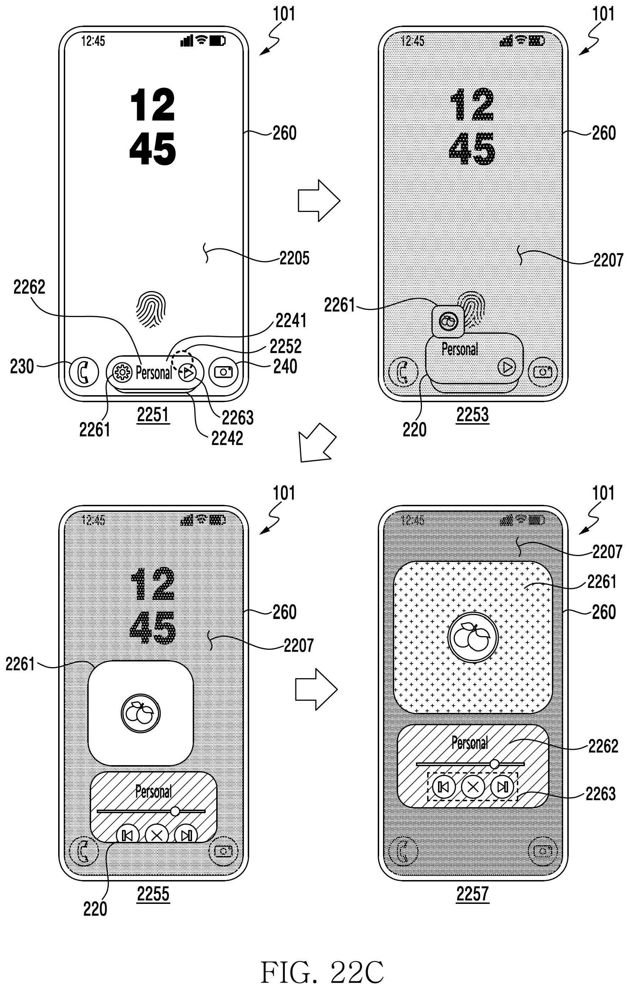

FIG. 22C illustrates an example of a change of a widget on a lock screen of an electronic device according to an embodiment.

FIG. 22C may be described with reference to FIG. 1, FIGS. 2A to 2G, FIG. 3, and FIG. 4.

FIG. 22C illustrates states 2251, 2253, 2255, and 2257 during which a widget displayed in a widget area (e.g., the widget area 220 illustrated in FIGS. 2A to 2G) is expanded.

For example, the state 2251 may illustrate a situation in which the electronic device 101 identifies an input 2252 for selecting a widget 2241. In the state 2251, the electronic device 101 may display the widget 2241 at a bottom (e.g., the widget area 220) of the background area 2205. In an embodiment, the electronic device 101 may display another widget 2242 for another application being executed in a state of being at least partially covered by the widget 2241 in the background area 2205.

In an embodiment, the electronic device 101 may obtain the input 2252 (e.g., a tap input, a double tap input, a press input, or a long press input) to the widget 2241.

In an embodiment, the electronic device 101 may change a display of the widget 2241 based on the input 2252 to the widget 2241. For example, the electronic device 101 may expand the widget 2241 based on the input 2252.

For example, the states 2253 and 2255 may illustrate intermediate situations in which the electronic device 101 expands the widget 2241. In an embodiment, in order to display the widget 2241 in the expanded state, in the states 2253 and 2255, the electronic device 101 may change an arrangement of objects 2261, 2262, and 2263 included in the widget 2241. For example, in order to display the widget 2241 in the expanded state, the electronic device 101 may change sizes and/or locations of the objects 2261, 2262, and 2263 included in the widget 2241. In an embodiment, the object 2261 may be an image indicating an application associated with the widget 2241 or contents of the application. The object 2262 may be text indicating the application associated with the widget 2241 or the contents of the application. The object 2263 may be an executable object for controlling a functional element (e.g., next song play, pause, answering a call, or hanging up a call) provided by the application associated with the widget 2241.

For example, in the states 2253 and 2255, the electronic device 101 may move the object 2261 included in the widget 2241 upward while expanding the size of the object 2261. For example, in the states 2253 and 2255, the electronic device 101 may move the object 2261 included in the widget 2241 to a location separated from the other objects 2262 and 2263.

For example, in the states 2253 and 2255, the electronic device 101 may move the object 2262 included in the widget 2241 upward while expanding the size of the object 2262. For example, in the states 2253 and 2255, the electronic device 101 may expand a size of text included in the object 2262 while moving a location of the object 2262. For example, in the states 2253 and 2255, the electronic device 101 may increase an amount of information included in the object 2262 (e.g., to include more text) while moving the location of the object 2262.

For example, in the states 2253 and 2255, the electronic device 101 may move the object 2263 included in the widget 2241 upward while expanding the size of the object 2263. For example, in the states 2253 and 2255, the electronic device 101 may increase the number of executable objects for controlling a functional element included in the object 2263 while moving a location of the object 2263. For example, in the states 2253 and 2255, the electronic device 101 may further display executable objects for controlling the functional element included in a periphery of the object 2263 while moving the location of the object 2263.

For example, in the states 2253 and 2255, the electronic device 101 may display a wallpaper 2207 corresponding to the widget 2241 in the background area 2205. In an embodiment, the electronic device 101 may display the wallpaper 2207 on the top (e.g., a preceding layer) of the wallpaper displayed in the background area 2205.

For example, the state 2257 may illustrate a situation in which the electronic device 101 displays the widget 2241 in the expanded state.

In an embodiment, the screen 2207 may be displayed by being overlapped on a screen displayed in the background area 2205 through the states 2251, 2253, 2255, and 2257. The screen 2207 may gradually become clear through the states 2251, 2253, 2255, and 2257, and the screen displayed in the background area 2205 may gradually become faint.

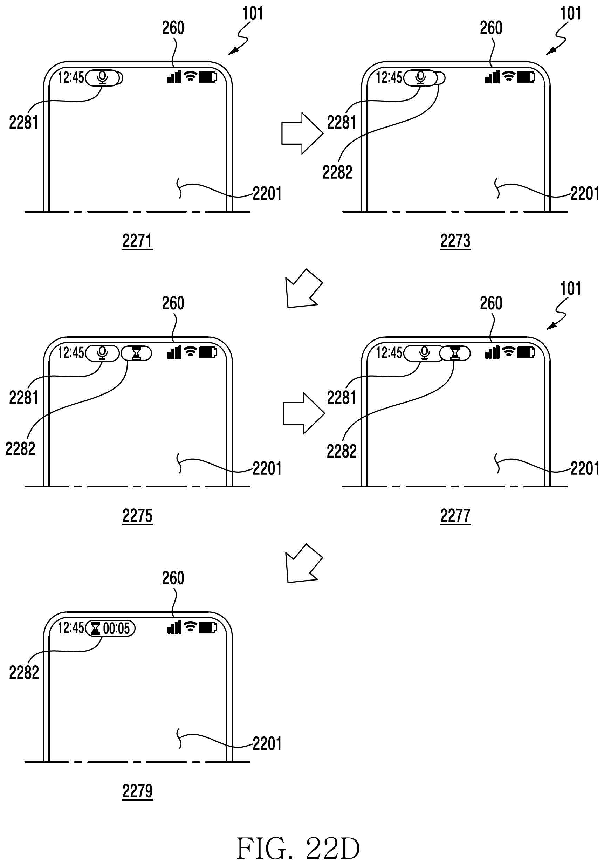

FIG. 22D illustrates an example of a change of a widget for a notification on a screen displayed by an electronic device according to an embodiment.

FIG. 22D may be described with reference to FIG. 1, FIGS. 2A to 2G, FIGS. 14A to 14C, FIG. 15, FIG. 16, FIG. 17, and FIG. 18.

FIG. 22D illustrates states 2271, 2273, 2275, 2277, and 2279 during which a widget displayed in at least one area (e.g., the widget area 1420) among widget areas (e.g., the widget areas 1420, 1421, 1422, and 1423 illustrated in FIG. 14A) is changed.

For example, the state 2271 may illustrate a situation in which the electronic device 101 identifies an event for changing a widget 2281 displayed in the widget area. In the state 2271, the widget 2281 may be displayed at a top (e.g., a notification area 1411) of a background area 2201. In an embodiment, a screen (e.g., a home screen, or a screen of an application, or an apps screen) other than a lock screen may be displayed in the background area 2201.

In an embodiment, in the state 2271, the electronic device 101 may identify information (or a notification) generated by an application being executed (in a background). In an embodiment, the electronic device 101 may change the widget 2281 displayed in the widget area (e.g., the widget area 1420), based on that the notification is identified. In an embodiment, the electronic device 101 may display, in a widget area (e.g., the widget area 1420), a widget 2282 generating the notification. For example, the state 2271 may be a state in which a widget 2281 of a recording application is displayed and overlapped on a widget 2282 of a timer application in the widget area 1420, in a state where the timer application and recording are executed in the background. In the state 2271, when a new notification (or update information) (e.g., a notification indicating that 5 seconds remain from an expiration point) is received from the timer app, the electronic device 101 may display the widget 2282 of the timer application in the widget area 1420 in a state of being overlapped on the widget 2281 of the recording application, through the states 2273 to 2279.

For example, in the states 2273 and 2275, the electronic device 101 may display the widget 2282 such that the widget 2282 generating the notification is exposed behind the widget 2281. For example, in the state 2273, the electronic device 101 may display the widget 2282 by moving the widget 2282 in a specified direction (e.g., a right direction) in a state of being overlapped behind the widget 2281.

For example, in the states 2275 and 2277, the electronic device 101 may display the widget 2282 such that the widget 2282 generating the notification is overlapped in front of the widget 2281. For example, in the state 2277, the electronic device 101 may display the widget 2282 by moving the widget 2282 in a direction (e.g., a left direction) opposite to the specified direction in a state of being overlapped in front of the widget 2281.

For example, the state 2279 may illustrate a situation in which the electronic device 101 displays the widget 2282 instead of the widget 2281 in the widget area 1420. In an embodiment, in the state 2279, the electronic device 101 may display the widget 2282 instead of the widget 2281 in the background area 2201.

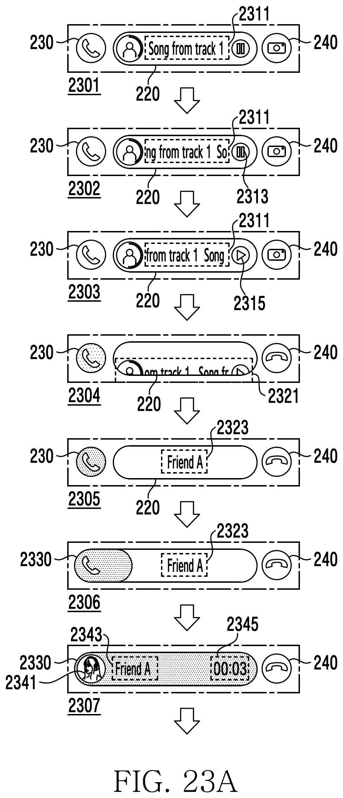

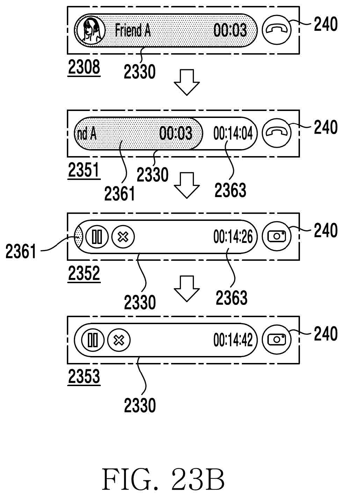

FIG. 23A illustrates an example of a change of a widget on a lock screen of an electronic device according to an embodiment. FIG. 23B illustrates an example of a change of a widget on a lock screen of an electronic device according to an embodiment.

FIGS. 23A and 23B may be described with reference to FIG. 1, FIGS. 2A to 2G, FIG. 5, and FIG. 6.

FIG. 23A illustrates states 2301 to 2305 during which a widget displayed in a widget area 220 is changed according to an event. FIG. 23A illustrates states 2305 to 2307 during which a function associated with the widget displayed in the widget area 220 is controlled. FIG. 23B illustrates states 2308, 2351, 2352, and 2353 during which the widget displayed in the widget area 220 is changed according to the event.

For example, the states 2301 and 2302 may indicate a situation in which the electronic device 101 displays a widget in the widget area 220 in a lock state. The electronic device 101 may display information on contents being played through the widget area 220. Referring to the states 2301 and 2302, as the contents are played, a display of an object 2311 indicating the information of the contents being played may be changed. For example, a name of the contents being played may move in a specified direction (e.g., left) within an area of the object 2311.

For example, the states 2302, 2304, and 2305 may indicate a situation in which the electronic device 101 changes the widget displayed in the widget area 220 as an event is identified in the lock state. In an embodiment, the event may be an event indicating that a call request is received from a phone application.

For example, in the states 2302 and 2303, the electronic device 101 may stop playback of the contents based on the event. For example, the electronic device 101 may change a display of a visual object 2313 associated with the playback of the contents to a visual object 2315 indicating that the playback is stopped, along with stopping the playback of the contents, based on the event.

In an embodiment, the electronic device 101 may display a widget of an application generating the event in the widget area 220, based on the event.

For example, in the states 2303 and 2304, the electronic device 101 may change a visual object displayed in icon areas 230 and 240. For example, the electronic device 101 may display a visual object (e.g., a visual object for approving the call request and a visual object for rejecting the call request) associated with the application generating the event in the icon areas 230 and 240.

For example, in the states 2303, 2304, and 2305, the electronic device 101 may change the widget displayed in the widget area 220. For example, the electronic device 101 may move a widget 2323 associated with the event in a specified direction above a widget 2321 associated with content playback while moving the widget 2321 in a specified direction (e.g., downward).

For example, the states 2305, 2306, 2307, and 2308 may indicate a situation in which the electronic device 101 controls a functional element (e.g., answering a call, hanging up a call) provided by the widget displayed in the widget area 220 in the lock state.

In an embodiment, in the state 2305, the electronic device 101 may obtain an input for approving the call request. For example, the electronic device 101 may obtain an input (e.g., a swipe input, a drag input, a flick input, a pen input, or a slide input) to a first icon area 230 for approving the call request. For example, the input for approving the call request may be an input (e.g., a swipe input, a drag input, a flick input, a pen input, or a slide input) moving in a direction from the first icon area 230 to the widget area 220 (or the second icon area 240).

In an embodiment, in the state 2306, a visual object displayed in the first icon area 230 may be expanded in an input direction within an area 2330 (e.g., the widget area 510 of FIG. 5) including the first icon area 230 and the widget area 220, according to the input for approving the call request.

In an embodiment, in the state 2307, visual objects 2341, 2343, and 2345 may be displayed in the area 2330, according to the input for approving the call request. In an embodiment, the visual object 2341 may be an image of a user who transmitted the call request. The visual object 2343 may be a name indicating the user who transmitted the call request. The visual object 2345 may indicate a connection time of the call.

In an embodiment, in the state 2308, during a call connection (or while a visual object associated with the call is displayed in the area 2330), the electronic device 101 may obtain an input for ending the phone call (e.g., an input to the second icon area 240).

In an embodiment, in states 2351 to 2353, the electronic device 101 may display an activity before the phone call in the area 2330, based on the input for ending the phone call.

For example, in response to the input for ending the phone call, in the states 2351 to 2353, the electronic device 101 may move a visual object 2361 associated with the phone call in a direction toward the first icon area 230. For example, in response to the input for ending the phone call, the electronic device 101 may move the visual object 2361 in the direction toward the first icon area 230 such that the display of the visual object 2361 disappears at the area 2330.

For example, in response to the input for ending the phone call, the electronic device 101 may expand a visual object 2363 associated with the activity before the phone call in a direction from a periphery of the second icon area 240 toward the first icon area 230 such that a display of the visual object 2363 is displayed in the area 2330. For example, when the activity before the phone call is a timer, the electronic device 101 may expand the visual object 2363 of the timer in the direction from the periphery of the second icon area 240 toward the first icon area 230 such that the display of the visual object 2363 of the timer is displayed in the area 2330.

In an embodiment, in the state 2353, the visual object 2363 may be displayed in the area 2330.

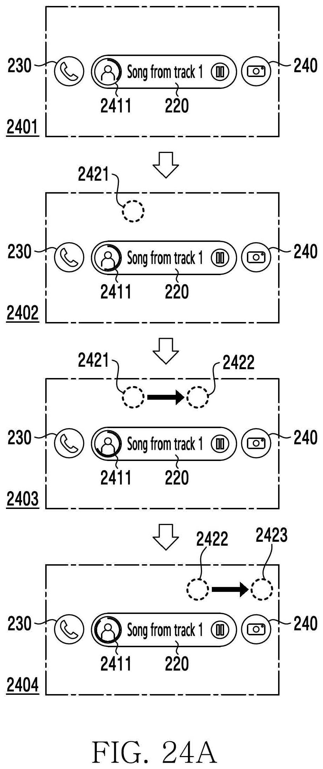

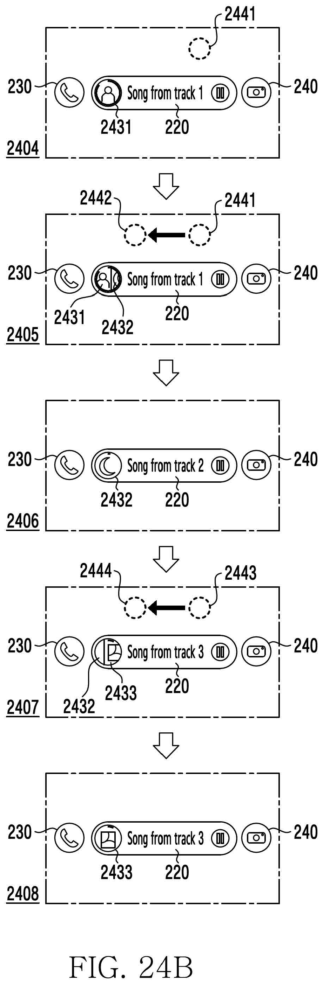

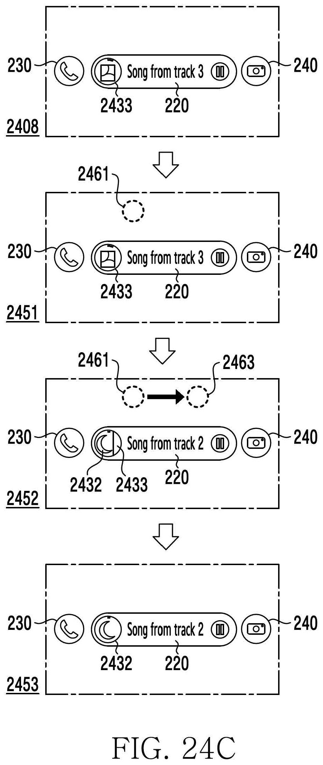

FIG. 24A illustrates an example of a change of a widget according to an input to a widget on a lock screen of an electronic device according to an embodiment. FIG. 24B illustrates an example of a change of a widget according to an input to a widget on a lock screen of an electronic device according to an embodiment. FIG. 24C illustrates an example of a change of a widget according to an input to a widget on a lock screen of an electronic device according to an embodiment.

FIGS. 24A to 24C may be described with reference to FIG. 1, FIGS. 2A to 2G, FIG. 5, and FIG. 6.

FIG. 24A illustrates states 2401 to 2404 for controlling playback of contents through an input outside the widget area 220. FIG. 24B illustrates states 2404-1 to 2408 for changing contents being played through an input outside the widget area 220. FIG. 24C illustrates states 2408, 2451, 2452, and 2453 for changing contents being played through an input outside the widget area 220.

Referring to FIG. 24A, in the state 2401, the electronic device 101 may play contents (e.g., music). For example, while playing the contents, the electronic device 101 may display an object associated with the contents in the widget area 220. For example, the object associated with the contents may indicate a name, an icon, and/or a playback point of the contents. For example, an object 2411 indicating the playback point may be displayed in the widget area 220.

In the states 2401 to 2404, the electronic device 101 may obtain inputs 2421, 2422, and 2423 for controlling the playback of the contents. In an embodiment, the inputs may be continuous inputs (e.g., drag input or swipe input). In an embodiment, the inputs 2421, 2422, and 2423 may be input at a location out of the widget area 220.

In an embodiment, the electronic device 101 may change the playback point of the contents according to a movement distance of the inputs 2421, 2422, and 2423. For example, the electronic device 101 may change the playback point of the contents to be more forward based on that the input is moved from left to right. For example, the electronic device 101 may change the playback point of the contents to be more backward based on that the input is moved from right to left.

In an embodiment, the electronic device 101 may change a display of the object 2411 indicating the playback point as the playback point of the contents is changed. For example, the electronic device 101 may change the display of the object 2411 such that a bar representing a progress state in the object 2411 is changed according to the playback point of the contents.

Referring to FIGS. 24B and 24C, while playing the contents (e.g., music), the electronic device 101 may obtain inputs 2441, 2442, 2443, 2444, 2461, and 2463 for controlling the playback of the contents. In an embodiment, the inputs 2441 and 2442, the inputs 2443 and 2444, or the inputs 2461 and 2463 may be continuous inputs (e.g., drag input or swipe input). In an embodiment, the inputs 2441, 2442, 2443, 2444, 2461, and 2463 may be input at a location out of the widget area 220.

In an embodiment, the electronic device 101 may change the contents to be played, according to a movement direction of the inputs 2441, 2442, 2443, 2444, 2461, and 2463. For example, the electronic device 101 may change the contents to be played to next contents, based on that the inputs 2441 and 2442 or the inputs 2443 and 2444 are moved from left to right. For example, the electronic device 101 may change the contents to be played to previous contents, based on that the inputs 2461 and 2463 are moved from right to left.

In an embodiment, the electronic device 101 may change an icon to be displayed in an area where an icon of the contents is displayed, according to an input for changing the contents to be played. For example, in a direction of the inputs 2441 and 2442, a display of an icon 2431 may disappear and a display of an icon 2432 may be generated. For example, in a direction of the inputs 2443 and 2444, the display of the icon 2432 may disappear and a display of an icon 2433 may be generated. For example, in a direction of the inputs 2461 and 2463, the display of the icon 2433 may disappear and the display of the icon 2432 may be generated.

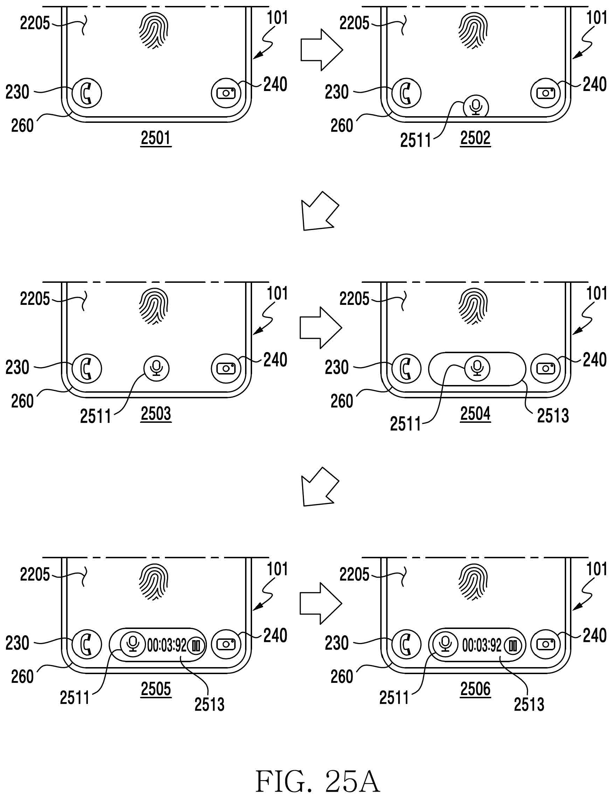

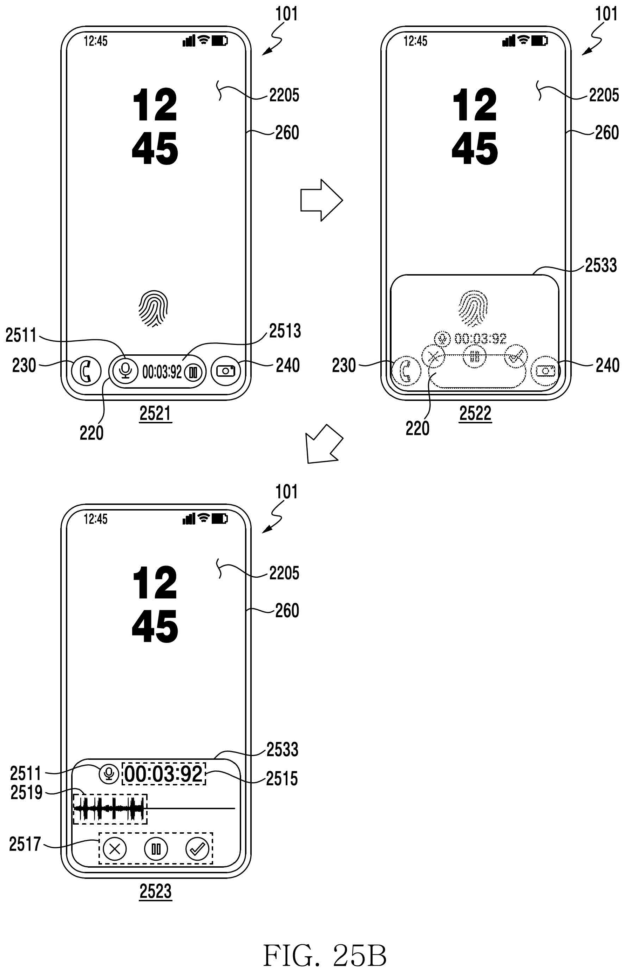

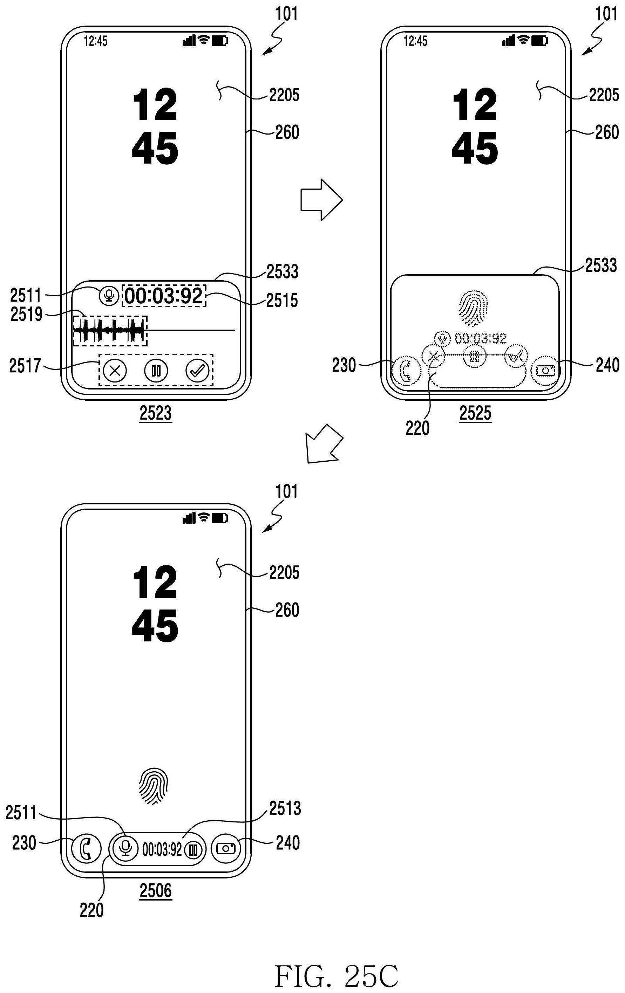

FIG. 25A illustrates an example of a change of a widget on a lock screen of an electronic device according to an embodiment. FIG. 25B illustrates an example of a change of a widget on a lock screen of an electronic device according to an embodiment. FIG. 25C illustrates an example of a change of a widget on a lock screen of an electronic device according to an embodiment.

FIGS. 25A to 25C may be described with reference to FIG. 1, FIGS. 2A to 2G, and FIG. 4.

FIG. 25A illustrates states 2501 to 2506 of a process in which a widget is displayed in a widget area 220. FIG. 25B illustrates states 2521 to 2523 in which the widget displayed in the widget area 220 is expanded. FIG. 25C illustrates states 2523, 2525, and 2506 in which the expanded widget is reduced to be displayed in the widget area 220.

Referring to FIG. 25A, the electronic device 101 may display a widget in the widget area 220, based on an input. In an embodiment, the input may be an input for calling an application (or requesting execution of the application) during a lock state.

Referring to the states 2501 to 2506, the electronic device 101 may display an icon 2511 corresponding to an input to be moved from a specified location (e.g., a bottom side) (e.g., between a first icon area 230 and a second icon area 240) of the display 260 in a specified direction (e.g., an upward direction). In an embodiment, the icon 2511 may be an icon of the application called according to the input.

In an embodiment, in the states 2503 to 2506, the electronic device 101 may display a widget 2513 in the widget area 220 of a background area 2205 around the icon 2511, based on that the icon 2511 moves at the specified location in the specified direction. In an embodiment, while displaying the widget 2513 in the widget area 220, the electronic device 101 may adjust a location of objects (e.g., the icon 2511, an object for controlling a function, and an object for providing information associated with the function) to be displayed with the widget 2513.

Referring to FIG. 25B, the electronic device 101 may expand the widget 2513 displayed in the widget area 220, based on an input to the widget area 220. In an embodiment, the input may be a tap input (or a double tap input) (or a press input) (or a long press input) to the widget area 220.

In an embodiment, the electronic device 101 may display an expanded widget 2533 corresponding to the widget 2513 in an expanded area (e.g., the widget area 420 of FIG. 4), based on the input to the widget area 220.

In order to display the expanded widget 2533 in the expanded area (e.g., the widget area 420 of FIG. 4), in the states 2521, 2522, and 2523, the electronic device 101 may change a location and/or display of objects (e.g., the icon 2511, an object for controlling a function, and an object for providing information associated with the function) displayed in the widget 2513.

For example, referring to the state 2523, the electronic device 101 may display objects 2515 and 2519 for providing information associated with the function in the expanded area, in a changed location and/or a changed shape. For example, referring to the state 2523, the electronic device 101 may change the display of an object 2517 for controlling a function to further include additional control elements for controlling the function in the expanded area.

In an embodiment, in states 2523, 2525, and 2506, the display of some objects 2511, 2515, 2517, and 2519 among objects included in the widget 2513 may be changed. For example, in the states 2523, 2525, and 2506, movement directions and/or movement speeds of the objects 2511, 2515, 2517, and 2519 may be different from each other. In an embodiment, in the states 2523, 2525, and 2506, the display of remaining some objects among the objects included in the widget 2513 may gradually become faint along with a screen displayed in the background area 2205.

In an embodiment, an expanded widget 2533 may be displayed by being overlapped on a screen displayed in the background area 2205 through the states 2523, 2525, and 2506. The expanded widget 2533 may gradually become clear through the states 2523, 2525, and 2506, and an area in which the expanded widget 2533 is overlapped among the screen displayed in the background area 2205 may gradually become faint.

Referring to FIG. 25C, the electronic device 101 may change a location and/or a display of the widget to display the expanded widget 2533 in the widget area 220, based on an input out of the expanded widget 2533.

For example, the states 2523, 2525, and 2506 may be reverse processes of a process of expanding the widget displayed in the widget area 220.

In an embodiment, the expanded widget 2533 may gradually become faint through the states 2523, 2525, and 2506, and the area in which the expanded widget 2533 is overlapped among the screen displayed in the background area 2205 may gradually become clear.

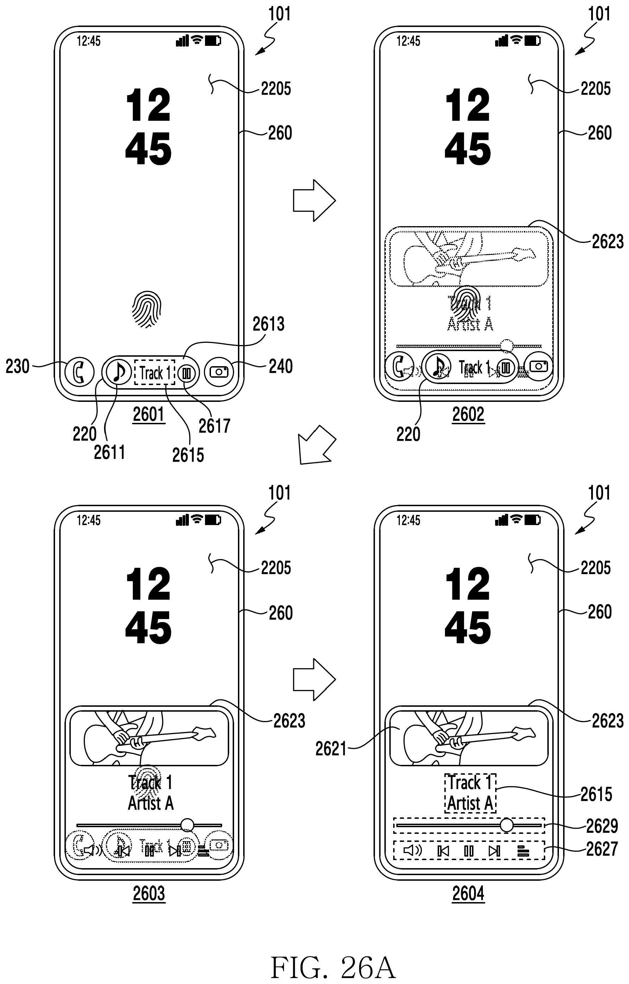

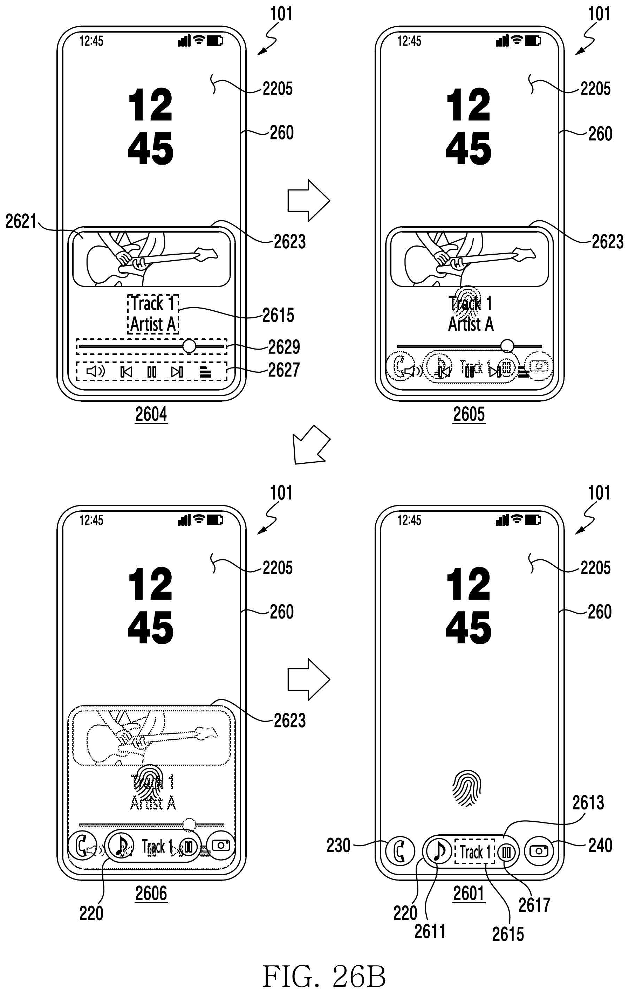

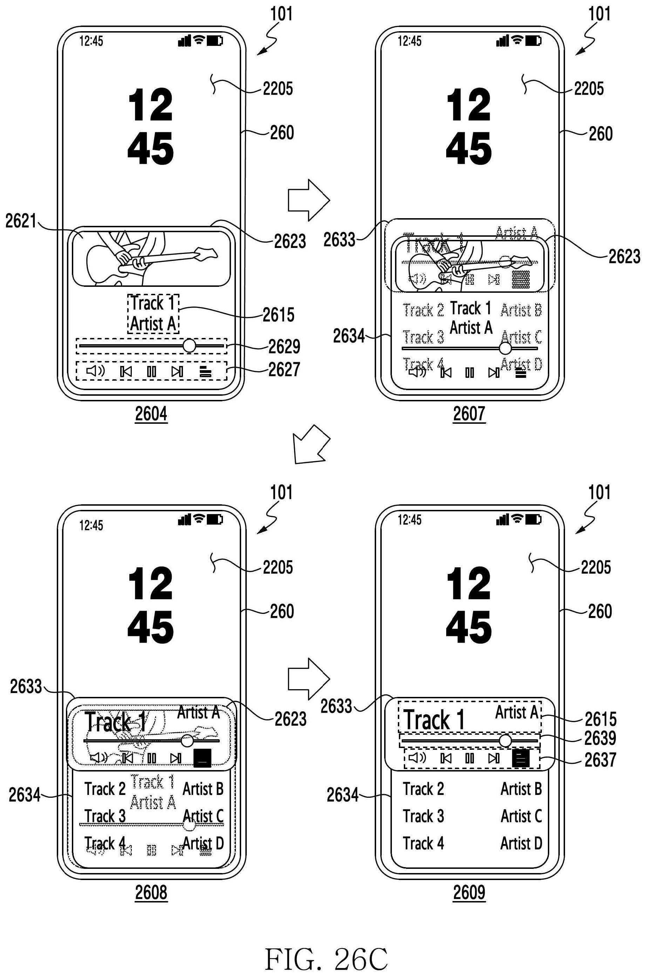

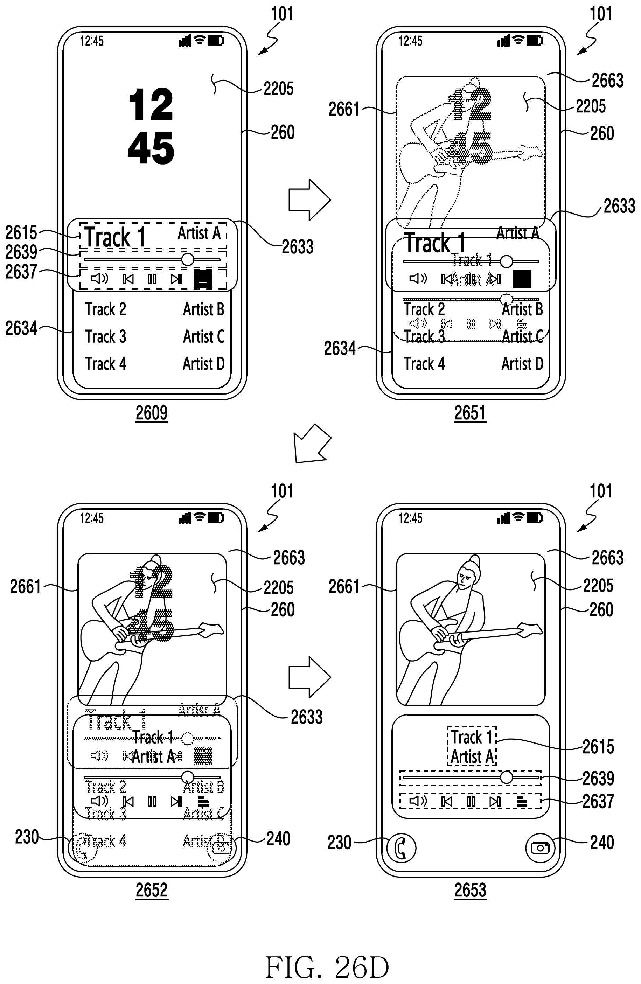

FIG. 26A illustrates an example of a change of a widget on a lock screen of an electronic device according to an embodiment. FIG. 26B illustrates an example of a change of a widget on a lock screen of an electronic device according to an embodiment. FIG. 26C illustrates an example of a change of a widget on a lock screen of an electronic device according to an embodiment. FIG. 26D illustrates an example of a change of a widget on a lock screen of an electronic device according to an embodiment.

FIGS. 26A to 26D may be described with reference to FIG. 1, FIGS. 2A to 2G, and FIG. 4.

FIG. 26A illustrates states 2601 to 2604 in which a widget displayed in the widget area 220 is expanded. FIG. 26B illustrates states 2604, 2605, 2606, and 2601 in which the expanded widget is reduced to be displayed in the widget area 220. FIG. 26C illustrates states 2604, 2607, 2608, and 2609 in which a display of the expanded widget is changed. FIG. 26D illustrates states 2609, 2651, 2652, and 2653 in which the expanded widget is further expanded.

Referring to FIG. 26A, in the state 2601, the electronic device 101 may obtain an input to the widget area 220. For example, the electronic device 101 may obtain an input for expanding a widget 2613 displayed in the widget area 220. In an embodiment, the input may be a tap input (or a double tap input) (or a press input) (or a long press input) to the widget area 220.

In an embodiment, the electronic device 101 may display an expanded widget 2623 corresponding to the widget 2613 in an expanded area (e.g., the widget area 420 of FIG. 4), based on the input to the widget area 220.

In order to display the expanded widget 2623 in an expanded area (e.g., the widget area 420 of FIG. 4), in the states 2601, 2602, 2603, and 2604, the electronic device 101 may change a locations and/or a display of objects (e.g., an icon 2611, an object 2617 for controlling a function, and an object 2615 for providing information associated with the function) displayed in the widget 2613.

For example, referring to the state 2604, the electronic device 101 may display an object 2621 corresponding to the icon 2611 on the background area 2205. In an embodiment, the object 2621 may be displayed by being expanded from the icon 2611, through the states 2601, 2602, 2603, and 2604.

For example, referring to the state 2604, the electronic device 101 may display the object 2615 for providing the information associated with the function, in a changed location and/or a changed shape in the expanded area. In an embodiment, the object 2615 may be displayed by being expanded through the states 2601, 2602, 2603, and 2604.

For example, referring to the state 2604, the electronic device 101 may display objects 2627 corresponding to the object 2617 for controlling the function, on the background area 2205. In an embodiment, the objects 2627 may be displayed by further adding objects for controlling the function through the states 2601, 2602, 2603, and 2604.

For example, referring to the state 2604, the electronic device 101 may further display an object 2629 for indicating a playback point of contents, on the background area 2205.

In an embodiment, in states 2601, 2602, 2603, and 2604, the display of some objects 2611, 2615, and 2617 among objects included in the widget 2613 may be changed. For example, in the states 2601, 2602, 2603, and 2604, movement directions and/or movement speeds of the objects 2611, 2615, and 2617 may be different from each other. In an embodiment, in the states 2601, 2602, 2603, and 2604, the display of remaining some objects among the objects included in the widget 2613 may gradually become faint along with a screen displayed in the background area 2205.

In an embodiment, the expanded widget 2623 may be displayed by being overlapped on a screen displayed in the background area 2205 through the states 2601, 2602, 2603, and 2604. The expanded widget 2623 may gradually become clear through the states 2601, 2602, 2603, and 2604, and an area in which the expanded widget 2623 is overlapped among the screen displayed in the background area 2205 may gradually become faint.

Referring to FIG. 26B, states 2604, 2605, 2606, and 2601 may be reverse processes of a process of expanding the widget displayed in the widget area 220.

In an embodiment, the expanded widget 2623 may gradually become faint through the states 2604, 2605, 2606, and 2601, and the area in which the expanded widget 2623 is overlapped among the screen displayed in the background area 2205 may gradually become clear.

Referring to FIG. 26C, states 2604, 2607, 2608, and 2609 may be processes of changing information displayed by the expanded widget 2623.

For example, in the state 2604, the electronic device 101 may obtain an input to the expanded widget 2623. For example, the electronic device 101 may obtain an input for changing information displayed on the expanded widget 2623. In an embodiment, the input may be a tap input (or a double tap input) (or a press input) (or a long press input) to the expanded widget 2623.

In an embodiment, the electronic device 101 may change the information displayed on the expanded widget 2623, based on the input to the expanded widget 2623.

For example, through the states 2604, 2607, 2608, and 2609, the electronic device 101 may change a location and/or a display of objects (e.g., the icon 2621, the object 2627 for controlling a function, and the objects 2615 and 2629 for providing information associated with the function) displayed on the expanded widget 2623.

For example, through the states 2604, 2607, 2608, and 2609, the electronic device 101 may gradually display the icon 2621 faintly on the background area 2205. In an embodiment, through the states 2604, 2607, 2608, and 2609, the electronic device 101 may move objects 2615, 2639, and 2637 corresponding to the object 2627 for controlling the function and the objects 2615 and 2629 for providing the information associated with the function to a location where the icon 2621 is displayed.

For example, through the states 2604, 2607, 2608, and 2609, the electronic device 101 may display an object 2634 indicating new information in an area where the objects 2615, 2629, and 2627 are displayed.

Referring to FIG. 26D, in the state 2609, the electronic device 101 may obtain an input to an expanded widget 2633. For example, the electronic device 101 may obtain an input for expanding the expanded widget 2633. In an embodiment, the input may be a tap input (or a double tap input) (or a press input) (or a long press input) to the expanded widget 2633.

In an embodiment, the electronic device 101 may display an expanded widget 2663 in an expanded area (e.g., the widget area 430 of FIG. 4) based on the input to the expanded widget 2633.

In order to display the expanded widget 2663 in the expanded area (e.g., the widget area 420 of FIG. 4), in states 2609, 2651, 2652, and 2653, the electronic device 101 may change a location and/or a display of objects (e.g., the object 2637 for controlling a function and the objects 2615 and 2639 for providing information associated with the function) displayed on the expanded widget 2633.

For example, referring to the state 2653, the electronic device 101 may display an object 2661 corresponding to an icon 2611 on the expanded widget 2663. In an embodiment, the object 2661 may be displayed by becoming clear through the states 2609, 2651, 2652, and 2653.

For example, referring to the state 2653, the electronic device 101 may display the objects 2615, 2639, and 2637 in a changed location and/or a changed shape, on the expanded widget 2663. In an embodiment, the objects 2615, 2639, and 2637 may be displayed at the location displayed in the state 2604, through the states 2609, 2651, 2652, and 2653.

For example, referring to the state 2653, the electronic device 101 may display icons in the icon areas 230 and 240, on the background area 2205.

When a display location and/or a size (or shape) of the objects described with reference to FIGS. 26A to 26D are not changed, the objects may gradually become faint or be clearly displayed through the states.

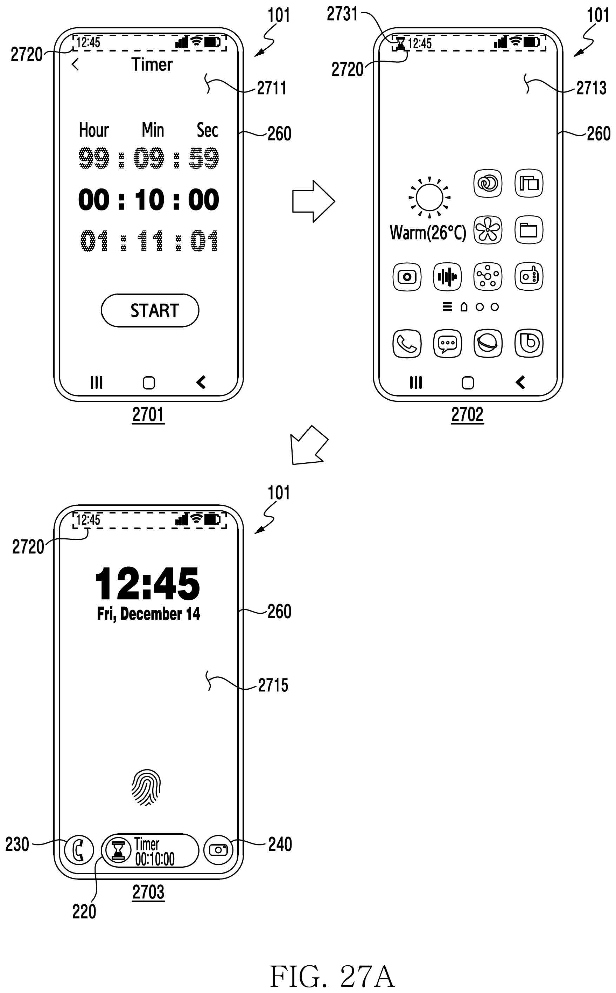

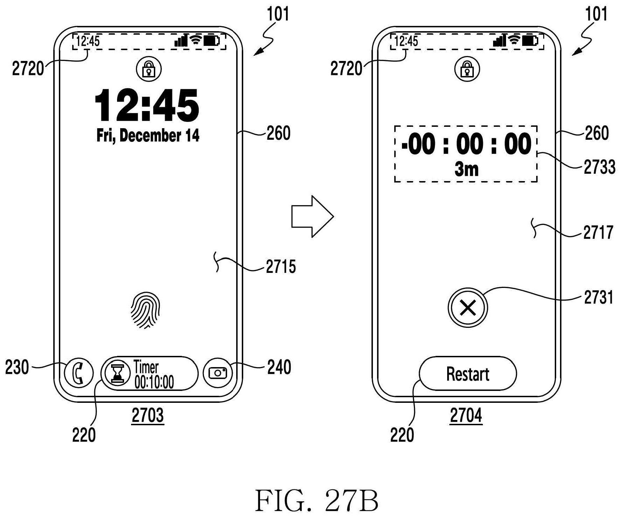

FIG. 27A illustrates an example of a change of a widget while changing from a screen of an application to a lock screen according to an embodiment. FIG. 27B illustrates an example of a change of a widget on a lock screen according to an embodiment.

FIGS. 27A and 27B may be described with reference to FIG. 1, FIGS. 2A to 2G, and FIGS. 14A to 14C.

FIG. 27A illustrates states 2701 to 2703 in which a display of a widget is changed according to a screen transition. FIG. 27B illustrates states 2703 and 2704 in which the display of the widget is changed as a function is executed.

Referring to FIG. 27A, in the state 2701, the electronic device 101 may display a screen 2711 indicating that an application (e.g., a timer) is being executed in an unlocked state. In the state 2701, the electronic device 101 may obtain an input (e.g., a touch input to a home button or a swipe input on the screen) for reducing the screen 2711. In an embodiment, the electronic device 101 may display a screen (or a home screen) including a background area 2713 and a notification area 2720, based on the input for reducing the screen 2711. In an embodiment, the electronic device 101 may display a widget 2731 indicating an application (e.g., the timer) being executed in the notification area 2720, based on the input for reducing the screen 2711.

In an embodiment, in the states 2701 and 2702, the electronic device 101 may be changed to a lock state. For example, in the states 2701 and 2702, the electronic device 101 may be changed to the lock state, based on a user input requesting the lock state.

Based on being changed from the unlocked states 2701 and 2702 to the lock state, the electronic device 101 may display a lock screen in the lock state, in the state 2703. For example, the electronic device 101 may display the lock screen 2715 including the notification area 2720, icon areas 230 and 240, and the widget area 220. In an embodiment, the electronic device 101 may display, in the widget area 220, the widget 2731 displayed in the notification area 2720 in the unlocked state.

In an embodiment, information of an application (e.g., the timer) being executed displayed in the widget area 220 may be more than information displayed through the widget 2731 of the notification area 2720.

Based on that the application being executed in the state 2703 generates an event (e.g., time expiration), the electronic device 101 may display a screen 2717 including one or more visual objects 2731 and 2733 in the lock state in the state 2704. For example, the electronic device 101 may display a visual object 2733 indicating information associated with the event and a visual object 2731 for returning to a previous screen, based on the event (e.g., the time expiration) of the application being executed. For example, based on displaying the screen 2717 of the application being executed, the electronic device 101 may display, in the widget area 220, a visual object (e.g., restart) indicating a function of the application being executed.

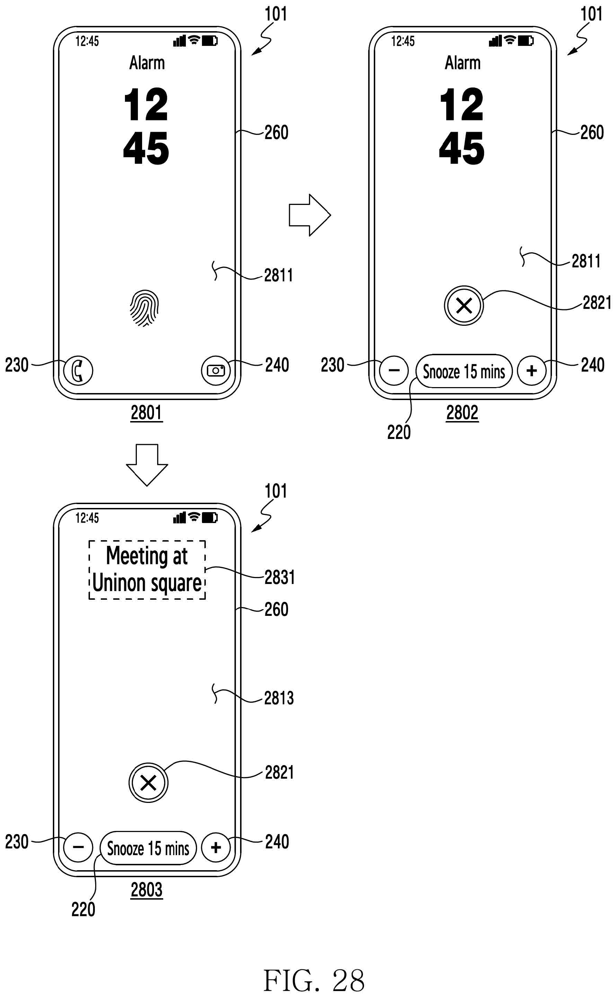

FIG. 28 illustrates an example of a situation in which a widget is displayed for a notification on a lock screen according to an embodiment.

FIG. 28 may be described with reference to FIG. 1 and FIGS. 2A to 2G.

FIG. 28 illustrates states 2801 to 2803 in which an object associated with a widget is displayed according to an event.

In the state 2801, the electronic device 101 may identify an input for an alarm setting in a lock state in which a lock screen 2811 is displayed.

In an embodiment, based on identifying the input for the alarm setting, the electronic device 101 may display visual objects associated with the alarm setting in the lock state. For example, in the states 2802 and 2803, the electronic device 101 may change visual objects displayed in icon areas 230 and 240 to visual objects of an application associated with setting an alarm time. For example, the electronic device 101 may change a visual object associated with a phone in a first icon area 230 to a visual object for decreasing the alarm time. For example, the electronic device 101 may change a visual object associated with a camera in a second icon area 240 to a visual object for increasing the alarm time.

In an embodiment, in the states 2802 and 2803, based on identifying the input for the alarm setting, the electronic device 101 may display a visual object 2821 for ending the alarm setting on the lock screen 2811.

In an embodiment, in the states 2802 and 2803, based on identifying the input for the alarm setting, the electronic device 101 may display a widget indicating the alarm time in the widget area 220 on the lock screen 2811.

In an embodiment, in the state 2803, the electronic device 101 may display a visual object 2831 for displaying a name of an alarm in a partial area 2831 of a lock screen 2813.

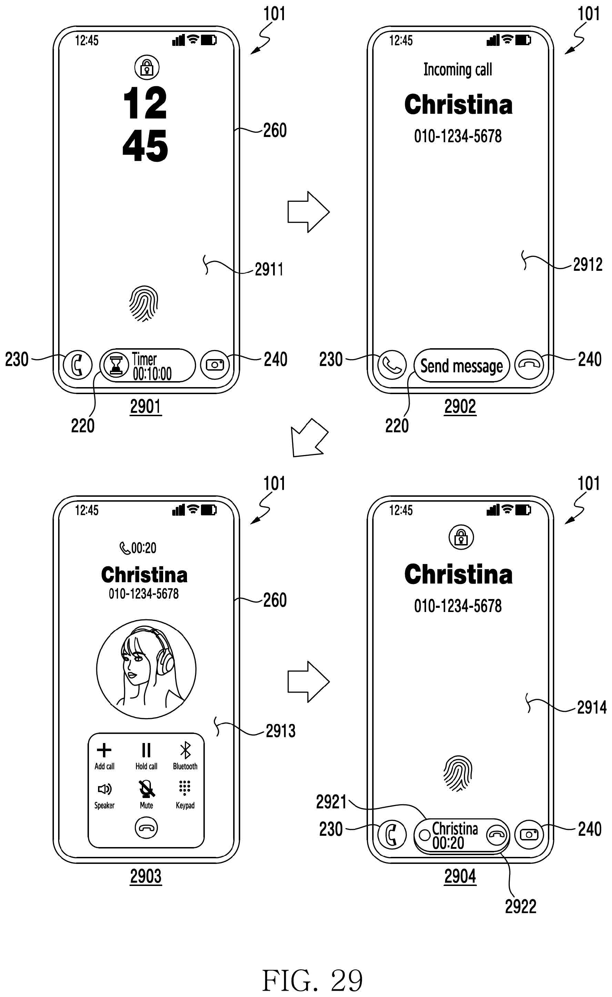

FIG. 29 illustrates an example of a change of a widget on a lock screen according to an embodiment.

FIG. 29 may be described with reference to FIG. 1, FIGS. 2A to 2G, and FIG. 6. Compared to FIG. 6, a visual object displayed on the display 260 in FIG. 29 may be partially different. For example, in FIG. 29, the electronic device 101 may display a visual object associated with a phone call in the widget area 220 and icon areas 230 and 240, in a state where the widget area 220 and the icon areas 230 and 240 are separated.

Referring to FIG. 29, in a state 2901, the electronic device 101 may display a lock screen 2911 in a lock state. In the state 2901, the electronic device 101 may identify an event indicating that a call request is received from a phone application. In a state 2902, the electronic device 101 may display a widget providing a function for sending a message to a user who requested the phone call in the widget area 220. In the state 2902, the electronic device 101 may display a visual object for approving the call request in a first icon area 230. In the state 2902, the electronic device 101 may display a visual object for rejecting the call request in a second icon area 240.

In an embodiment, in the state 2902, the electronic device 101 may obtain an input to the first icon area 230 for approving the call request.

In an embodiment, in a state 2903, the electronic device 101 may display a screen 2913 indicating a call state (or that a call is in progress) in the lock state, based on the input for approving the call request.

In an embodiment, in the state 2903, the electronic device 101 may obtain an input (e.g., a touch input to a home button) for reducing the screen indicating a call state (or that a call is in progress). In an embodiment, the electronic device 101 may display a lock screen 2914 including the first icon area 230, the second icon area 240, and a widget 2921, based on the input for reducing the screen (e.g., the touch input to the home button).

Referring to FIG. 29, while the lock screen 2914 is displayed, icons before the call request is received may be displayed in the first icon area 230 and the second icon area 240. The widget 2921 displayed in the widget area 220 of the lock screen 2914 may include an icon for ending the phone call. Below the widget area 220 of the lock screen 2914, a widget 2922 of another application distinct from the phone may be displayed in a state of being overlapped behind the widget 2921.

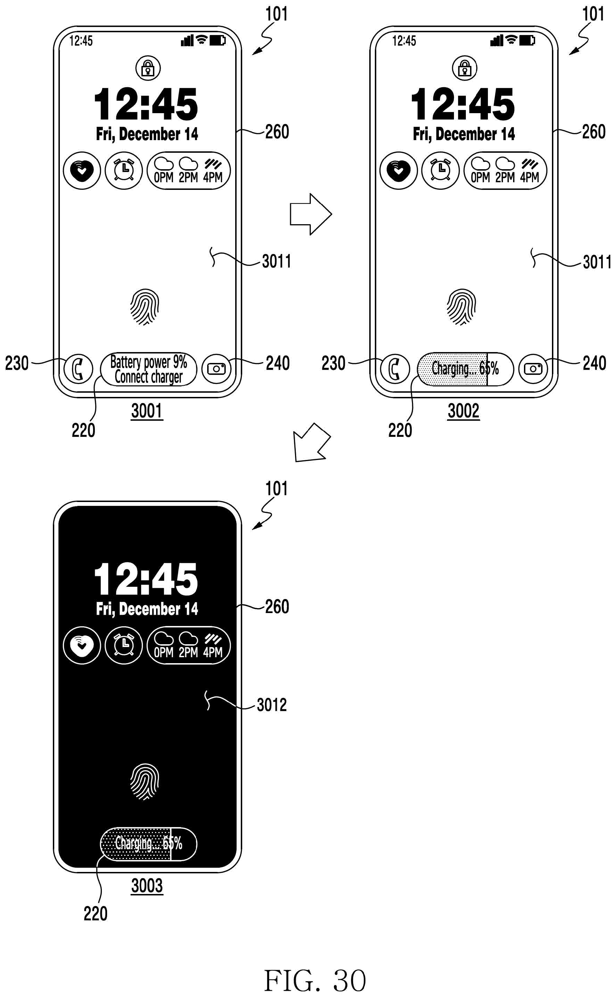

FIG. 30 illustrates an example of a widget displayed according to charging of an electronic device according to an embodiment.

FIG. 30 may be described with reference to FIG. 1, FIGS. 2A to 2G, and FIG. 5.

FIG. 30 illustrates states 3001 to 3003 in which a display of a widget is changed according to a connection with an external electronic device.

The states 3001, 3002, and 3003 of FIG. 30 may illustrate situations in which information associated with a battery is displayed in the widget area 220.

Referring to the state 3001 of FIG. 30, the electronic device 101 may provide the information associated with the battery in the widget area 220 of a lock screen 3011, in a lock state. In an embodiment, the electronic device 101 may provide the information associated with the battery in the widget area 220, when a charged amount of the battery is less than or equal to a specified charged amount.

Referring to the state 3002 of FIG. 30, the electronic device 101 may provide information associated with charging of the battery in the widget area 220 of the lock screen 3011 in the lock state. For example, the electronic device 101 may provide the information associated with the charging of the battery in the widget area 220, based on that power for charging the battery is obtained from the outside.

Referring to the state 3003 of FIG. 30, in an always on display (AoD) state, the electronic device 101 may provide the information associated with the charging of the battery in the widget area 220 of an AoD screen 3012. For example, the electronic device 101 may provide the information associated with the charging of the battery in the widget area 220, based on that the power for charging the battery is obtained from the outside.

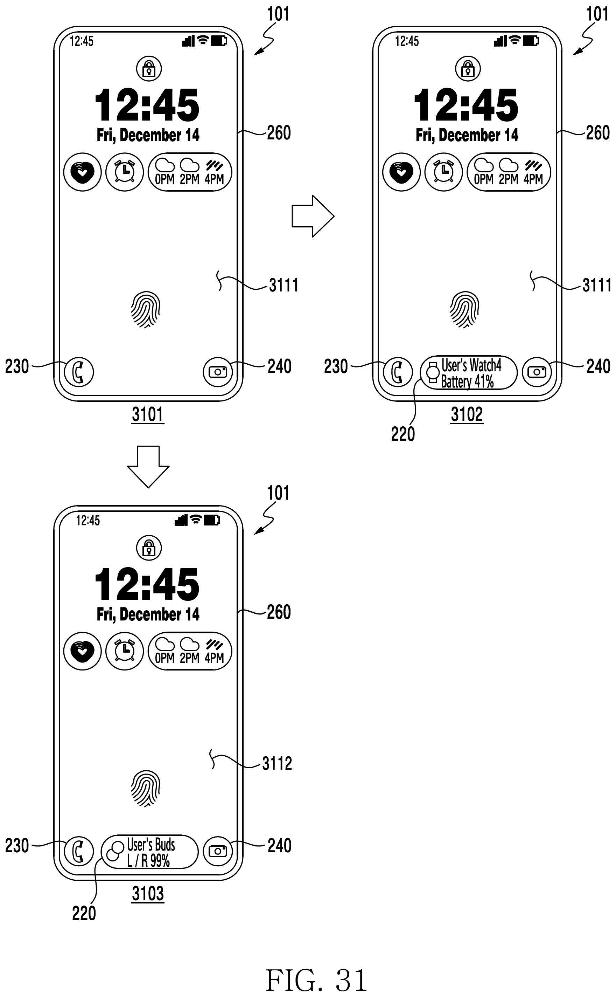

FIG. 31 illustrates an example of a widget displayed according to a connection between an electronic device and another electronic device according to an embodiment.

FIG. 31 may be described with reference to FIG. 1, FIGS. 2A to 2G, and FIG. 5.

FIG. 31 illustrates states 3101 to 3103 in which a display of a widget is changed according to a connection with an external electronic device.

Referring to the state 3101 of FIG. 31, the electronic device 101 may identify that the electronic device 101 is connected to an external electronic device in a lock state. For example, the connection with the external electronic device may be a wired connection and/or a wireless connection.

Referring to the state 3102 of FIG. 31, the electronic device 101 may provide information (e.g., battery information) of a connected external electronic device (e.g., a smart watch) in a widget area 220 of a lock screen 3111, in the lock state. Referring to the state 3103 of FIG. 31, the electronic device 101 may provide information (e.g., battery information) of a connected external electronic device (e.g., wireless earphones) in a widget area 220 of a lock screen 3112 in the lock state. However, it is not limited thereto. For example, the electronic device 101 may display a visual object for controlling an external electronic device (e.g., the smart watch and/or the wireless earphones) through the widget area 220.

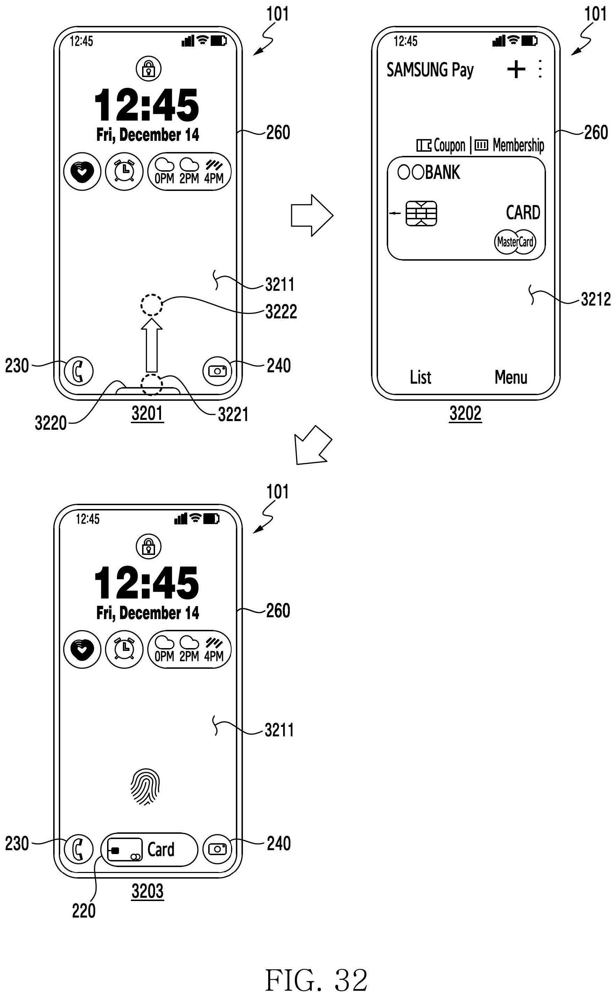

FIG. 32 illustrates an example of a widget for payment in an electronic device according to an embodiment.

FIG. 32 may be described with reference to FIG. 1, FIGS. 2A to 2G, and FIG. 5.

FIG. 32 illustrates states 3201 to 3203 in which a display of a widget is changed as a specified function is executed in a lock state.

In an embodiment, in the state 3201, the electronic device 101 may obtain inputs 3221 and 3222 to an indicator 3220 (or a hint) displayed on a lock screen 3211 in the lock state. For example, the inputs 3221 and 3222 may be a swipe input (or a drag input) to the indicator 3220.

In an embodiment, the electronic device 101 may update a screen displayed through the display 260, based on the input to the indicator 3220. For example, the electronic device 101 may display a screen 3212 of an application (e.g., a payment application) corresponding to the indicator 3220 in the lock state. In an embodiment, a visual object indicating a card for payment may be displayed on the screen 3212. In an embodiment, the electronic device 101 may change the visual object indicating the card for payment through the screen 3212 (or based on an input (e.g., a swipe input) to the screen 3212).

In an embodiment, in the state 3202, while displaying the screen 3212, the electronic device 101 may broadcast a signal for payment through a communication circuit, based on that user authentication (e.g., authentication through fingerprint recognition) for payment is completed.

In an embodiment, in the state 3203, based on that the user authentication for payment is completed (or based on that the payment is completed), the electronic device 101 may display information associated with the payment application in the widget area 220 of the lock screen 3211. For example, the information associated with the payment application may include a visual object for the card for payment. However, it is not limited thereto. In the state 3202 of displaying the screen 3212, the electronic device 101 may identify an input (e.g., a touch input to a home button or a swipe input on a screen) for reducing the screen 3212, before the user authentication for payment is completed (or before an input for authentication is obtained). Based on the input for reducing the screen 3212, in the state 3203, the electronic device 101 may display the information associated with the payment application in the widget area 220 of the lock screen 3211, before the user authentication for payment is completed (or before the input for authentication is obtained). In this case, as the user authentication for payment is completed (based on obtaining the input for authentication), while the information associated with the payment application is displayed in the widget area 220, the electronic device 101 may broadcast the signal for the payment through the communication circuit.

In FIG. 32, the states 3201, 3202, and 3203 are illustrated as being sequentially changed, but this is only an example. In an embodiment, in the state 3201, the electronic device 101 may display the lock screen 3211 including the widget area 220 of the state 3203, based on the input to the indicator 3220. In an embodiment, based on that the user authentication for payment is completed (or based on that the payment is completed), while the lock screen 3211 including the widget area 220 of the state 3203 is displayed, the electronic device 101 may broadcast the signal for the payment through the communication circuit.

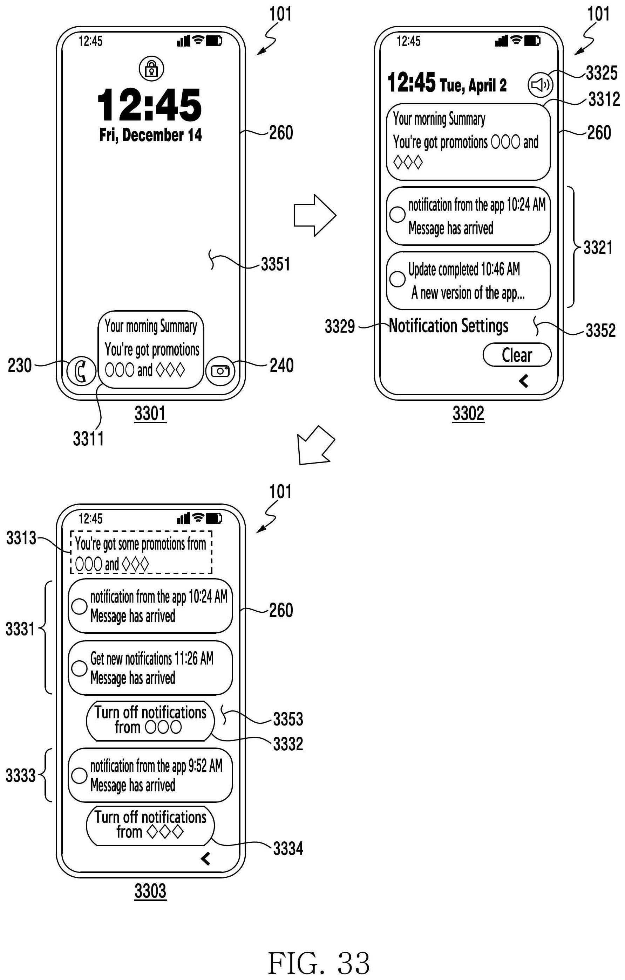

FIG. 33 illustrates an example of a screen for providing a notification in an electronic device according to an embodiment.

FIG. 33 may be described with reference to FIG. 1, FIGS. 2A to 2G, and FIG. 18.

FIG. 33 illustrates states 3301 to 3303 in which a display of a widget is changed to provide a summary.

In an embodiment, in the state 3301, the electronic device 101 may display a notification 3311 generated from an application in a widget area expanded in a specified direction (e.g., upward) from the widget area 220. However, it is not limited thereto. For example, the notification 3311 may be displayed in the widget area 220.

In the state 3301, the electronic device 101 may obtain an input for expanding the notification 3311. In an embodiment, the input may be a press input for selecting the notification 3311. However, it is not limited thereto. For example, the input may include a swipe input starting from the notification 3311.

In an embodiment, based on the input for expanding the notification 3311, in the state 3302, the electronic device 101 may display a screen 3352 including a list 3312 of applications generating one or more notifications, a list 3321 of notifications, a visual object 3325 for selecting a method of providing notifications, and a visual object 3329 for setting a notification on a display 260 in a lock state. In an embodiment, based on an input to the visual object 3325, the electronic device 101 may output the notifications by voice.

In an embodiment, the electronic device 101 may display a screen 3353 displaying lists 3331 and 3333 of notifications for each application, according to a notification setting through the visual object 3329 for setting a notification. For example, on the screen 3353, a list 3313 of applications generating one or more notifications and items 3332 and 3334 for controlling whether to set a notification of an application for each application may be displayed.

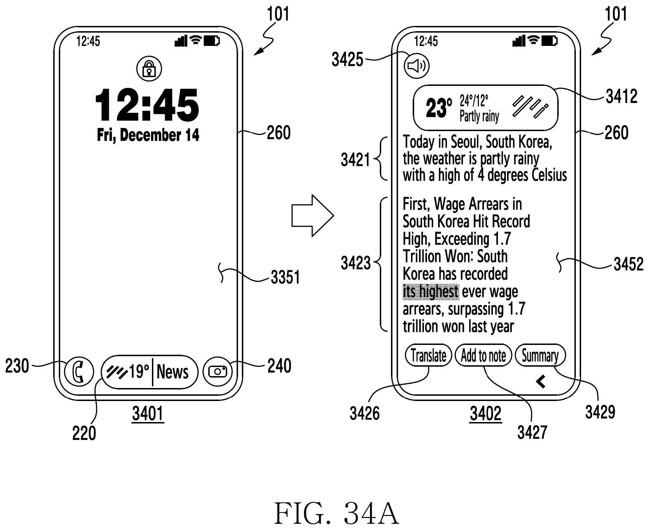

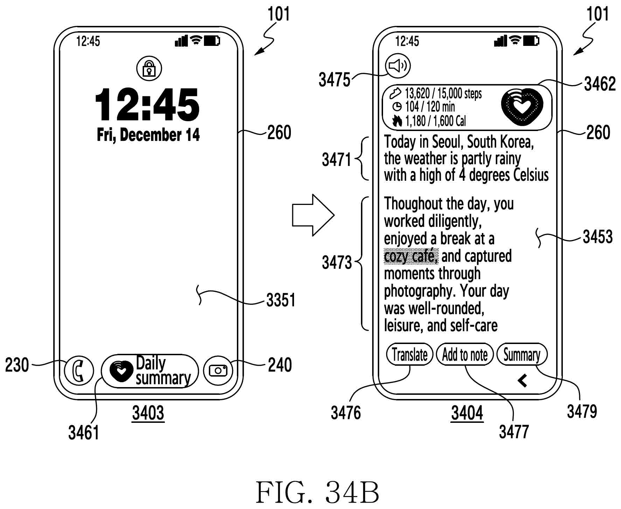

FIG. 34A illustrates an example of a screen for providing a notification in an electronic device according to an embodiment. FIG. 34B illustrates an example of a screen for providing a notification in an electronic device according to an embodiment.

FIGS. 34A and 34B may be described with reference to FIG. 1, FIGS. 2A to 2G, and FIG. 18.

FIGS. 34A and 34B illustrate states 3401, 3402, 3403, and 3404 in which a display of a widget is changed to provide more information.

In an embodiment, in the state 3401, the electronic device 101 may display a widget including information generated from a weather and/or news application in a widget area 220 of a lock screen 3351.

In the state 3401, the electronic device 101 may obtain an input for expanding a widget. In an embodiment, the input may be a press input for selecting the widget. However, it is not limited thereto. For example, the input may include a swipe input starting from the widget.

In an embodiment, based on the input for expanding the widget, in the state 3402, the electronic device 101 may display a screen 3452 including objects 3412 and 3421 indicating weather information, and/or an object 3423 indicating news information, a visual object 3425 for selecting a method of providing a notification, and objects 3426, 3427, and 3429 for translation, storage, or summary of information, on the display 260 in a lock state. In an embodiment, based on an input to the visual object 3425, the electronic device 101 may output the information by voice.

In an embodiment, in the state 3403, the electronic device 101 may display a widget including summary information of a day in the widget area 220 of the lock screen 3351.

In the state 3403, the electronic device 101 may obtain an input for expanding the widget. In an embodiment, the input may be a press input for selecting the widget. However, it is not limited thereto. For example, the input may include a swipe input starting from the widget.

In an embodiment, based on the input for expanding the widget, in the state 3404, the electronic device 101 may display a screen 3453 including objects 3462, 3471, and 3473 indicating information associated with the summary information of the day, a visual object 3475 for selecting a method of providing a notification, and objects 3476, 3477, and 3479 for translation, storage, or summary of the information, on the display 260 in the lock state. In an embodiment, based on an input to the visual object 3475, the electronic device 101 may output the information by voice.

According to an embodiment, the electronic device 101 may request an input for unlocking the electronic device 101, in response to receiving the input for expanding the widget in the state 3401 (or the state 3403). For example, in response to receiving the input for expanding the widget in the state 3401 (or the state 3403), the electronic device 101 may display a screen for unlocking through the display 260. For example, the electronic device 101 may authenticate a user based on another user input (e.g., an input of biometric information (e.g., a fingerprint) or an input of a password) received through the screen for unlocking. For example, the electronic device 101 may unlock the electronic device 101 in response to the user being authenticated.

For example, in response to unlocking the electronic device 101, the electronic device 101 may display the screen 3452 including the objects 3412 and 3421 indicating the weather information, and/or the object 3423 indicating the news information, the visual object 3425 for selecting the method of providing the notification, and the objects 3426, 3427, and 3429 for translation, storage, or summary of the information, on the display 260 in an unlocked state.

For example, in response to unlocking the electronic device 101, the electronic device 101 may display the screen 3453 including the objects 3462, 3471, and 3473 indicating the information associated with the summary information of the day, the visual object 3475 for selecting the method of providing the notification, and the objects 3476, 3477, and 3479 for translation, storage, or summary of the information on the display 260 in the unlocked state.

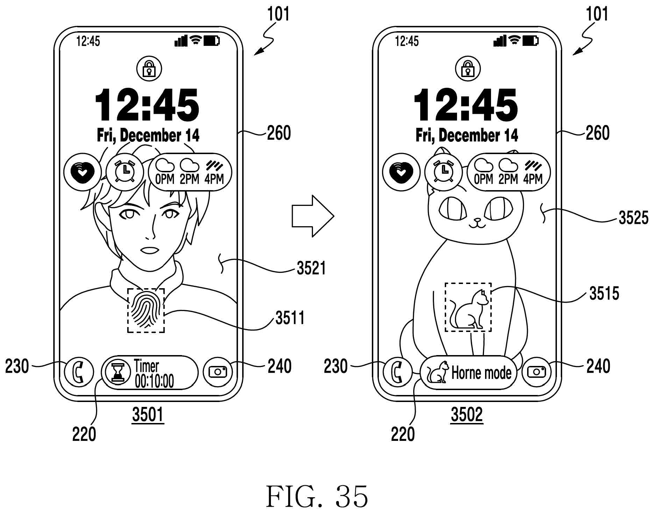

FIG. 35 illustrates an example of a visual object changed according to a mode of an electronic device according to an embodiment.

FIG. 35 may be described with reference to FIG. 1, FIGS. 2A to 2G, FIGS. 8A and 8B, FIG. 11, and FIG. 12. FIG. 35 may be an example of FIG. 8B.

FIG. 35 illustrates states 3501 and 3502 in which a display of a widget and a visual object on a background area is changed according to a change of a mode.

Referring to FIG. 35, in a state 3501, the electronic device 101 may display a lock screen 3521 in a lock state. For example, the electronic device 101 may display the lock screen 3521 including a visual object 3511 for biometric authentication (e.g., the visual object 213 of FIG. 2A) on which a wallpaper (or a background image) is displayed, icon areas 230 and 240, and a widget area 220.

In an embodiment, the electronic device 101 may identify a change of a mode (or a routine). For example, in a state 3502, the electronic device 101 may display a lock screen 3525 in which the visual object 3511 and a widget displayed and the wallpaper in the widget area 220 are changed, based on that a mode associated with a home is set.

For example, the electronic device 101 may display a visual object corresponding to the wallpaper as the visual object 3515 for the biometric authentication. For example, the electronic device 101 may display information indicating a current mode in the widget area 220.

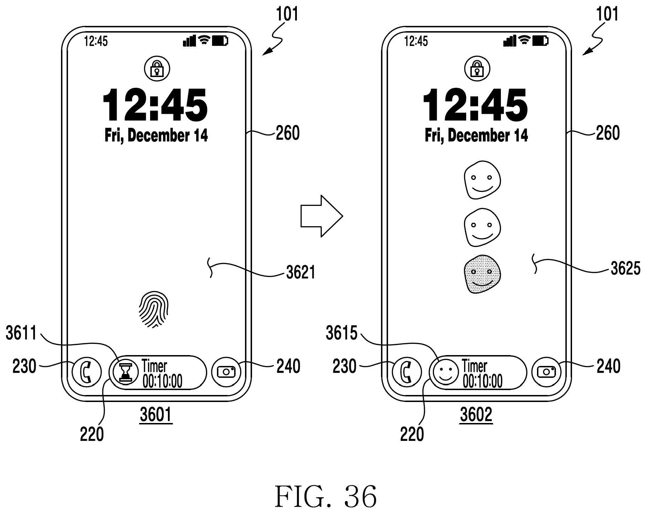

FIG. 36 illustrates an example of lock screens changed according to a mode of an electronic device according to an embodiment.

FIG. 36 may be described with reference to FIG. 1, FIGS. 2A to 2G, FIG. 8A, and FIG. 8B. FIG. 36 may be an example of FIG. 8A.

FIG. 36 illustrates states 3601 and 3602 in which a display of a widget is changed according to a change of wallpaper.

In the state 3601, the electronic device 101 may display a lock screen 3621 in a lock state. For example, the electronic device 101 may display the lock screen 3621 including wallpaper (or a background image), icon areas 230 and 240, and a widget area 220 in which a widget 3611 is displayed.

In an embodiment, the electronic device 101 may identify a change of wallpaper. For example, the electronic device 101 may change an icon of a widget 3615 to a visual object corresponding to a wallpaper, based on that a new wallpaper is set. For example, in the state 3602, the electronic device 101 may display a lock screen 3625 in which the widget 3615 displayed in the widget area 220 is changed based on that the new wallpaper is set.

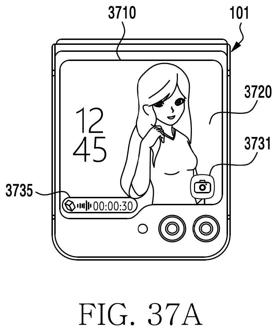

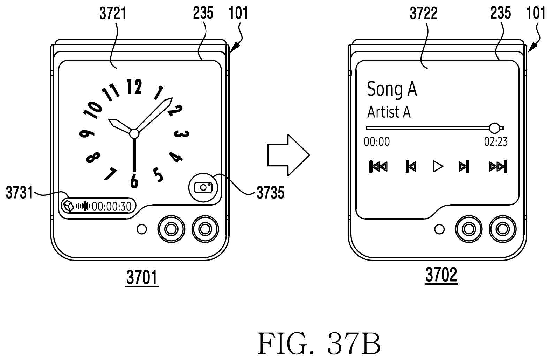

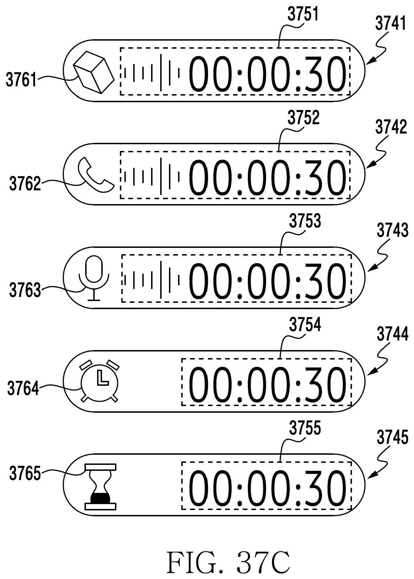

FIG. 37A illustrates an example of an electronic device according to an embodiment. FIG. 37B illustrates an example of a screen displayed in an electronic device according to an embodiment. FIG. 37C illustrates an example of a widget displayed in an electronic device according to an embodiment.

Referring to FIG. 37A, the electronic device 101 may be a foldable electronic device. In an embodiment, the electronic device 101 may include a display 3710 on a surface of a foldable housing. In an embodiment, the electronic device 101 may include the display 3710 included in a surface of a foldable housing arranged to face an outside in a fully folded state.

In an embodiment, the electronic device 101 may display a screen 3720 through the display 3710. In an embodiment, the screen 3720 may include one or more objects 3731 and 3735. In an embodiment, the object 3731 may correspond to a widget displayed in the widget area 220.

In an embodiment, referring to FIG. 37B, in a state 3701, the electronic device 101 may obtain an input to the object 3731 while displaying a screen 3721 including the object 3731 and the object 3735.

In an embodiment, the electronic device 101 may change the screen 3721 to a screen 3722 of an application associated with the object 3731, based on the input to the object 3731.

FIG. 37C illustrates widgets 3741, 3742, 3743, 3744, and 3745 capable of being displayed on the screen 3720 through the display 3710 by the electronic device 101. Referring to FIG. 37C, the widgets 3741, 3742, 3743, 3744, and 3745 may include icons 3761 to 3765 of an application associated with each of the widgets 3741, 3742, 3743, 3744, and 3745. Referring to FIG. 37C, the widgets 3741, 3742, 3743, 3744, and 3745 may include information areas 3751 to 3755 of a function provided by an application associated with each of the widgets 3741, 3742, 3743, 3744, and 3745. However, it is not limited thereto. The widgets 3741, 3742, 3743, 3744, and 3745 may include objects for controlling a function provided by an application associated with each of the widgets 3741, 3742, 3743, 3744, and 3745.

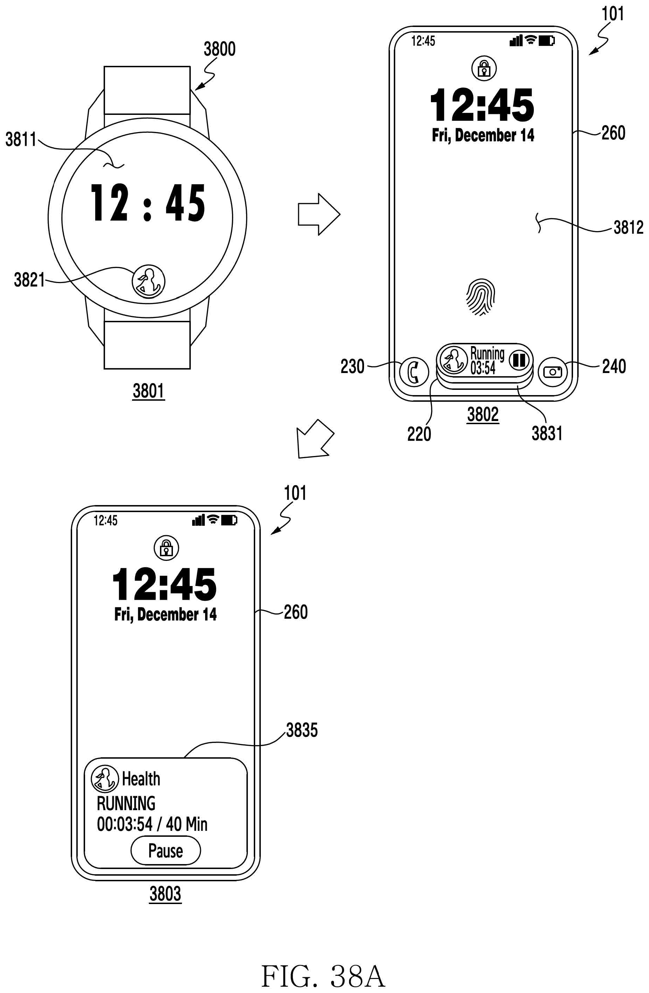

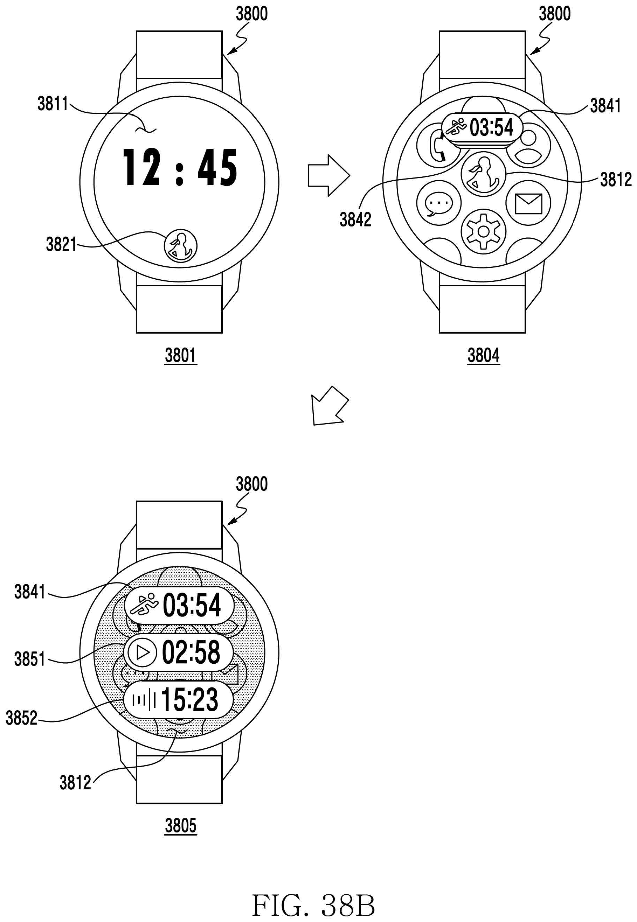

FIG. 38A illustrates an example of a widget linked between an electronic device and another electronic device according to an embodiment. FIG. 38B illustrates an example of a widget displayed in another electronic device according to an embodiment.

FIGS. 38A and 38B may be described with reference to FIG. 1, FIGS. 2A to 2G, and FIG. 9. FIGS. 38A and 38B may be an example of FIG. 9.

In an embodiment, an external electronic device 3800, which is a smart watch, and the electronic device 101 may be connected to each other. Based on the external electronic device 3800 and the electronic device 101 being connected to each other, in a state 3801, an icon 3821 indicating an exercise application may be displayed in the external electronic device 3800. Based on the external electronic device 3800 and the electronic device 101 being connected to each other, in a state 3802, a widget 3831 indicating the exercise application may be displayed on the widget area 220 in the electronic device 101.

In an embodiment, the electronic device 101 may display an expanded widget 3835 indicating the exercise application, based on an input to the widget area 220.

In an embodiment, referring to FIG. 38B, while the external electronic device 3800 and the electronic device 101 are connected to each other, in a state 3804, the external electronic device 3800 may display an activated screen 3812. On the screen 3812, a widget 3841 indicating the exercise application and a widget 3842 indicating applications currently being executed may be displayed. In an embodiment, the widget 3842 may be displayed on the screen 3812 in a state of being covered by the widget 3841.

In an embodiment, in a state 3805, the external electronic device 3800 may display widgets 3841, 3851, and 3852 in a state where the widgets 3841, 3851, and 3852 are spread, based on an input to the widget 3841.

In an embodiment, the electronic device 101 may control an application displayed in the widget area 220, based on an input through the external electronic device 3800. For example, when the external electronic device 3800 notifies the electronic device 101 that an input to the widget 3841 is obtained, the electronic device 101 may perform a function associated with the application displayed in the widget area 220. However, it is not limited thereto.

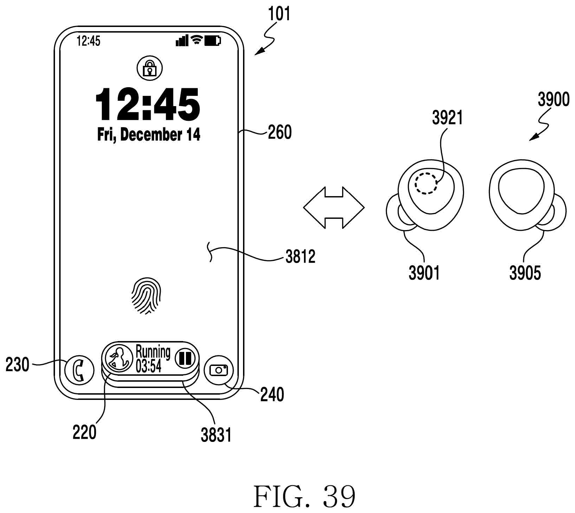

FIG. 39 illustrates an example of a widget of an electronic device controlled through another electronic device according to an embodiment.

FIG. 39 may be described with reference to FIG. 1, FIGS. 2A to 2G, and FIG. 9. FIG. 39 may be an example of FIG. 9.

In an embodiment, an external electronic device 3900, which is wireless earphones 3901 and 3905, and the electronic device 101 may be connected to each other. Based on the external electronic device 3900 and the electronic device 101 being connected to each other, a widget 3831 indicating an application associated with the external electronic device 3900 may be displayed on the widget area 220 in the electronic device 101.

In an embodiment, the electronic device 101 may obtain an input 3921 to the external electronic device 3900. In an embodiment, the electronic device 101 may control an application displayed in the widget area 220, based on the input 3921. For example, the electronic device 101 may stop or resume exercise measurement, based on the input 3921. For example, the electronic device 101 may play or stop playing contents, based on the input 3921. For example, the electronic device 101 may change a widget of the application displayed in the widget area 220 based on the input 3921. However, it is not limited thereto.

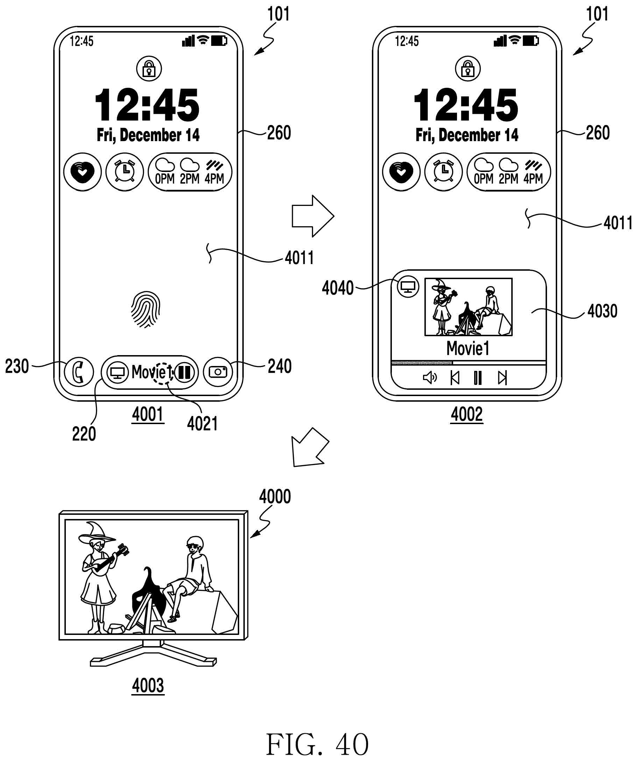

FIG. 40 illustrates an example of a widget indicating a screen displayed through another electronic device according to an embodiment.

FIG. 40 may be described with reference to FIG. 1, FIGS. 2A to 2G, and FIG. 9. FIG. 40 may be an example of FIG. 9.

In an embodiment, the electronic device 101 may be connected to an external electronic device 4000 that is playing contents (or outputting a sound source) while a lock screen 4011 is displayed. In an embodiment, during the connection, the electronic device 101 may receive, from the external electronic device 4000, information associated with the external electronic device 4000 (e.g., identification information of the external electronic device 4000, a type (or product information) of the external electronic device 4000, address information (e.g., a medium access control (MAC) address), and information on an activity currently being executed (or contents being played) in the external electronic device 4000). For example, the external electronic device 4000 may be a device capable of playing multimedia (e.g., a television or a display). However, it is not limited thereto.

Referring to FIG. 40, in a state 4001, the electronic device 101 may display, in the widget area 220, a widget indicating contents being played by the external electronic device 4000. In an embodiment, the electronic device 101 may obtain an input 4021 to the widget area 220, while displaying the widget indicating the contents being played by the external electronic device 4000 in the widget area 220. In an embodiment, in a state 4002, the electronic device 101 may display an expanded widget 4030. In an embodiment, the expanded widget 4030 may include an area for the external electronic device 4000 to visually display (or preview) contents. In an embodiment, the expanded widget 4030 may include a visual object associated with a function for controlling the external electronic device 4000. In an embodiment, the expanded widget 4030 may include a visual object 4040 indicating the external electronic device 4000.

In an embodiment, in the state 4002, the electronic device 101 may identify an event of the electronic device 101. For example, the event of the electronic device 101 may include an input to controllable objects (e.g., play, pause, play next content, or play previous content) of the expanded widget 4030.

In an embodiment, based on identifying the event, the electronic device 101 may request the external electronic device 4000 for control associated with playing of the content. In an embodiment, in a state 4003, the external electronic device 4000 may control the playing of the content according to the request.

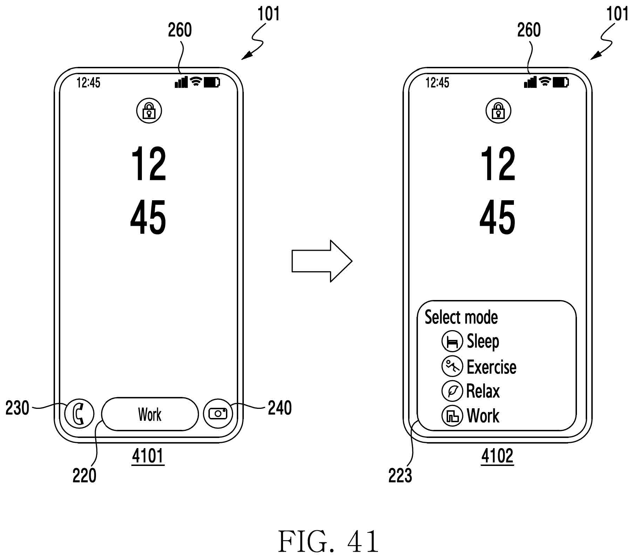

FIG. 41 illustrates an example of a screen for setting a mode in a lock state of an electronic device according to an embodiment.

FIG. 41 may be described with reference to FIG. 1 and FIGS. 2A to 2G.

Referring to FIG. 41, in a state 4101, the electronic device 101 may display a lock screen in a lock state. For example, the electronic device 101 may display a lock screen including a background area 210 in which a wallpaper (or a background image) is displayed, icon areas 230 and 240, and a widget area 220.

In the state 4101, the electronic device 101 may display a widget indicating a mode (e.g., a work mode) of the electronic device 101 in the widget area 220.

For example, in the state 4101, while displaying the widget indicating the mode in the widget area 220, the electronic device 101 may identify an input to the widget area 220. In an embodiment, in a state 4102, the electronic device 101 may change the widget area 220 to a widget area 223, in response to the input to the widget area 220. For example, in the state 4102, the electronic device 101 may display, in the widget area 223, a widget including changeable modes in the widget area 223.

As described above, while displaying the widget indicating the mode in the widget area 220, the electronic device 101 may change the widget area 220 to the widget area 223 displaying a widget capable of changing a mode, based on the input to the widget area 220.

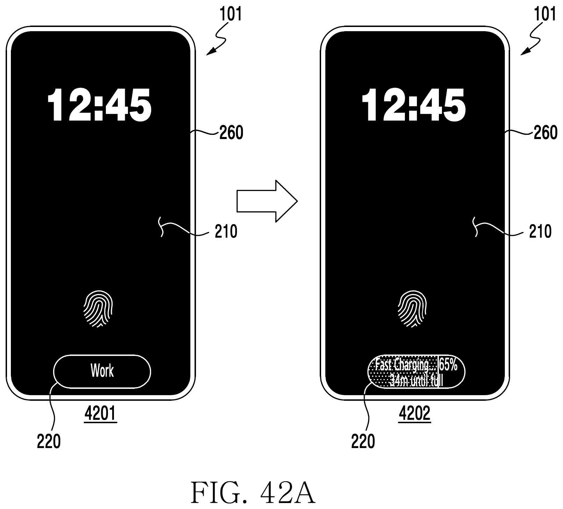

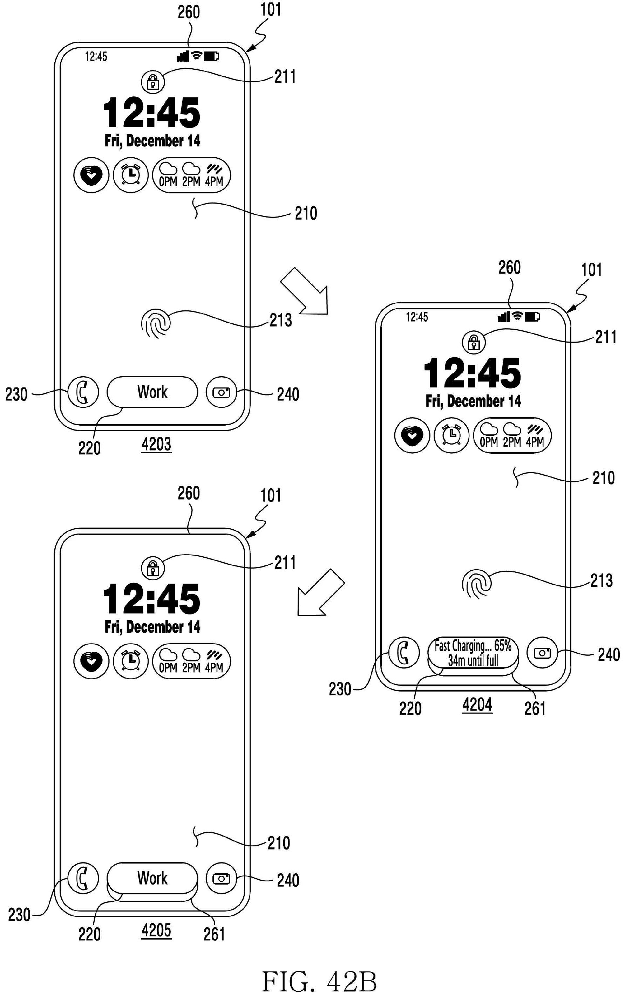

FIG. 42A illustrates an example of an always on display (AoD) screen that changes a widget according to an event in a lock state of an electronic device according to an embodiment. FIG. 42B illustrates an example of a screen for changing a widget according to an event in a lock state of an electronic device according to an embodiment.

States 4201 and 4202 of FIG. 42A may illustrate situations in which the electronic device 101 changes a widget displayed in a widget area 220 based on an event while displaying an AoD screen.

Referring to the state 4201 of FIG. 42A, the electronic device 101 may display, in the widget area 220 of a lock screen 210, a widget selected based on a priority, in a lock state displaying the AoD screen.

Referring to the state 4202 of FIG. 42A, the electronic device 101 may provide information associated with charging of a battery to the widget area 220 of the lock screen 210, in the lock state displaying the AoD screen. For example, the electronic device 101 may provide the information associated with the charging of the battery to the widget area 220, based on that power for charging the battery is obtained from the outside.

Referring to the state 4202 of FIG. 42A, the electronic device 101 may display only one widget among widgets (e.g., a widget indicating a mode and a widget providing the information associated with the charging of the battery), in the lock state displaying the AoD screen. For example, the electronic device 101 may display only one widget without overlappingly displaying widgets, in the lock state displaying the AoD screen.

States 4203, 4204, and 4205 of FIG. 42B may illustrate situations in which the electronic device 101 changes a widget displayed in the widget area 220 based on an event in a lock state displaying a screen other than the AoD screen.

Referring to the state 4203 of FIG. 42B, the electronic device 101 may display, in the widget area 220 of the lock screen 210, a widget selected based on a priority in the lock state.

Referring to the state 4204 of FIG. 42B, the electronic device 101 may provide the information associated with the charging of the battery to the widget area 220 of the lock screen 210, in the lock state. For example, the electronic device 101 may provide the information associated with the charging of the battery to the widget area 220, based on that the power for charging the battery is obtained from the outside.

Referring to the state 4204 of FIG. 42B, the electronic device 101 may display all widgets (e.g., a widget indicating a mode and a widget providing information associated with charging of a battery), in the lock state. For example, the electronic device 101 may overlappingly display the widgets, in the lock state. For example, the electronic device 101 may display the widget providing the information associated with the charging of the battery to the widget area 220, and may display a widget indicating a mode on a widget 261 covered by the widget area 220. In an embodiment, the widget displayed on the widget 261 covered by the widget area 220 may be a widget displayed in the widget area 220 prior to an event (or an event of identifying that the power for charging the battery is obtained from the outside).

Referring to the state 4205 of FIG. 42B, the electronic device 101 may display a widget having a next priority in the widget area 220, based on an input for changing a display of the widget area 220 (e.g., a swipe input to the widget area 220). For example, when two widgets are displayed as in the state 4205, the electronic device 101 may display a widget indicating a mode in the widget area 220, and may display a widget providing information associated with the charging of the battery on the widget 261 covered by the widget area 220. In an embodiment, the widget displayed on the widget 261 covered by the widget area 220 may be a widget displayed in the widget area 220 prior to the input for changing the display of the widget area 220.

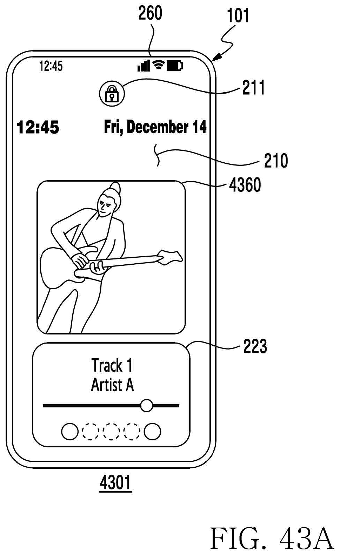

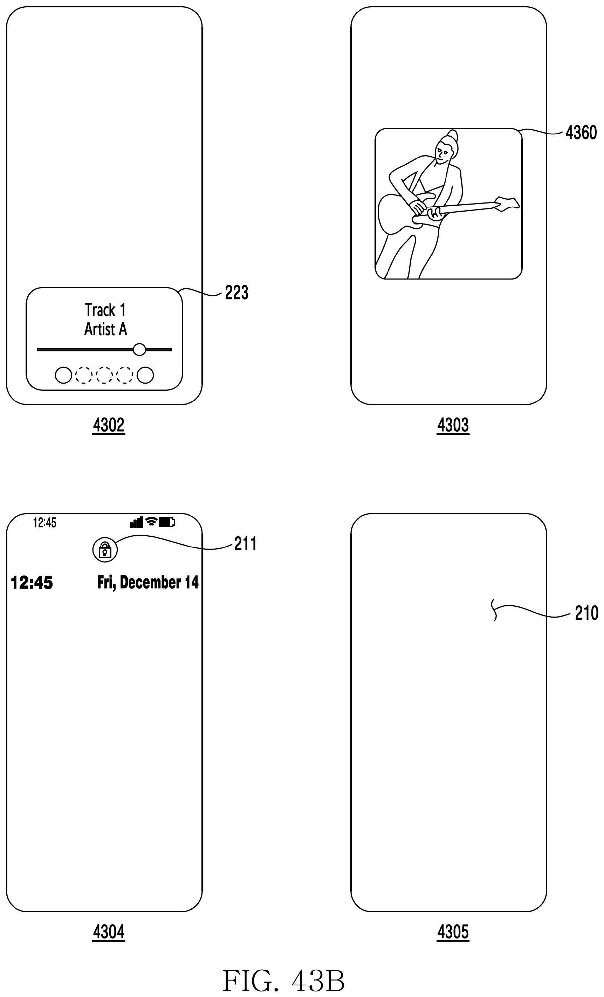

FIG. 43A illustrates an example of a screen of an electronic device according to an embodiment. FIG. 43B illustrates an example of layers included in a screen of an electronic device according to an embodiment.

Referring to a state 4301 of FIG. 43A, the electronic device 101 may display a lock screen in a lock state. For example, the electronic device 101 may display a lock screen including a background area 210 in which a wallpaper (or a background image) is displayed, a widget for controlling a function displayed in a widget area 223, and an expanded widget 4360 for providing information associated with a widget displayed in the widget area 223.

Referring to layers 4302, 4303, 4304, and 4305 of FIG. 43B, the lock screen of the state 4301 may be a screen in which the layers 4302, 4303, 4304, and 4305 are sequentially overlapped. For example, the layer 4304 for indicating a visual object 211 indicating the lock state and a notification area (e.g., a notification area 1411 of FIG. 14A) may be overlapped on the layer 4305 that is located at the bottom and is for indicating the background area 210. For example, the layer 4303 for indicating the expanded widget 4360 for providing information associated with a widget displayed in the widget area 223 may be overlapped on the layer 4304. For example, the layer 4302 for indicating the widget area 223 may be overlapped on the layer 4303.

In FIG. 43B, four layers are illustrated, but this is only an example. For example, in order to display a lock screen according to the state 201 of FIG. 2A, a layer for indicating visual objects 211 and 213 may be overlapped on a layer that is located at the bottom and is for indicating the background area 210. For example, a layer for indicating the widget area 220 and icon areas 230 and 240 may be overlapped on the layer for indicating the visual objects 211 and 213.

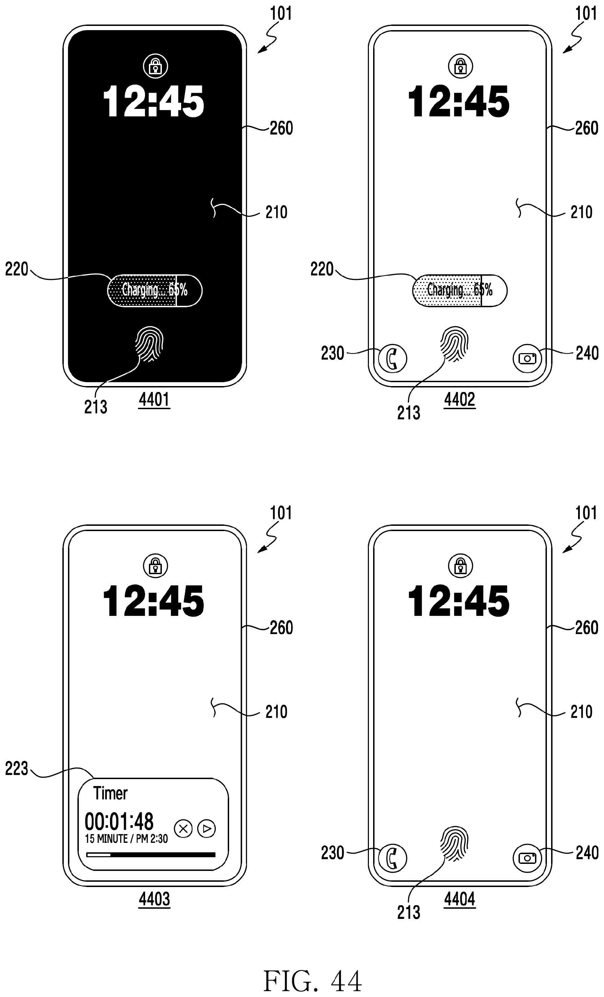

FIG. 44 illustrates an example of a lock screen of an electronic device according to an embodiment.

In the above drawings, the icon areas 230 and 240 are illustrated as being displayed side by side with the widget area 220, and the visual object 213 is illustrated as being displayed on the widget area 220, but this is only an example.

For example, referring to a state 4401 of FIG. 44, the electronic device 101 may display the visual object 213 below the widget area 220. For example, as a location of a sensor for obtaining biometric information (e.g., a fingerprint) is relatively lower, the electronic device 101 may display the visual object 213 below the widget area 220.

Referring to states 4402 and 4404 of FIG. 44, in a lock state, the electronic device 101 may arrange the icon areas 230 and 240 of the lock screen 210 to be side by side with the visual object 213. Referring to the state 4402 of FIG. 44, the electronic device 101 may display the visual object 213 below the widget area 220.

Referring to a state 4403 of FIG. 44, in the lock state, the electronic device 101 may display a widget in an expanded widget area 223, based on an input to the widget area 220.

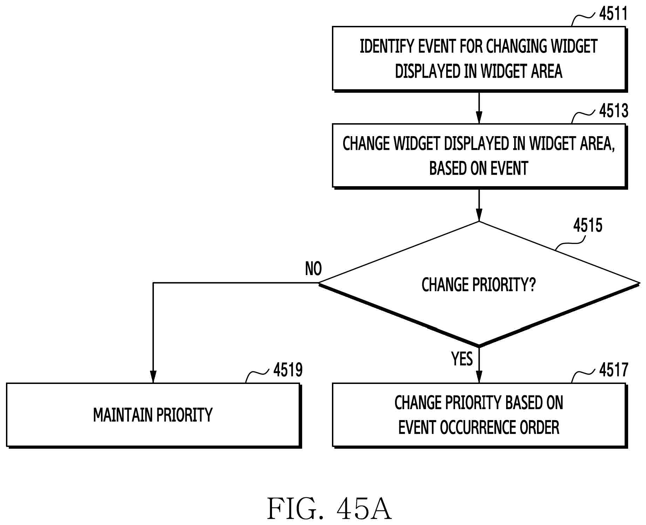

FIG. 45A is a flowchart illustrating an operation of an electronic device according to an embodiment.

FIG. 45A may be described with reference to FIG. 1 and FIGS. 2A to 2G.

Referring to FIG. 45A, in operation 4511, the electronic device 101 may identify an event for changing a widget displayed in the widget area 220. For example, the event may include generation of a notification of an application being executed in a background. For example, a notification may be associated with a connection (e.g., a wireless communication connection or a connection for charging) with another electronic device. For example, the notification may be associated with satisfaction of a condition (e.g., generation of an artificial intelligence (AI) briefing). For example, the notification may be associated with a notification (e.g., expiration of a timer) of the application being executed in the background.

For example, the event may include a user input (e.g., a swipe input) for changing the widget displayed in the widget area 220.

In operation 4513, the electronic device 101 may change a widget displayed in the widget area 220, based on the event. For example, the electronic device 101 may display, in the widget area 220, a widget of the application generating the notification. For example, the electronic device 101 may display, in the widget area 220, a widget having a next priority by a swipe input to a widget displayed in the widget area 220.

In operation 4515, the electronic device 101 may determine whether a change of the priority is required. For example, when a new widget is generated by the event, it may be determined that the change of the priority is required. For example, when the event is generated by a widget displayed in widget areas 261 and 265 covered by the widget area 220, it may be determined that the change of the priority is not required.

Based on determining that the change of the priority is required in operation 4515, the electronic device 101 may perform operation 4517. Based on determining that the change of the priority is not required in operation 4515, the electronic device 101 may perform operation 4519.

In operation 4517, the electronic device 101 may change the priority based on an event occurrence order. In an embodiment, the priority may have a circular order. For example, after a widget having a lowest priority is displayed in the widget area 220, a widget displayed next in the widget area 220 may be a widget having a highest priority.

In an embodiment, when a widget is newly generated by the event, the electronic device 101 may set a priority of the widget generated by the event to be higher than a priority of a widget displayed in the widget area 220 immediately before. For example, when a widget D is newly generated, in a situation where the widget B is currently displayed in the widget area 220 with a priority of a widget A, a widget B, and a widget C, the electronic device 101 may update the priority in an order of the widget A, the widget D, the widget B, and the widget C. In an embodiment, the electronic device 101 may display the newly generated widget D in the widget area 220, and may display the widget B in the widget area 220 according to the priority in response to an input (e.g., a swipe input) for changing a widget displayed in the widget area 220 from the widget D.

In operation 4519, the electronic device 101 may maintain the priority. For example, in a situation where the widget B is currently displayed in the widget area 220 with the priority of the widget A, the widget B, and the widget C, when an event of the widget A occurs, the electronic device 101 may maintain the priority in the order of the widget A, the widget B, and the widget C. In an embodiment, the electronic device 101 may display the widget A in the widget area 220 according to the event, and may display the widget B in the widget area 220 according to the priority in response to an input (e.g., a swipe input) for changing a widget displayed in the widget area 220 from the widget A.

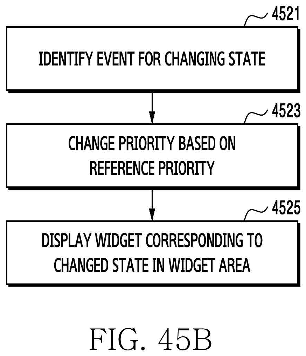

FIG. 45B is a flowchart illustrating an operation of an electronic device according to an embodiment.

FIG. 45B may be described with reference to FIG. 1 and FIGS. 2A to 2G.

Referring to FIG. 45B, in operation 4521, the electronic device 101 may identify an event for changing a state. For example, the change of the state may be a change between a lock state and a state (e.g., an unlocked state) other than the lock state.

In operation 4523, the electronic device 101 may change a priority based on a reference priority. The reference priority may include a first reference priority for the lock state and a second reference priority for the unlocked state.

For example, the first reference priority may have an order of a first type of widgets for an ongoing activity (e.g., an activity associated with an application executed by a user (e.g., a timer, a phone, or a voice recording)), a second type of widgets for a briefing (e.g., an AI briefing (e.g., the widget displayed in the state 3401 of FIG. 34A and/or the widget displayed in the state 3403 of FIG. 34B)), and a third type of widgets for state information (e.g., a mode of the electronic device 101 (e.g., a widget displayed in the state 3502 of FIG. 35), whether to charge (e.g., a widget displayed in the state 4204 of FIG. 42B), and/or an emergency contact). For example, the order may be determined in an order of the first type of widgets, the second type of widgets, and the third type of widgets. A widget having a highest priority among the first type of widgets may be a widget of a top-app (or an app displayed on the display 260) executed in the unlocked state. An order of the third type of widgets may be based on an event occurrence order or a widget order designated by the user. However, it is not limited thereto.

For example, the second reference priority may have an order of a first type of widgets for an ongoing activity (e.g., an activity associated with an application executed by a user (e.g., a timer, a phone, or a voice recording)) and a second types of widgets for a briefing (e.g., an AI briefing (e.g., the widget displayed in the state 3401 of FIG. 34A and/or the widget displayed in the state 3403 of FIG. 34B)). For example, in the second reference priority, a third type of widgets may not be included. For example, based on being changed from the lock state to the unlocked state, the third type of widgets may not be displayed in widget areas 1420, 1421, 1422, and 1423. For example, even when a third type of widget is displayed in the widget area 220 in the lock state, the third type of widget may not be displayed in the widget areas 1420, 1421, 1422, and 1423 in the unlocked state. However, it is not limited thereto.

A widget having a highest priority among the first type of widgets of the second reference priority may be a widget of an application associated with media play (e.g., a music and/or video playback application).

In operation 4525, the electronic device 101 may display a widget corresponding to the changed state in a widget area (e.g., the widget area 220 or the widget areas 1420, 1421, 1422, and 1423). For example, the electronic device 101 may display a widget having the highest priority in the widget area according to the reference priority. For example, the electronic device 101 may display the widget having the highest priority in the widget area regardless of a widget displayed in a state before being changed.

FIG. 46 illustrates a structure of a generative AI model of an electronic device according to an embodiment.

FIG. 46 may be described with reference to FIG. 1, FIG. 2A, or FIG. 2B.

In an embodiment, an AI model 4650 of FIG. 46 may be used to generate a wallpaper.

In an embodiment, a user interface (UI) 4610 may be an element for interaction between the electronic device 101 and a user. For example, the UI 4610 may be an element for receiving (or obtaining) a user input. For example, the UI 4610 may be an element for providing (or outputting) a result of the user input.

In an embodiment, the UI 4610 may be a graphic UI (GUI) for interaction (e.g., obtaining a touch input and/or displaying a result) with a user through the display 260. In an embodiment, the UI 4610 may be a voice UI (VUI) (or an auditory UI (AUI)) for interaction (e.g., obtaining a voice signal and/or outputting an audio signal) with a user through a sound output module 155 (or an audio module 170). In an embodiment, the UI 4610 may be a natural UI (NUI) for interaction (e.g., obtaining a gesture or a gaze of the user) with a user through a camera module 180. In an embodiment, the UI 4610 may be a physical UI (PUI) (or a tangible UI (TUI)) for interaction (e.g., an input to a physical button) with a user through an input module 150.

In an embodiment, the UI 4610 may be a configuration for interaction between the electronic device 101 and the user for a query of the user and/or a response to the query. In an embodiment, the UI 4610 may receive a user input. For example, the user input may include a natural language input (e.g., a voice signal input and/or a text input), and/or an input for selecting (or indicating) a content (e.g., an image and/or a video). In addition, the user input may be in a form in which the natural language, the image, the sound, and context information described above are mixed. In addition, the user input may be in a non-natural language form, such as selecting a menu.

In an embodiment, for the query of the user and/or the response to the query, the UI 4610 may identify (or obtain) information on a context associated with a time point (or a situation) at which the user input is obtained. In an embodiment, the information on the context may include additional information at the time of the user input. For example, the additional information may include information on an application currently being used by the user or location information of the user (or the electronic device 101).

In an embodiment, the electronic device 101 may output a result of a generative AI model 4650 to the user, through the UI 4610. In an embodiment, the output may have a natural language form or a specific content form. In an embodiment, the output may be provided in a form (e.g., an action) requested by the user.

In an embodiment, the UI 4610 may transmit the user input and/or the information on the context to an artificial intelligence (AI) framework 4620. In an embodiment, the AI framework 4620 may obtain, from the UI 4610, the user input and/or the information on the context.

In an embodiment, the AI framework 4620 may coordinate and/or control each of components (e.g., an interface management element 4621, a prompt design element 4623, or an output modification element 4625) required to perform a task according to an intention of a user identified based on a query of the user (or a query included in a user input).

In an embodiment, the AI framework 4620 may transmit the user input obtained from the UI 4610 to the prompt design element 4623.

In an embodiment, the prompt design element 4623 may generate a prompt suitable for being input to the generative AI model 4650 (e.g., a large language model (LLM) and/or a larger multimodal model (LMM)).

In an embodiment, the prompt design element 4623 may be an AI component using a machine learning algorithm or a neural network. Accordingly, in the prompt design element 4623, a prompt generated by learning may be changed.

In an embodiment, the prompt design element 4623 may generate a prompt by accessing a knowledge element (or a knowledge archive 4630) including user preference data, a prompt library, and a prompt example based on the user input, and may transmit the generated prompt to the generative AI model 4650 (e.g., the LLM and/or the LMM).

In an embodiment, the interface management element 4621 may communicate with an external element. In an embodiment, the interface management element 4621 may obtain additional information from the external element in a case that there is a request for the additional information while transmitting a user input (or a prompt based on the user input) as an input of the generative AI model 4650. In an embodiment, the interface management element 4621 may establish a channel capable of communicating with an outside of the AI framework 4620 through an application programming interface (API), and may enable the AI framework 4620 to access various data sources (e.g., the knowledge archive 4630) through the established channel. In addition, when an action for finally performing the user input rather than an intermediate result should be performed in an application and/or a service, the interface management element 4621 may request the action from a service element 4640 through the API. Information secured from an external element may be used by the prompt design element 4623 to generate a prompt together with a user input, or may be transmitted as an input of the generative AI model 4650.

In an embodiment, the output modification element 4625 may fine-tune a result output from the generative AI model 4650. For example, the output modification element 4625 may verify (e.g., verify relevance, bias, and/or harmfulness) contents generated through the generative AI model 4650 (e.g., the LLM and/or the LMM). In addition, the output modification element 4625 may determine to a degree to which an output result matches a result requested by the user, and may proceed with an additional task for an additional adjustment when the additional adjustment is required. Additionally, the output modification element 4625 may provide, to the user, a hint to prevent (or reduce) an undesired output.

In an embodiment, generally, the generative AI model 4650 may refer to an artificial intelligence neural network that generates a new form of data by depending on user input information. The generative AI model 4650 may include a model for generating an image and/or a model for generating a language. The model for generating the image may include a generative adversarial network (GAN), a variational auto encoder (VAE), and/or a diffusion-based generative model using the VAE and a transformer structure. The model for generating the language may be a model learned to output a statistically most appropriate output value based on an input value. For example, the model for generating the language may include a model such as Chat-GPT 3 or Chat-GPT 4. In addition, the generative AI model 4650 may be an LMM capable of recognizing data inputs of various forms such as a character, an image, and a voice, and generating new data corresponding thereto.

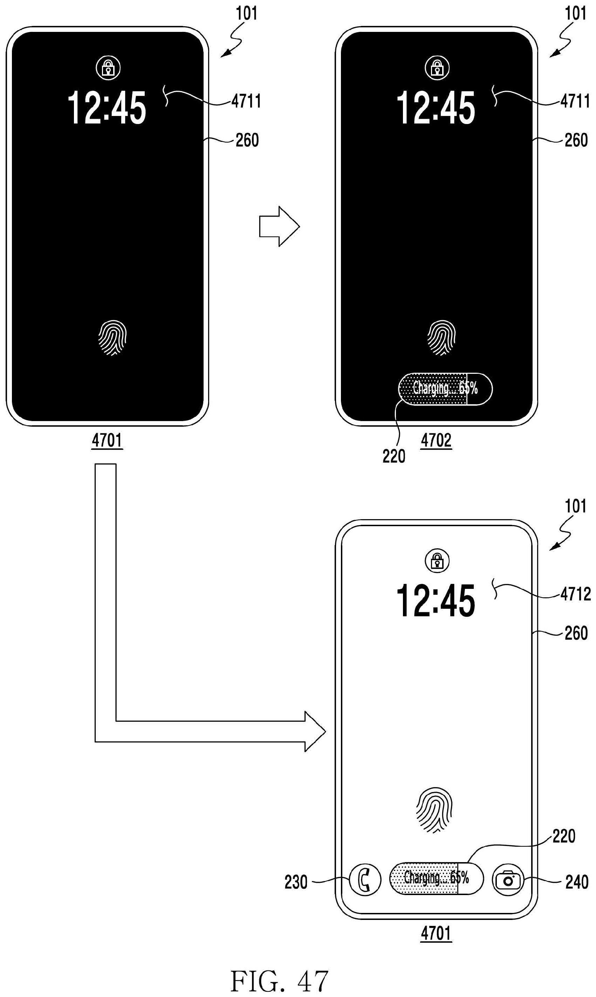

FIG. 47 illustrates an operation of changing a screen according to an event identified while an electronic device displays an AoD screen according to an embodiment.

FIG. 47 may be described with reference to FIGS. 1 and 46.

Referring to a state 4701 of FIG. 47, the electronic device 101 may display an AoD screen 4711 through the display 260. In an embodiment, the electronic device 101 may display the AoD screen 4711 that does not include the widget area 220, based on that an application executed in a background (or a foreground) associated with the widget area 220 (or capable of displaying information in the widget area 220) does not exist.

In an embodiment, the electronic device 101 may identify an event, while displaying the AoD screen 4711. In an embodiment, the event may be identification of a change of a state (or setting) of the electronic device 101. In an embodiment, the event may indicate that required information and/or interest information is identified. For example, the event may indicate that an external electronic device is connected to the electronic device 101. For example, the event may indicate that the electronic device 101 is being charged (e.g., receiving power from the external electronic device). For example, the event may indicate that a mode of the electronic device 101 is changed. For example, the event may indicate that a task of the electronic device 101 is changed. For example, the event may include that the electronic device 101 identifies a notification from an application. For example, the notification from the application may include that expiration of a timer is imminent, food delivery is imminent, and/or arrival at a destination is imminent.

In an embodiment, the electronic device 101 may display, in the widget area 220, a widget of an application corresponding to the identified event. For example, in response to identifying the event, the electronic device 101 may display a widget of an application corresponding to the identified event on the AoD screen 4711. For example, referring to a state 4702, the electronic device 101 may display, in the widget area 220, a widget indicating that the electronic device 101 is being charged, while displaying the AoD screen 4711. However, it is not limited thereto. For example, the electronic device 101 may display a lock screen 4712 instead of the AoD screen 4711, in response to identifying the event. For example, the electronic device 101 may display a widget of an application corresponding to the identified event on the lock screen 4712 other than the AoD screen 4711. For example, referring to a state 4703, the electronic device 101 may display, in the widget area 220, a widget indicating that the electronic device 101 is being charged, while displaying the lock screen 4712.

In FIG. 47, a widget indicating that the electronic device 101 is being charged is illustrated as the widget corresponding to the event, but this is only an example. According to an embodiment, the electronic device 101 may display, in the widget area 220, a widget corresponding to each of various events, in response to identifying the various events (e.g., a mode change event, a food delivery-related event, a route guidance-related event, a message reception event, and/or a phone call reception event).

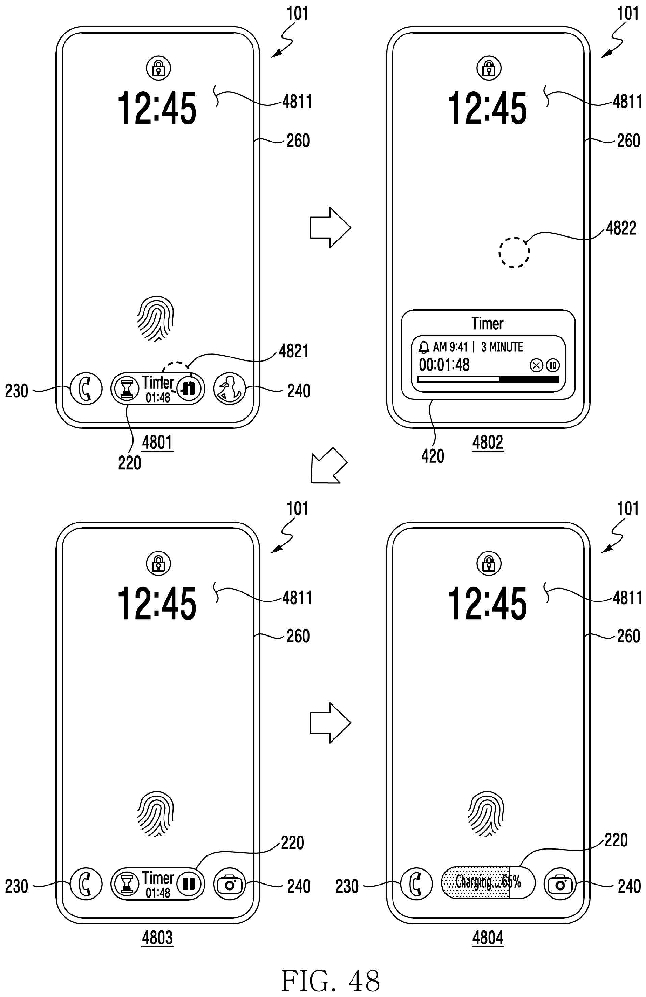

FIG. 48 illustrates an operation of changing a widget according to an event identified while an electronic device displays a lock screen according to an embodiment.

FIG. 48 may be described with reference to FIGS. 1 and 46.

Referring to a state 4801 of FIG. 48, the electronic device 101 may display a lock screen 4811 through the display 260, in a lock state. In an embodiment, the lock screen 4811 may include the widget area 220. In an embodiment, the lock screen 4811 may include icon areas 230 and 240.

In the state 4801, the electronic device 101 may obtain an input 4821 to the widget area 220. For example, the input 4821 to the widget area 220 may be a tap input (or a double-tap input) (or a press input) (or a long-press input) to the widget area 220.

In an embodiment, the electronic device 101 may change the widget area 220, based on the input 4821 to the widget area 220. For example, in a state 4802, the electronic device 101 may display an expanded widget area 420 instead of the widget area 220, based on the input 4821 to the widget area 220. For example, the expanded widget area 420 may be a widget in which an upper end and lateral sides of the widget area 220 are expanded.

In an embodiment, the electronic device 101 may identify an event, while displaying the expanded widget area 420. In an embodiment, the event may be identification of a change of a state (or setting) of the electronic device 101. In an embodiment, the event may indicate that required information and/or interest information is identified. For example, the event may indicate that an external electronic device is connected to the electronic device 101. For example, the event may indicate that the electronic device 101 is being charged (e.g., receiving power from the external electronic device). For example, the event may indicate that a mode of the electronic device 101 is changed. For example, the event may indicate that a task of the electronic device 101 is changed. For example, the event may include that the electronic device 101 identifies a notification from an application.

In an embodiment, based on identifying the event while displaying the expanded widget area 420, the electronic device 101 may delay display of a widget corresponding to the event. In an embodiment, the electronic device 101 may delay the display of the widget corresponding to the event until the expanded widget area 420 is reduced to the widget area 220.

In an embodiment, based on identifying the event while displaying the expanded widget area 420, the electronic device 101 may delay display of a widget corresponding to the event. In an embodiment, the electronic device 101 may delay the display of the widget corresponding to the event until the expanded widget area 420 is reduced to the widget area 220.

In a state 4803, the electronic device 101 may display the widget area 220 instead of the expanded widget area 420, after identifying the event while displaying the expanded widget area 420. For example, after identifying the event, the electronic device 101 may display the widget area 220 instead of the expanded widget area 420, based on an input 4822 to an area other than the widget area 420. In an embodiment, a widget of an application displayed in the expanded widget area 420 may be displayed in the widget area 220.

In an embodiment, the electronic device 101 may identify that the widget area 220 is displayed after identifying the event while displaying the expanded widget area 420. In an embodiment, in response to the widget area 220 being displayed after identifying the event while displaying the expanded widget area 420, the electronic device 101 may display, in the widget area 220, a widget of an application corresponding to the identified event. For example, referring to a state 4804, while displaying the lock screen 4811, the electronic device 101 may display, in the widget area 220, a widget indicating that the electronic device 101 is being charged.

In FIG. 48, a widget indicating that the electronic device 101 is being charged is illustrated as the widget corresponding to the event, but this is only an example. According to an embodiment, in response to identifying various events (e.g., a mode change event, a food delivery-related event, a route guidance-related event, a message reception event, and/or a phone call reception event), the electronic device 101 may display, in the widget area 220, a widget corresponding to each of the various events.

For example, the electronic device 101 may display the widget corresponding to the event in the widget area 220, based on a life cycle of the event. For example, the life cycle of the event may include a pre-ongoing activity, a during-ongoing activity, and/or a post-ongoing activity of the event. For example, the electronic device 101 may display, in the widget area 220, the widget corresponding to the event at a time point when the life cycle of the event is started and/or a time point when the life cycle is changed. For example, at the time point when the life cycle of the event is started and/or the time point when the life cycle is changed, the electronic device 101 may display the widget corresponding to the event in the widget area 220 for a specified time, and then move an order of the widget corresponding to the event to the last. Accordingly, another widget (or a widget that was displayed before the widget corresponding to the event) may be displayed in the widget area 220. For example, the electronic device 101 may remove the widget corresponding to the event from a list of widgets, after a specified time elapses after the post-ongoing activity of the event.

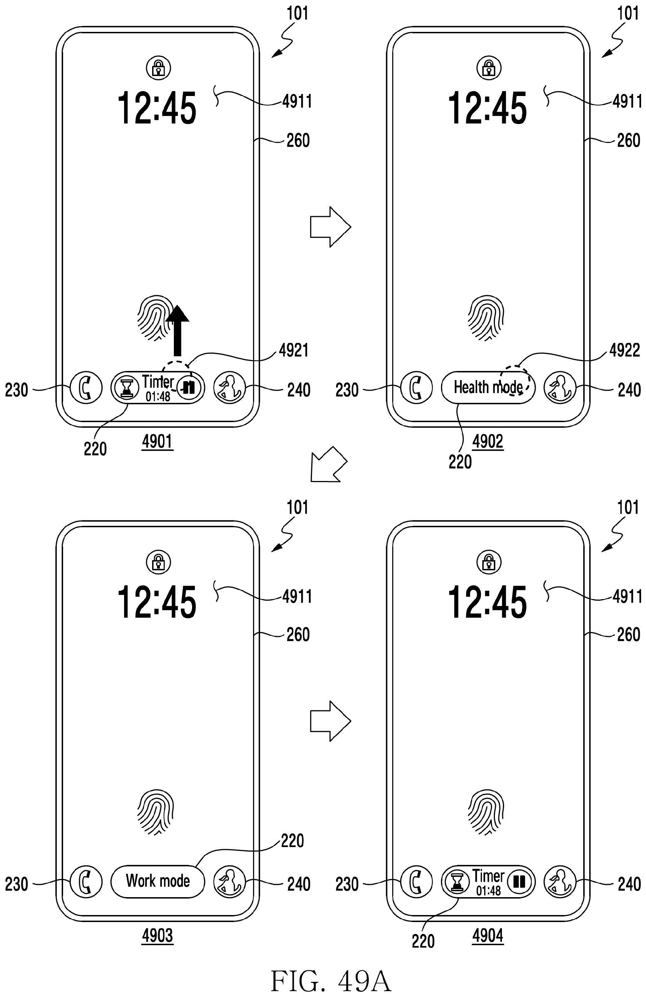

FIG. 49A illustrates an operation of changing a widget as a mode is changed while an electronic device displays a lock screen according to an embodiment.

FIG. 49A may be described with reference to FIGS. 1 and 46.

Referring to a state 4901 of FIG. 49A, the electronic device 101 may obtain an input 4921 associated with the widget area 220 in a lock screen 4911. For example, the input 4921 may obtain a swipe input (or a drag input) (or a flick input) (or a pen input) (or a slide input) to the widget area 220. For example, the input 4921 may be an upward input in the widget area 220.

In an embodiment, the electronic device 101 may change a widget displayed in the widget area 220 (or an application generating information displayed by the widget), based on the input 4921 associated with the widget area 220. For example, based on an application in a next order after a timer, the electronic device 101 may determine an application to display a widget in the widget area 220. Referring to a state 4902 of FIG. 49A, the electronic device 101 may display a widget for setting a mode of the electronic device 101. For example, the mode of the electronic device 101 may be a health mode.

In the state 4902, the electronic device 101 may obtain an input 4922 associated with the widget area 220. For example, the input 4922 may be a tap input (or a double-tap input) (or a press input) (or a long-press input) to the widget area 220.

In an embodiment, the electronic device 101 may execute a function associated with the widget, based on the input 4922 associated with the widget area 220. For example, based on the input 4922 associated with the widget area 220 received while the widget for setting the mode of the electronic device 101 is displayed, the electronic device 101 may change the mode of the electronic device 101. For example, the electronic device 101 may change the health mode to a work mode.

In a state 4903, the electronic device 101 may identify that a specified condition is satisfied. For example, the specified condition may be that a user interaction (or a user input) is not received for a specified time (e.g., 5 seconds) while the lock screen 4911 is displayed. For example, in response to identifying that the specified condition is satisfied while the widget for setting the mode is displayed, the electronic device 101 may change the widget displayed in the widget area 220 (or the application generating information displayed by the widget). For example, in response to identifying that the condition is satisfied while the widget for setting the mode is displayed, the electronic device 101 may display a widget in a next order of the widget for setting the mode. In a state 4904, the electronic device 101 may display a widget of the timer in the widget area 220. In an embodiment, as the display of the widget is changed, an order of the previously displayed widget for setting the mode may be changed to the last.

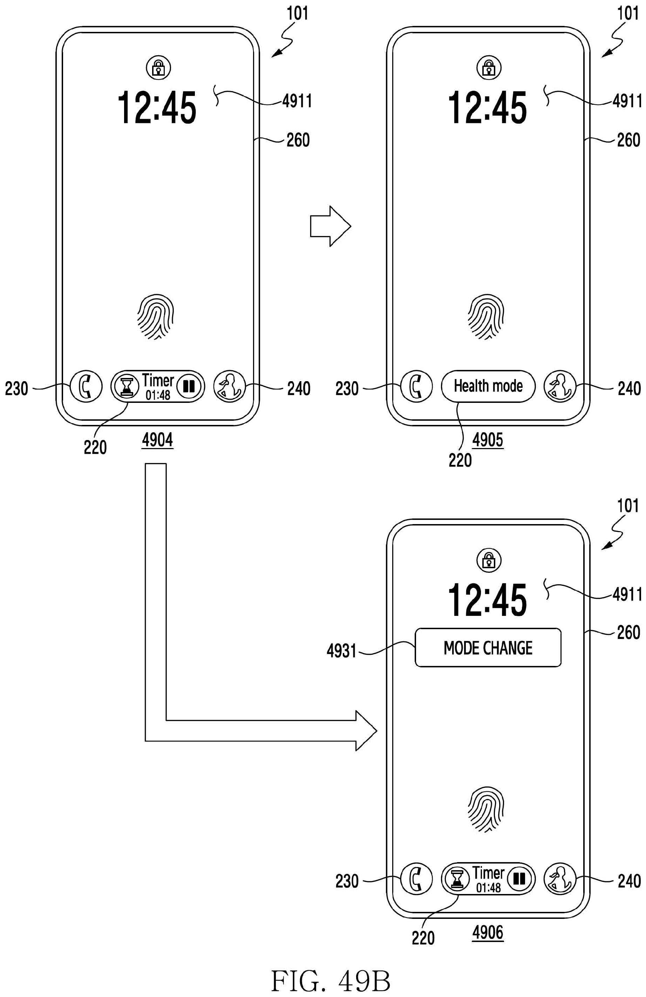

FIG. 49B illustrates an operation of changing a widget as a mode is changed while an electronic device displays a lock screen according to an embodiment.

FIG. 49B may be described with reference to FIGS. 1 and 46.

Referring to a state 4904 of FIG. 49B, the electronic device 101 may display the widget area 220 including a widget other than a widget for setting a mode. For example, the electronic device 101 may display the widget area 220 including a widget associated with a timer.

In an embodiment, while displaying the widget area 220 including the widget other than the widget for setting the mode, the electronic device 101 may identify an event. For example, the event may indicate that the mode of the electronic device 101 is changed. For example, in response to identifying that a mode change condition is satisfied, the electronic device 101 may change a current mode to a mode for which the condition is satisfied. For example, the electronic device 101 may identify a change from a work mode to a health mode.

In an embodiment, the electronic device 101 may notify that the mode is changed through the widget area 220.

For example, the electronic device 101 may display a widget indicating the changed mode in the widget area 220. Referring to a state 4905 of FIG. 49B, the electronic device 101 may display, in the widget area 220, a widget indicating the health mode for a specified time (e.g., 5 seconds). In an embodiment, after displaying the widget indicating the changed mode in the widget area 220, the electronic device 101 may display, in the widget area 220, a widget in a next order of the widget for setting the mode.

In an embodiment, the electronic device 101 may notify that the mode is changed through a pop-up screen 4931. For example, in response to identifying that the mode is changed, the electronic device 101 may display, on a lock screen 4911, the pop-up screen 4931 for a specified time (e.g., 5 seconds). For example, referring to a state 4906 of FIG. 49B, the electronic device 101 may notify that the mode is changed through the pop-up screen 4931, without changing the display of the widget area 220.

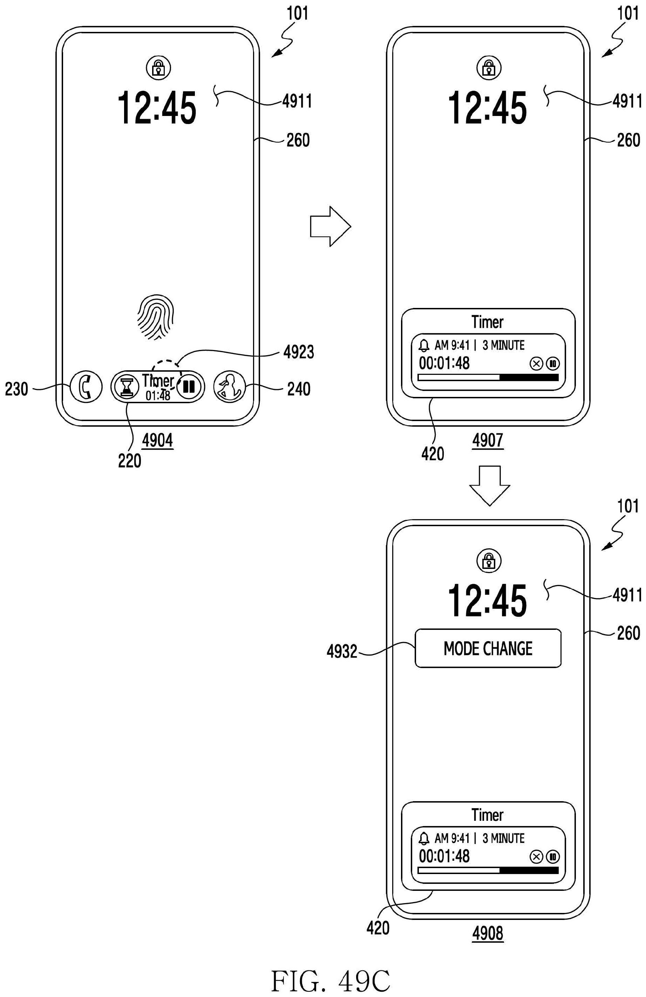

FIG. 49C illustrates an operation of changing a widget as a mode is changed while an electronic device displays a lock screen according to an embodiment.

FIG. 49C may be described with reference to FIGS. 1 and 46.

Referring to a state 4904 of FIG. 49C, the electronic device 101 may change the widget area 220, based on an input 4821 to the widget area 220. For example, in the state 4904, the electronic device 101 may display an expanded widget area 420 instead of the widget area 220, based on an input 4923 to the widget area 220.

In an embodiment, in a state 4907, the electronic device 101 may identify an event while displaying the expanded widget area 420.

In an embodiment, the electronic device 101 may identify the event while displaying a widget other than the widget for setting the mode in the expanded widget area 420. For example, the event may indicate that the mode of the electronic device 101 is changed. For example, in response to identifying that a mode change condition is satisfied, the electronic device 101 may change a current mode to a mode for which the condition is satisfied. For example, the electronic device 101 may identify a change from the work mode to the health mode.

In an embodiment, in a state 4908, the electronic device 101 may notify that the mode is changed through a pop-up screen 4932, in response to identifying the event while displaying the expanded widget area 420. For example, the electronic device 101 may display, on the lock screen 4911, the pop-up screen 4932 for a specified time (e.g., 5 seconds), in response to identifying that the mode is changed. For example, the electronic device 101 may notify that the mode is changed through the pop-up screen 4932, without changing the display of the expanded widget area 420.

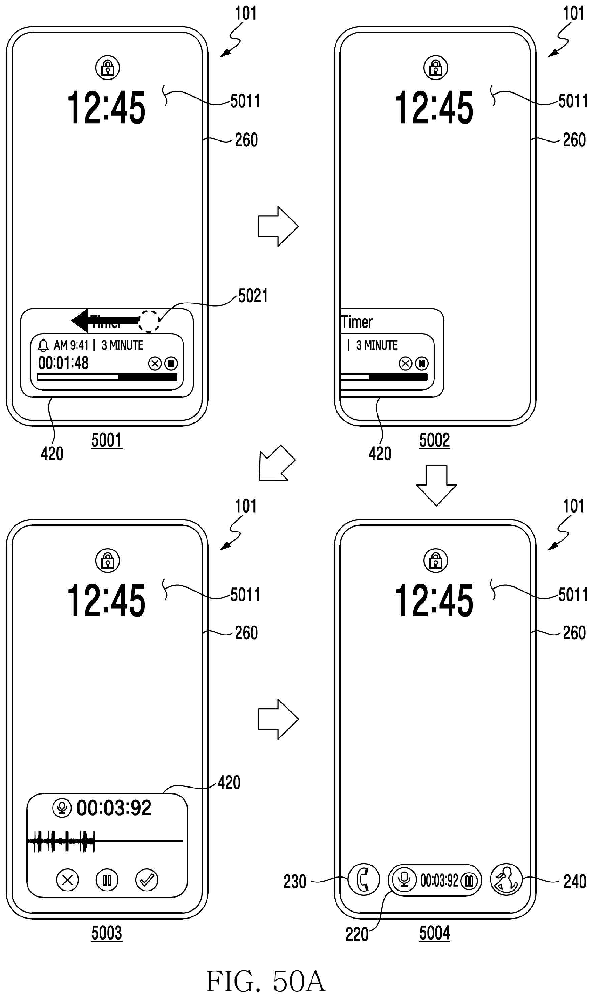

FIG. 50A illustrates an operation of dismissing a widget according to a received user input while an electronic device displays a lock screen according to an embodiment.

FIG. 50A may be described with reference to FIGS. 1 and 46.

Referring to a state 5001 of FIG. 50A, the electronic device 101 may receive a user input 5021 while displaying an expanded widget area 420 on a lock screen 5011. For example, the input 5021 may obtain a swipe input (or a drag input) (or a flick input) (or a pen input) (or a slide input) to the expanded widget area 420. For example, the input 5021 may be an input toward a left side (or a right side) in the expanded widget area 420.

In an embodiment, referring to a state 5002, the electronic device 101 may change a display location of a widget displayed in the expanded widget area 420 according to the input 5021 associated with the expanded widget area 420. For example, the electronic device 101 may change a display location of a widget displayed in the expanded widget area 420 so as to be moved according to the input 5021 associated with the expanded widget area 420.

In an embodiment, the electronic device 101 may dismiss a widget displayed in the expanded widget area 420 (or an application generating information displayed by the widget), based on the input 5021 associated with the expanded widget area 420. In an embodiment, the electronic device 101 may dismiss the widget displayed in the expanded widget area 420 (or the application generating information displayed by the widget), based on that the input 5021 associated with the expanded widget area 420 is moved by a specified distance or more. For example, dismissing the widget may include that the electronic device 101 removes a widget from a set (or a list) of widgets displayed in the expanded widget area 420 (or the widget area 220) according to a priority.

In an embodiment, when a widget of an application for playing a media content (e.g., a widget of a music player and/or a video player) is being displayed in the expanded widget area 420, the electronic device 101 may dismiss the widget based on the input 5021 associated with the expanded widget area 420 identified in a specified situation. For example, the specified situation may be a situation in which playing of the media content is stopped (or paused). For example, the specified situation may be a situation in which a last media content among media contents is displayed in the widget.

In an embodiment, in response to dismissing the widget, the electronic device 101 may display a screen for querying whether to set the dismissed widget, based on an order of the widgets. For example, the screen for querying whether to set the dismissed widget may be displayed in the expanded widget area 420. For example, the screen for querying whether to set the dismissed widget may be a screen for querying not to display the dismissed widget in the widget area 220 (or the expanded widget area 420) later. In an embodiment, in response to receiving a user input for requesting not to display in the widget area 220 (or the expanded widget area 420), the electronic device 101 may set the dismissed widget not to be displayed in the widget area 220 (or the expanded widget area 420).

In an embodiment, in response to dismissing the widget, the electronic device 101 may determine a widget to be displayed next, based on the order of the widgets. In an embodiment, the electronic device 101 may display the determined widget. For example, referring to a state 5003, the electronic device 101 may display a next widget in the expanded widget area 420. For example, referring to a state 5004, the electronic device 101 may display the next widget in the widget area 220 instead of the expanded widget area 420.

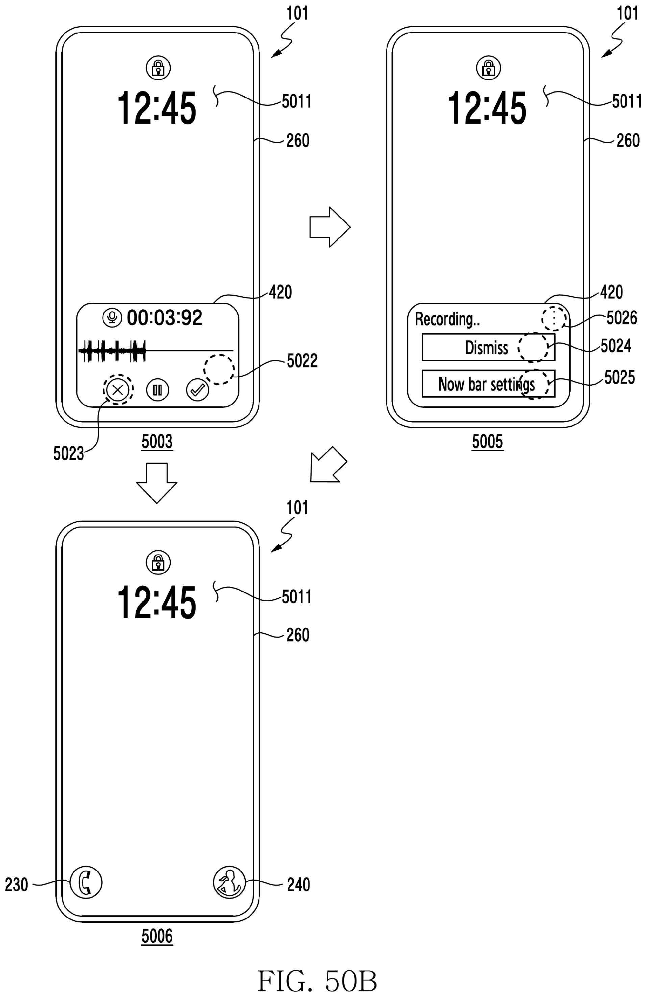

FIG. 50B illustrates an operation of dismissing a widget according to a received user input while an electronic device displays a lock screen according to an embodiment.

FIG. 50B may be described with reference to FIGS. 1 and 46.

In an embodiment, referring to a state 5003 of FIG. 50B, the electronic device 101 may display an expanded widget area 420. For example, a widget in the expanded widget area 420 may include one or more visual objects for controlling the widget. For example, the one or more visual objects may include a visual object for controlling a function (e.g., play or pause) provided by the widget. For example, the one or more visual objects may include a visual object for setting whether to display the widget. For example, the visual object for setting whether to display the widget may be a visual object for dismissing a display of the widget. For example, setting whether to display the widget may include dismissing the widget.

In the state 5003, the electronic device 101 may obtain an input 5022 or 5023 to the expanded widget area 420. For example, the input 5022 to the expanded widget area 420 may be identified in an area within the expanded widget area 420 where the one or more visual objects for controlling the widget are not displayed. For example, the input 5023 to the expanded widget area 420 may be identified in an area within the expanded widget area 420 where the visual object for dismissing the display of the widget is displayed.

In an embodiment, the electronic device 101 may display, in the expanded widget area 420, a screen for setting the widget, based on the input 5022 to the expanded widget area 420. For example, a name of an application of a widget to be set may be displayed on a screen for setting the widget. For example, the screen for setting the widget may include one or more visual objects. For example, the one or more visual objects included in the screen for setting the widget may include at least one visual object for setting a widget and/or a display of the widget.

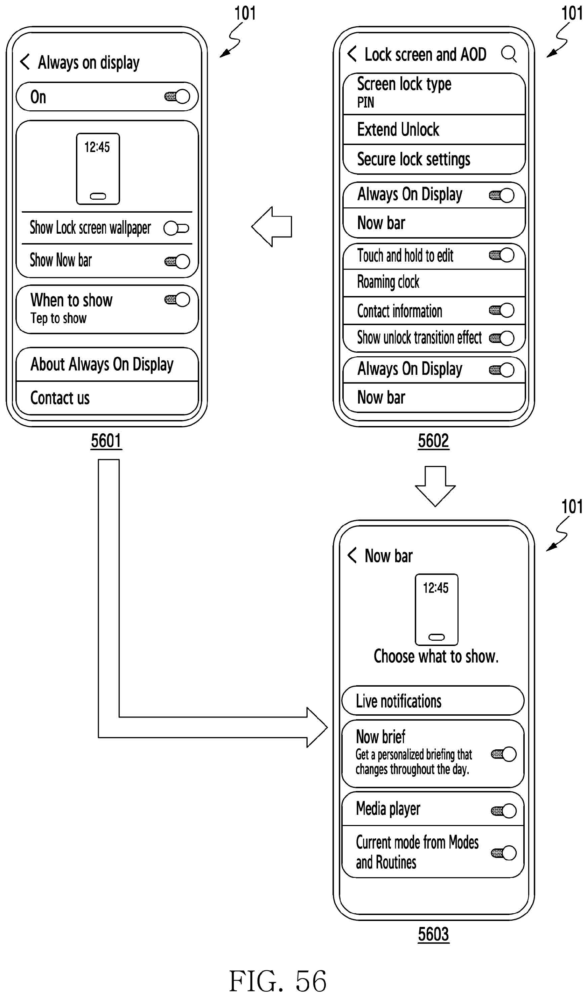

For example, in a state 5005, the electronic device 101 may obtain an input 5024 or 5025 to a screen for setting a widget displayed in the expanded widget area 420. For example, the input 5024 may be an input to a visual object for dismissing a widget. For example, the input 5025 may be an input to a visual object for displaying a setting screen for specifically setting a widget. For example, an input 5026 may be an input to a visual object for displaying a setting screen (e.g., the screen according to states 5601, 5602, and 5603 of FIG. 56) for setting a widget.

In an embodiment, in response to obtaining an input for dismissing a widget, the electronic device 101 may determine a widget to be displayed next. For example, the input for dismissing the widget may include the input 5023 identified in an area within the expanded widget area 420 where a visual object for dismissing the display of the widget is displayed, and/or the input 5024 to the visual object for dismissing the widget.

For example, based on that a widget to be displayed next is determined, the electronic device 101 may display the widget to be displayed next in the expanded widget area 420 (or the widget area 220).

For example, based on that a widget to be displayed next is not determined (or there is no widget to be displayed next), the electronic device 101 may not display the expanded widget area 420 (or the widget area 220). For example, referring to a state 5006, the electronic device 101 may display a lock screen 5011 including icon areas 230 and 240 without displaying the widget area 220.

In an embodiment, in response to obtaining the input 5023 for dismissing a widget, the electronic device 101 may dismiss (or end) the widget. According to an embodiment, when an application of the widget is an application (e.g., a media player) for playing a content, the electronic device 101 may stop playing the content for a specified time (e.g., 1 minute) after obtaining the input 5023 for dismissing a widget, and may dismiss (or end) the widget after the specified time.

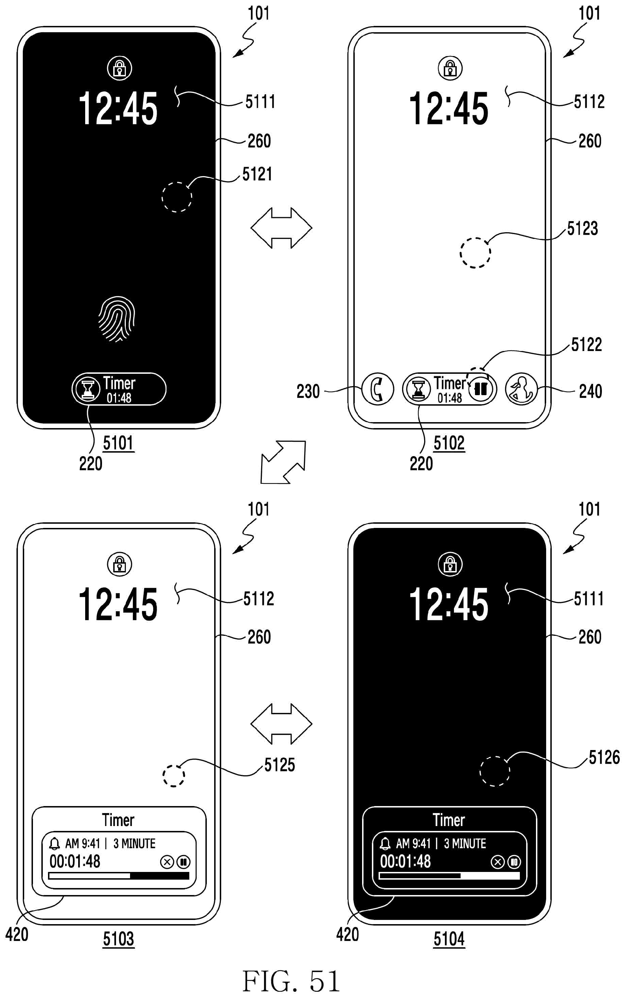

FIG. 51 illustrates an operation of switching between an AoD screen and a lock screen by an electronic device according to an embodiment.

FIG. 51 may be described with reference to FIGS. 1 and 46.

Referring to a state 5101 of FIG. 51, the electronic device 101 may display an AoD screen 5111 through the display 260. In an embodiment, the electronic device 101 may display a widget (e.g., a widget associated with an application) in the widget area 220 within the AoD screen 5111.

In an embodiment, a visual object for controlling a widget (or a function provided by the widget) may not be included in a widget displayed in the widget area 220 within the AoD screen 5111.

In an embodiment, in the state 5101, the electronic device 101 may obtain an input 5121 while displaying a widget in the widget area 220 within the AoD screen 5111. The input 5121 may be identified in an area other than the widget area 220. The input 5121 may be an input (e.g., a double-tap input) for requesting a display of a lock screen 5112 instead of the AoD screen 5111.

Referring to a state 5102, the electronic device 101 may display the lock screen 5112 through the display 260. In an embodiment, the electronic device 101 may display the lock screen 5112, in response to the input 5121 for requesting the display of the lock screen 5112 instead of the AoD screen 5111.

In an embodiment, a widget in the widget area 220 displayed on the lock screen 5112 may include at least one visual object compared to a widget in the widget area 220 displayed on the AoD screen 5111. In an embodiment, a widget in the widget area 220 displayed on the lock screen 5112 may include at least one visual object capable of controlling a widget compared to a widget in the widget area 220 displayed on the AoD screen 5111. For example, the at least one visual object capable of controlling a widget may be an icon for stopping (or starting) a timer.

In an embodiment, in the state 5102, the electronic device 101 may obtain an input 5122 or 5123 while displaying a widget in the widget area 220 within the lock screen 5112. The input 5122 may be an input for requesting a display of the expanded widget area 420 instead of the widget area 220. The input 5122 may be identified in the widget area 220. The input 5122 may be identified in an area other than an area where the visual object for controlling a widget within the widget area 220 is displayed. The input 5123 may be identified in an area other than the widget area 220. The input 5123 may be an input (e.g., a double-tap input) for requesting a display of the AoD screen 5111 instead of the lock screen 5112. The input 5123 may be identified in an area other than the widget area 220.

In an embodiment, the electronic device 101 may display the AoD screen 5111. In an embodiment, in response to the input 5123 for requesting the display of the AoD screen 5111 instead of the lock screen 5112, the electronic device 101 may display the AoD screen 5111 according to the state 5101 instead of the lock screen 5112. However, it is not limited thereto. For example, in response to identifying that a specified condition (e.g., a time condition) is satisfied, the electronic device 101 may display the AoD screen 5111 instead of the lock screen 5112. For example, when a user interaction (or a user input) is not identified for a specified time, the electronic device 101 may display the AoD screen 5111 instead of the lock screen 5112. In an embodiment, the widget area 220 having the same size as the widget area 220 of the lock screen 5112 may be displayed, on the AoD screen 5111 changed from the lock screen 5112. For example, when a user interaction (or a user input) is not identified for the specified time in a state 5102, the electronic device 101 may transition to the state 5101, and may display the AoD screen 5111 including the widget area 220 in the state 5101.

Referring to a state 5103, the electronic device 101 may display an expanded widget area 420 within the lock screen 5112 through the display 260. In an embodiment, the electronic device 101 may display the expanded widget area 420 within the lock screen 5112, in response to the input 5122 for requesting a display of the expanded widget area 420.

In an embodiment, in the state 5103, the electronic device 101 may obtain an input 5125 while displaying a widget in the expanded widget area 420 within the lock screen 5112. The input 5125 may be an input for requesting a display of the widget area 220 instead of the expanded widget area 420. The input 5125 may be identified in an area other than the expanded widget area 420. In an embodiment, the electronic device 101 may display the widget area 220 instead of the expanded widget area 420, in response to the input 5125. In an embodiment, in response to the input 5125, the electronic device 101 may display the lock screen 5112 including the widget area 220, according to the state 5102.

In an embodiment, in response to identifying that a specified condition (e.g., a time condition) is satisfied, the electronic device 101 may display the AoD screen 5111 instead of the lock screen 5112. For example, when a user interaction (or a user input) is not identified for the specified time, the electronic device 101 may display the AoD screen 5111 instead of the lock screen 5112. In an embodiment, the expanded widget area 420 having the same size as the expanded widget area 420 of the lock screen 5112 may be displayed on the AoD screen 5111 changed from the lock screen 5112. However, it is not limited thereto. For example, in response to an input for requesting a display of the AoD screen 5111 instead of the lock screen 5112 received in the state 5103, the electronic device 101 may display the AoD screen 5111 according to a state 5104 instead of the lock screen 5112. For example, the input for requesting the display of the AoD screen 5111 instead of the lock screen 5112 received in the state 5103 may be an input (e.g., a double-tap input) for requesting the display of the AoD screen 5111 instead of the lock screen 5112. For example, the input for requesting the display of the AoD screen 5111 instead of the lock screen 5112 received in the state 5103 may be identified in an area other than the expanded widget area 420.

Referring to the state 5104, the electronic device 101 may display the AoD screen 5111 including the expanded widget area 420 through the display 260.

In an embodiment, in the state 5104, the electronic device 101 may obtain an input 5126 while displaying a widget in the expanded widget area 420 within the AoD screen 5111. The input 5126 may be identified in an area other than the expanded widget area 420. The input 5126 may be an input (e.g., a double-tap input) for requesting a display of the lock screen 5112 instead of the AoD screen 5111.

Referring to the state 5103, in response to the input 5126 received in the state 5104, the electronic device 101 may display, through the display 260, the lock screen 5112 including the expanded widget area 420 instead of the AoD screen 5111.

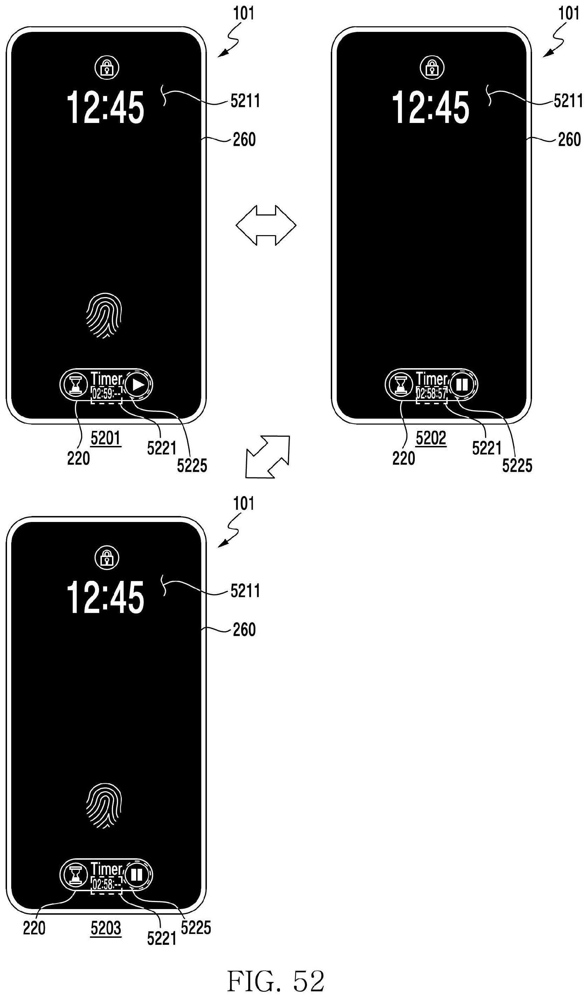

FIG. 52 illustrates an operation controlling a widget in an AoD screen by an electronic device according to an embodiment.

FIG. 52 may be described with reference to FIGS. 1 and 46.

Referring to a state 5201 of FIG. 52, the electronic device 101 may display an AoD screen 5211 through the display 260. In an embodiment, the electronic device 101 may display a widget (e.g., a widget associated with an application) in the widget area 220 within the AoD screen 5211.

In an embodiment, a widget displayed in the widget area 220 within the AoD screen 5211 may include a visual object indicating information of the widget (or a function provided by the widget). For example, the widget displayed in the widget area 220 within the AoD screen 5211 in the state 5201 may include a visual object 5221 indicating information of a function provided through the widget.

For example, the electronic device 101 may update a widget displayed in the AoD screen 5211 in the state 5201 and/or the widget area 220 at a relatively long cycle (e.g., 1 minute, 3 minutes (e.g., in a case of music playback), or 1 hour (e.g., in a case of weather information)). For example, while updating the widget displayed in the AoD screen 5211 and/or the widget area 220 at the relatively long cycle, the electronic device 101 may simplify a time expression of the visual object 5221 within the widget. For example, simplifying the time expression may include omitting a time expression of some units. For example, simplifying the time expression may include omitting a time expression in units of seconds. For example, a time expression within the visual object 5221 of a widget of a timer application may include a time unit (e.g., "2") and a minute unit (e.g., "59"), and a second unit (e.g., "--") may be omitted.

In an embodiment, the widget displayed in the widget area 220 within the AoD screen 5211 may include a visual object for controlling a widget (or a function provided by the widget). For example, the widget displayed in the widget area 220 within the AoD screen 5211 in the state 5201 may include a visual object 5225 indicating that the function provided through the widget is in a stopped state. In an embodiment, the visual object 5225 may indicate an icon (e.g., a play button or a pause button) associated with a main function of the widget.

In an embodiment, in the state 5201, the electronic device 101 may obtain an input (e.g., a double-tap input) while displaying the widget in the widget area 220 within the AoD screen 5211. For example, the input may be identified in an area within the widget area 220. For example, the input may be identified in an area within the visual object 5225 of the widget displayed in the widget area 220 within the AoD screen 5211. For example, the input may be identified in an area within the visual object 5225 for controlling a widget (or a function provided by the widget) within the AoD screen 5211.

In an embodiment, in a state 5202, the electronic device 101 may provide (or execute) the function provided by the widget, based on an input (e.g., a double-tap input) to the visual object 5225 within the AoD screen 5211.

For example, based on the input (e.g., the double-tap input) to the visual object 5225, the electronic device 101 may update a widget displayed on the AoD screen 5211 in the state 5202 and/or the widget area 220 at a relatively short cycle (e.g., 1 second). For example, while updating the widget displayed on the AoD screen 5211 and/or the widget area 220 at the relatively short cycle, the electronic device 101 may display a non-simplified time expression of the visual object 5221 within the widget. For example, not simplifying the time expression may include not omitting the time expression of some units. For example, not simplifying the time expression may include not omitting the time expression in units of seconds. For example, the time expression within the visual object 5221 in the state 5202 may include a time unit (e.g., "2"), a minute unit (e.g., "58"), and a second unit (e.g., "57").

For example, the electronic device 101 may update the AoD screen at a relatively long cycle after a specified time (e.g., 10 seconds, 30 seconds, or 1 minute) elapses after providing (or executing) of a function provided by the widget based on the input (e.g., the double-tap input) to the visual object 5225 within the AoD screen 5211 is initiated. For example, the relatively long cycle may be the same as a reference update cycle of the AoD screen. For example, when the reference update cycle of the AoD screen is 1 minute, the electronic device 101 may update the widget area 220 and/or the visual object 5221 within the AoD screen in units of 1 minute.

For example, while updating the widget area 220 and/or the visual object 5221 in the state 5203 at the relatively long cycle, the electronic device 101 may simplify a time expression of the visual object 5221 within the widget. For example, simplifying the time expression may include omitting the time expression of some units. For example, simplifying the time expression may include omitting the time expression in units of seconds. For example, a time expression within the visual object 5221 of a widget of a timer application may include a time unit (e.g., "2") and a minute unit (e.g., "58"), and a second unit (e.g., "--") may be omitted.

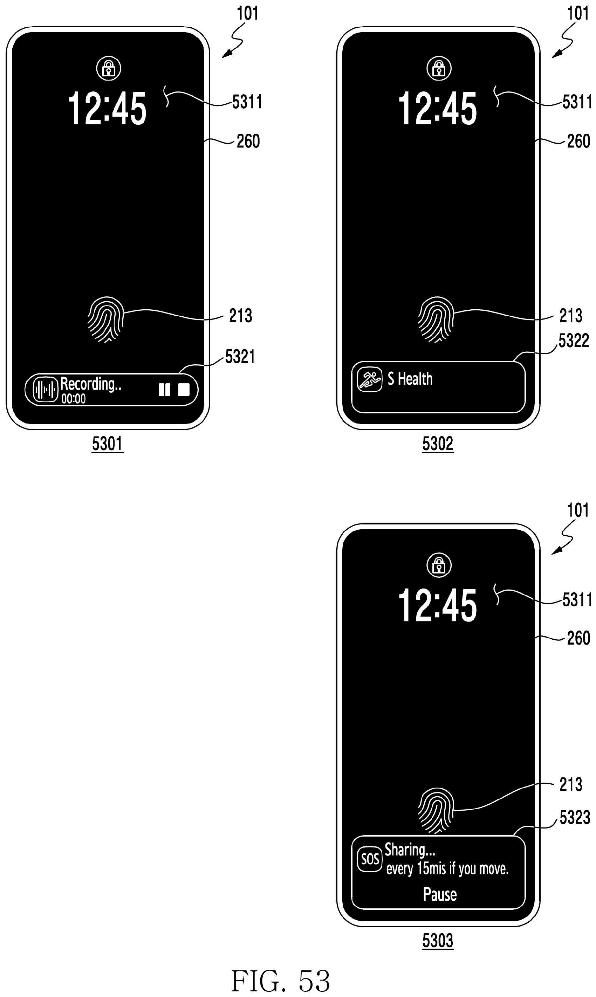

FIG. 53 illustrates an example of widget areas displayed on an AoD screen according to an embodiment.

FIG. 53 may be described with reference to FIGS. 1 and 46.

Referring to states 5301, 5302, and 5303 of FIG. 53, the electronic device 101 may display an AoD screen 5311 including each of widgets 5321, 5322, and 5323 through the display 260. For example, while displaying an expanded widget area (e.g., 420 of FIG. 4) in a lock screen, the electronic device 101 may display the AoD screen 5311, in response to identifying an event for requesting a transition to the AoD screen 5311 (e.g., a double-tap input to an area other than the expanded widget area 420) (e.g., a user interaction (or a user input) is not received for a specified time (e.g., 5 seconds) while a lock screen is displayed).

For example, the electronic device 101 may display each of the widgets 5321, 5322, and 5323 included in the AoD screen 5311 in a widget area having a size larger than the widget area 220. For example, in the state 5301, the electronic device 101 may display the widget 5321 in an area including a widget area (e.g., 220 of FIG. 2A) and icon areas (e.g., 230 and 240 of FIG. 2A). For example, in the state 5302, the electronic device 101 may display the widget 5322 in an expanded widget area 420 (or an area smaller than the expanded widget area 420). For example, in the state 5303, the electronic device 101 may display the widget 5323 in an area larger than the expanded widget area 420.

In an embodiment, the widgets 5321, 5322, and 5323 displayed in each of the states 5301, 5302, and 5303 may be displayed in an area that does not overlap an input area for obtaining a fingerprint image or an area where a visual object 213 indicating the input area for obtaining the fingerprint image is displayed. For example, the widgets 5321, 5322, and 5323 may be displayed in an area different from the expanded widget area 420 displayed in the lock screen so as not to cover the visual object 213. For example, the widgets 5321, 5322, and 5323 may be moved within the AoD screen 5311 so as not to cover the visual object 213.

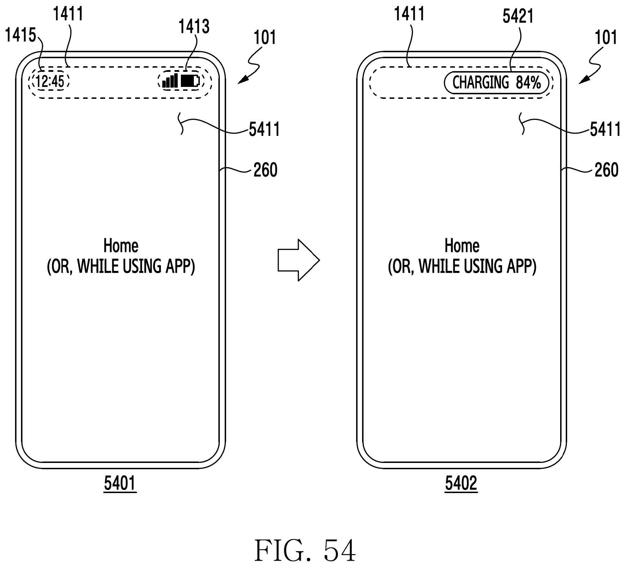

FIG. 54 illustrates an example of a widget on a screen displayed by an electronic device according to an embodiment.

FIG. 54 may be described with reference to FIGS. 1 and 46.

Referring to a state 5401 of FIG. 54, the electronic device 101 may display a screen 5411 (e.g., a home screen, a screen of an application, or an apps screen) other than a lock screen through the display 260. In an embodiment, the electronic device 101 may display the screen 5411 in an unlocked state (or a use state). According to an embodiment, the electronic device 101 may display a widget within the screen 5411. For example, the electronic device 101 may display a widget in widget areas (e.g., 1420, 1421, 1422, and 1423) described with reference to FIGS. 14A to 14C within the screen 5411.

In an embodiment, the electronic device 101 may identify an event, while displaying the screen 5411. In an embodiment, the event may be identification of a change of a state (or setting) of the electronic device 101. In an embodiment, the event may indicate that required information and/or interest information is identified. For example, the event may indicate that an external electronic device is connected to the electronic device 101. For example, the event may indicate that the electronic device 101 is being charged (e.g., receiving power from the external electronic device). For example, the event may indicate that a mode of the electronic device 101 is changed. For example, the event may indicate that a task of the electronic device 101 is changed. For example, the event may include that the electronic device 101 identifies a notification from an application.

In an embodiment, the electronic device 101 may display a widget of an application corresponding to the identified event within a notification area 1411. For example, the notification area 1411 may be displayed at an upper end of a screen of the display 260. In an embodiment, the notification area 1411 may include an area 1413 where a visual object indicating a state (e.g., a battery state or a communication state) of the electronic device is displayed and/or an area 1415 where a visual object indicating a current time is displayed.

For example, referring to a state 5402, the electronic device 101 may display, in the notification area 1411 (or a widget area within the notification area 1411), a widget 5421 indicating that the electronic device 101 is being charged, while displaying the screen 5411.

For example, referring to the state 5402, the electronic device 101 may display the widget 5421 indicating that the electronic device 101 is being charged, instead of visual objects displayed within the notification area 1411, for a specified time, in response to identifying that the electronic device 101 is being charged (e.g., receiving power from the external electronic device) while displaying a home screen. For example, the widget 5421 indicating that the electronic device 101 is being charged may include a visual object indicating that charging is in progress and a visual object indicating a charge amount of a battery of the electronic device 101.

In FIG. 54, the widget 5421 indicating that the electronic device 101 is being charged is illustrated as a widget corresponding to the event, but this is only an example. According to an embodiment, in response to identifying various events (e.g., a mode change event, a food delivery-related event, a route guidance-related event, a message reception event, and/or a phone call reception event), the electronic device 101 may display a widget corresponding to each of the various events in the notification area 1411.

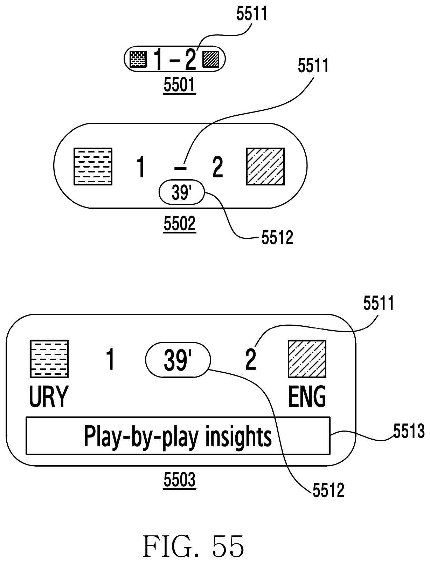

FIG. 55 illustrates an example of information included in a widget displayed by an electronic device according to an embodiment.

FIG. 55 may be described with reference to FIGS. 1 and 46.

Referring to FIG. 55, widgets 5501, 5502, and 5503 may include different amounts of information. For example, the widgets 5501, 5502, and 5503 may include a larger amount of information as a size thereof increases. For example, among the illustrated widgets 5501, 5502, and 5503, the widget 5501 may have the smallest size, and the widget 5503 may have the largest size. Accordingly, the amount of information displayed in the widget 5501 may be the smallest, and the amount of information displayed in the widget 5503 may be the largest. According to an embodiment, the widget 5501 may be displayed in the widget area 1421 illustrated in FIG. 14A. For example, the widget 5502 may be displayed in the widget area 220 illustrated in FIG. 2B. For example, the widget 5503 may be displayed in the expanded widget area 223 illustrated in FIG. 2B (or the expanded widget area 420 illustrated in FIG. 4).

In an embodiment, the widget 5501 may include the smallest amount of information. For example, the widget 5501 may include the smallest number of visual objects 5511. For example, the widget 5501 may include the visual object 5511 of the smallest size. For example, the visual object 5511 may include a symbol (e.g., national flag) of teams participating in a soccer match and/or a score of the teams.

In an embodiment, the widget 5502 may include a larger amount of information than the widget 5501. For example, the widget 5502 may include a larger number of visual objects 5511 and 5512 than the widget 5501. For example, the widget 5502 may include the visual object 5511 having a larger size than the widget 5501. For example, the visual object 5511 in the widget 5502 may have a larger size than the visual object 5511 in the widget 5501. For example, a size of a symbol and/or a score included in the visual object 5511 in the widget 5502 may be larger than a size of a symbol and/or a score included in the visual object 5511 in the widget 5501. For example, the visual object 5512 may include a progress time of the soccer match.

In an embodiment, the widget 5503 may include a larger amount of information than the widget 5502. For example, the widget 5503 may include a larger number of visual objects 5511, 5512, and 5513 than the widget 5502. For example, the widget 5503 may include the visual object 5511 having a larger size than the widget 5502. For example, the visual object 5511 in the widget 5503 may have a larger size than the visual object 5511 in the widget 5502. For example, a size of a symbol and/or a score included in the visual object 5511 in the widget 5503 may be larger than a size of a symbol and/or a score included in the visual object 5511 in the widget 5502. For example, the visual object 5512 may include the progress time of the soccer match. For example, the visual object 5513 may be a visual object for requesting additional information. For example, the electronic device 101 may display insight information and/or AI summary information on information displayed in the widget 5503, based on a user input to the visual object 5513. For example, the electronic device 101 may display the insight information and/or the AI summary information through the widget 5503, based on the user input to the visual object 5513.

FIG. 56 illustrates an example of setting screens displayed by an electronic device according to an embodiment.

FIG. 56 may be described with reference to FIGS. 1 and 46.

Referring to FIG. 56, a menu 5601 may be a menu for setting an AoD screen of the electronic device 101. In an embodiment, when a toggle for determining whether to display the AoD screen is in an On state, the electronic device 101 may display the menu 5601 in which a toggle for determining whether to display a widget is activated. In an embodiment, when the toggle for determining whether to display the AoD screen is in the On state, the electronic device 101 may display the AoD screen. In an embodiment, when the toggle for determining whether to display the AoD screen is in an Off state, the electronic device 101 may not display the AoD screen.

In an embodiment, when a toggle (e.g., a toggle next to an item "Show Now bar") for determining whether to display widget areas (e.g., the widget area 220 (or the expanded widget area 420)) is in the On state, the electronic device 101 may display a widget in the widget areas on the AoD screen. In an embodiment, when the toggle for determining whether to display the widget areas is in the Off state, the electronic device 101 may not display a widget on the AoD screen.

For example, the electronic device 101 may display the menu 5601, based on that an item (e.g., "Always On Display") for displaying the menu 5601 within a menu 5602 is selected.

In an embodiment, the menu 5602 may be a menu for setting a lock screen and/or the AoD screen of the electronic device 101. In an embodiment, the electronic device 101 may display a menu 5603 for setting display of a widget, based on that an item (e.g., "Now bar") for setting the display of the widget is selected. According to an embodiment, the electronic device 101 may display the menu 5603, based on that an item (e.g., "Show Now bar") for displaying the menu 5603 is selected in the menu 5601.

In an embodiment, when a toggle (e.g., a toggle next to an item "Now brief", a toggle next to an item "Media player", and/or a toggle next to "Current mode from Modes and Routines") for determining a type of widgets to be displayed in the widget areas in the menu 5603 is in the On state, the electronic device 101 may display, on the lock screen (and/or the AoD screen), a widget of a corresponding type in widget areas (e.g., the widget area 220 (or the expanded widget area 420)). In an embodiment, the "Now brief" may include the widgets described with reference to FIGS. 34A and 34B. In an embodiment, the "Media player" may include the widgets described with reference to FIG. 26A. In an embodiment, the "Current mode from Modes and Routines" may include the widgets described with reference to FIG. 8B or FIG. 11. However, examples of the widget are not limited to the above drawings.

In an embodiment, the electronic device 101 may display another menu for setting display of widgets of application, based on that an item (e.g., "Live notifications") for setting display of widgets of one or more applications is selected in the menu 5603. In an embodiment, an item and/or a toggle for setting whether to display a widget for each of the one or more applications may be displayed in the another menu.

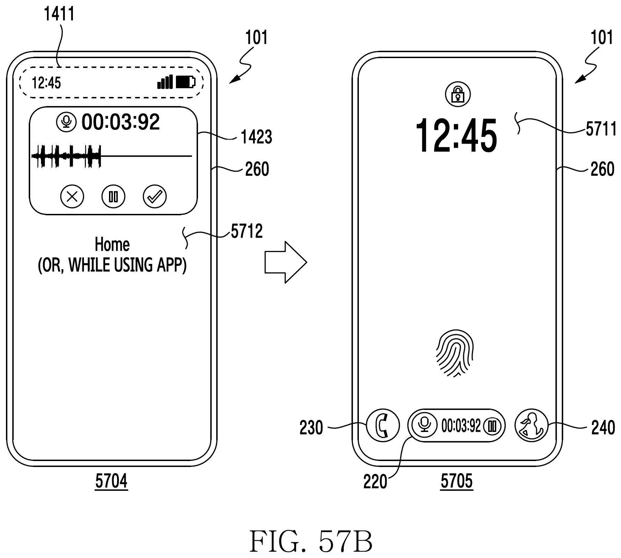

FIG. 57A is a diagram illustrating a change of widgets displayed by an electronic device according to an embodiment. FIG. 57B is a diagram illustrating a change of widgets displayed by an electronic device according to an embodiment.

FIGS. 57A and 57B may be described with reference to FIGS. 1 and 46.

Referring to FIG. 57A, in a state 5701, the electronic device 101 may display a lock screen 5711 through the display 260 in a lock state. In an embodiment, the lock screen 5711 may include a widget area 220. In an embodiment, the lock screen 5711 may include icon areas 230 and 240.

In the state 5701, the electronic device 101 may receive an input for releasing the lock state. In an embodiment, the electronic device 101 may release the lock state in response to the input for releasing the lock state. In an embodiment, referring to a state 5702, the electronic device 101 may display a screen 5712 through the display 260 in an unlocked state. In an embodiment, in a notification area 1411 of the screen 5712, a widget corresponding to a widget displayed in the widget area 220 may be displayed in a widget area 1421. An application of a widget displayed in the widget area 1421 in the unlocked state may be the same as an application of a widget displayed in the widget area 220 in the lock state.

In an embodiment, as a widget is displayed in the widget area 1421 having a small size instead of the widget area 220 having a large size, an amount of information and/or an amount of control elements displayed in the widget may be reduced. For example, in the state 5702, a visual object for controlling a function of the widget may not be displayed in a widget displayed in the widget area 1421. On the other hand, in the state 5701, a visual object for controlling the function of the widget may be displayed in the widget displayed in the widget area 220.

In the state 5702, the electronic device 101 may receive an input 5721 to the widget area 1421. The input 5721 to the widget area 1421 may be a tap input (or a double-tap input).

In a state 5703, the electronic device 101 may display a widget area 1423 in an expanded state instead of the widget area 1421, in response to the input 5721 to the widget area 1421. An application of a widget displayed in the widget area 1421 in the state 5702 may be the same as an application of a widget displayed in the widget area 1423 in the state 5703.

In an embodiment, as a widget is displayed in the widget area 1423 having a large size instead of the widget area 1421 having a small size, the amount of information and/or the amount of control elements displayed in the widget may be increased. For example, in the state 5703, the number of visual objects for controlling a function of a widget displayed in the widget area 1423 may be greater than the number of visual objects of a widget displayed in the widget area 1421 in the state 5702.

In the state 5703, the electronic device 101 may receive an input 5722 to the widget area 1423. The input 5722 to the widget area 1423 may be a tap input (or a double-tap input).

In a state 5704, the electronic device 101 may display another widget in the widget area 1423 in the expanded state, in response to the input 5722 to the widget area 1423. An application of the widget displayed in the widget area 1423 in the state 5703 may be different from an application of the another widget displayed in the widget area 1423 in the state 5704. For example, the another widget displayed in the widget area 1423 in the state 5704 may be a next widget of the widget displayed in the widget area 1423 in the state 5703.

Referring to FIG. 57B, in a state 5704, the electronic device 101 may receive an input for transitioning to the lock state. In an embodiment, the electronic device 101 may lock the electronic device 101 in response to the input for transitioning to the lock state.

In an embodiment, referring to a state 5705, the electronic device 101 may display a screen 5711 through the display 260, in the lock state. In an embodiment, a widget corresponding to a widget displayed in the widget area 1423 in the state 5704 may be displayed in the widget area 220 of the screen 5711. An application of the widget displayed in the widget area 1423 in the unlocked state may be the same as an application of the widget displayed in the widget area 220 in the lock state.

In an embodiment, as a widget is displayed in the widget area 220 having a small size instead of the widget area 1423 having a large size, an amount of information and/or an amount of control elements displayed on the widget may be reduced. For example, in the state 5705, the number of visual objects for controlling a function of the widget displayed in the widget area 220 may be less than the number of visual objects of the widget displayed in the widget area 1423 in the state 5704.

According to an embodiment, in a lock state where a widget of a timer is displayed (e.g., a state according to FIG. 2G, the state 301 of FIG. 3, the states 401, 403, and 405 of FIG. 4, the state 501 of FIG. 5, the state 2506 of FIG. 25A, the state 2521 of FIG. 25B, the state 2703 of FIG. 27A, the state 2901 of FIG. 29, the state 3501 of FIG. 35, the state 3601 of FIG. 36, the states 4801, 4802, and 4803 of FIG. 48, the states 4901 and 4904 of FIG. 49A, the states 4904 and 4906 of FIG. 49B, the states 4904, 4907, and 4908 of FIG. 49C, the state 5001 of FIG. 50A, the states 5101, 5102, 5103, and 5104 of FIG. 51, and the states 5201, 5202, and 5203 of FIG. 52), when the electronic device 101 receives an input for unlocking, the electronic device 101 may unlock the electronic device 101 and display a screen 5712 according to the state 5702 illustrated through FIG. 57A. According to an embodiment, in a lock state where a widget of an application other than the timer is displayed, when the electronic device 101 receives the input for unlocking, the electronic device 101 may unlock the electronic device 101 and display the widget of the application other than the timer in the widget area 1421 of the state 1402 illustrated through FIG. 14A.

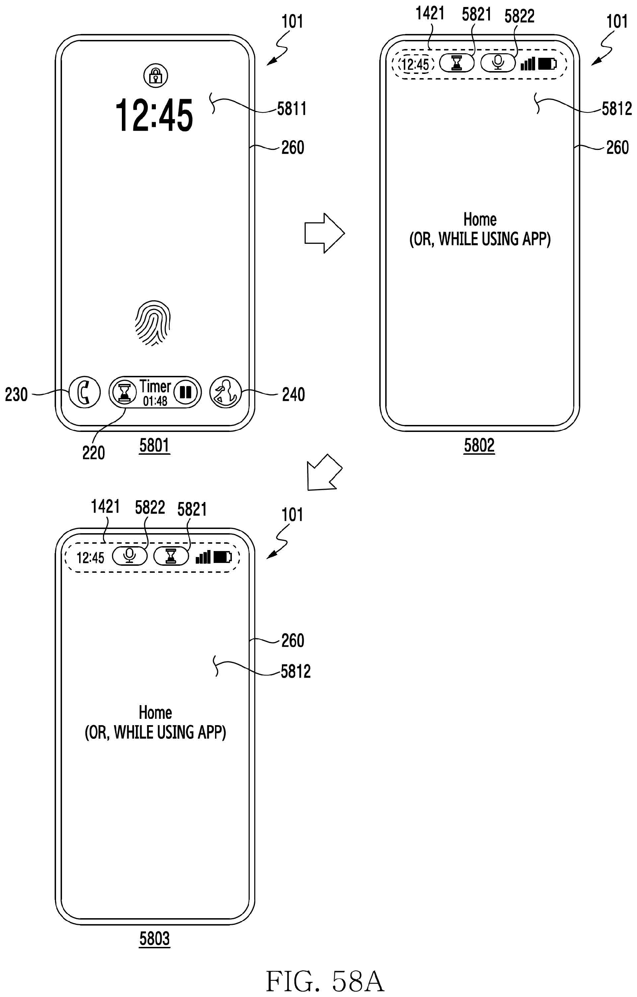

FIG. 58A is a diagram illustrating a change of widgets displayed by an electronic device according to an embodiment.

FIG. 58A may be described with reference to FIGS. 1 and 46.

Referring to FIG. 58A, in a state 5801, the electronic device 101 may display a lock screen 5811 through the display 260 in a lock state. In an embodiment, the lock screen 5811 may include a widget area 220. In an embodiment, the lock screen 5811 may include icon areas 230 and 240.

In the state 5801, the electronic device 101 may receive an input for releasing the lock state. In an embodiment, the electronic device 101 may release the lock state in response to the input for releasing the lock state. In an embodiment, referring to a state 5802, the electronic device 101 may display a screen 5812 through the display 260 in an unlocked state. In an embodiment, in a notification area 1411 of the screen 5812, a widget 5821 corresponding to a widget displayed in the widget area 220 may be displayed in a widget area 1421. An application of the widget 5821 displayed in the widget area 1421 in the unlocked state may be the same as an application of the widget displayed in the widget area 220 in the lock state.

In an embodiment, two or more widgets 5821 and 5822 may be displayed in the notification area 1411 of the screen 5812. For example, the electronic device 101 may display two or more widgets 5821 and 5822 determined based on a priority between widgets, in the widget area 1421. For example, an order in which the two or more widgets 5821 and 5822 are arranged may be the same as the priority between the widgets.

In an embodiment, in the state 5802, the electronic device 101 may receive an input for changing the order of the two or more widgets 5821 and 5822. In an embodiment, the input for changing the order of the two or more widgets 5821 and 5822 may be a swipe input to one widget.

In an embodiment, in a state 5803, in response to receiving an input for changing the order of the widgets 5821 and 5822, the electronic device 101 may change an order of a widget (e.g., the widget 5821) selected by the input to a last order. In an embodiment, when an additional widget exists in addition to the widgets 5821 and 5822, the electronic device 101 may display the widget 5822 and the additional widget in the notification area 1411. In an embodiment, when an additional widget does not exist in addition to the widgets 5821 and 5822, the electronic device 101 may display the widget 5822 at a location preceding the widget 5821 (e.g., the left).

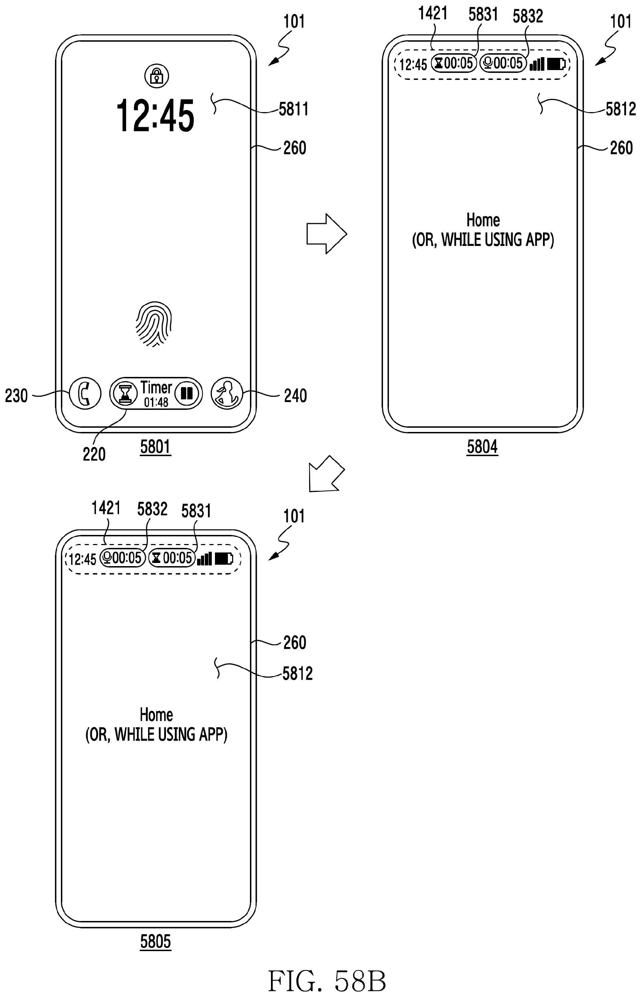

According to an embodiment, in the state 5802, the electronic device 101 may receive an input (e.g., a tap input or a double-tap input) for selecting any one widget (e.g., the widget 5821) among the two or more widgets 5821 and 5822. In an embodiment, in response to the input (e.g., the tap input or the double-tap input) for selecting any one widget (e.g., the widget 5821), the electronic device 101 may change display of the selected widget (e.g., the widget 5821) such that the selected widget (e.g., the widget 5821) displays a larger amount of information. For example, changing the display of the selected widget (e.g., the widget 5821) may include replacing the selected widget (e.g., the widget 5821) with a widget 5831 displayed in a state 5804 of FIG. 58B. For example, changing the display of the selected widget (e.g., the widget 5821) may include that the selected widget (e.g., the widget 5821) further includes additional information (e.g., a time expression) in addition to an icon of an application. At this time, the electronic device 101 may maintain display of an unselected widget (e.g., the widget 5822). For example, the unselected widget (e.g., the widget 5822) may include only the icon of the application without the additional information (e.g., the time expression).

FIG. 58B is a diagram illustrating a change of widgets displayed by an electronic device according to an embodiment.

FIG. 58B may be described with reference to FIGS. 1 and 46.

Referring to FIG. 58B, in a state 5801, the electronic device 101 may display a lock screen 5811 through the display 260 in a lock state. In an embodiment, the lock screen 5811 may include a widget area 220. In an embodiment, the lock screen 5811 may include icon areas 230 and 240.

In the state 5801, the electronic device 101 may receive an input for releasing the lock state. In an embodiment, the electronic device 101 may release the lock state, in response to the input for releasing the lock state. In an embodiment, referring to a state 5804, the electronic device 101 may display a screen 5812 through the display 260 in an unlocked state. In an embodiment, in a notification area 1411 of the screen 5812, a widget 5831 corresponding to a widget displayed in the widget area 220 may be displayed in a widget area 1421. An application of the widget 5831 displayed in the widget area 1421 in the unlocked state may be the same as an application of the widget displayed in the widget area 220 in the lock state.

In an embodiment, two or more widgets 5831 and 5832 may be displayed in the notification area 1411 of the screen 5812. For example, the electronic device 101 may display two or more widgets 5831 and 5832 determined based on a priority between widgets in the widget area 1421. For example, an order in which the two or more widgets 5831 and 5832 are arranged may be the same as the priority between the widgets.

The two or more widgets 5831 and 5832 of FIG. 58B may be larger than the two or more widgets 5821 and 5822 of FIG. 58A. The two or more widgets 5831 and 5832 of FIG. 58B may include a larger amount of information than the two or more widgets 5821 and 5822 of FIG. 58A. In an embodiment, while each of the two or more widgets 5821 and 5822 of FIG. 58A indicates an icon of an application, the two or more widgets 5831 and 5832 of FIG. 58B may include the icon of the application and additional information (e.g., a time expression).

In an embodiment, in the state 5804, the electronic device 101 may receive an input for changing an order of the two or more widgets 5831 and 5832. In an embodiment, the input for changing the order of the two or more widgets 5831 and 5832 may be a swipe input to one widget.

In an embodiment, in a state 5805, the electronic device 101 may change an order of a widget selected by the input (e.g., the widget 5831) to a last order, in response to receiving the input for changing the order of the widgets 5831 and 5832. In an embodiment, when an additional widget exists in addition to the widgets 5831 and 5832, the electronic device 101 may display the widget 5832 and the additional widget in the notification area 1411. In an embodiment, when an additional widget does not exist in addition to the widgets 5831 and 5832, the electronic device 101 may display the widget 5832 at a location preceding the widget 5831 (e.g., the left).

According to an embodiment, in the state 5804, the electronic device 101 may set the two or more widgets 5831 and 5832 such that, among the two or more widgets 5831 and 5832, a widget displayed in the widget area 220 in the state 5801 (or a state immediately before unlocking) displays a larger amount of information than another widget not displayed in the widget area 220 in the state 5801 (or the state immediately before unlocking). For example, in the state 5804, the electronic device 101 may display a widget (e.g., the widget 5831), while displaying another widget (e.g., the widget 5832) as a widget displaying a relatively small amount of information (e.g., the widget 5822 of FIG. 58A). For example, the widget 5831 displayed in the widget area 220 in the state 5801 (or the state immediately before unlocking) may include an icon of an application and additional information (e.g., a time expression), whereas a widget not displayed in the widget area 220 in the state 5801 (or the state immediately before unlocking) may include only the icon of the application without the additional information (e.g., the time expression).

As described above, an electronic device 101 may include a display 260. The electronic device 101 may include at least one processor 120 comprising processing circuitry. The electronic device 101 may include memory 130 including one or more storage media storing instructions. The instructions, when executed by the at least one processor 120 individually or collectively, may cause the electronic device 101 to display a lock screen including a widget located between a first icon and a second icon through the display 260 in a lock state of the electronic device 101. The instructions, when executed by the at least one processor 120 individually or collectively, may cause the electronic device 101 to display information corresponding to a first application through the widget. The instructions, when executed by the at least one processor 120 individually or collectively, may cause the electronic device 101 to obtain a notification from a second application while displaying the lock screen. The instructions, when executed by the at least one processor 120 individually or collectively, may cause the electronic device 101 to expand the widget to a location of the first icon and display the notification through the widget, based at least in part on determining that the second application is associated with the first icon. The instructions, when executed by the at least one processor 120 individually or collectively, may cause the electronic device 101 to display the notification through the widget, based at least in part on determining that the second application is not associated with the first icon and the second icon.

The instructions, when executed by the at least one processor 120 individually or collectively, may cause the electronic device 101 to receive a user input 311 or 313 to the widget. The instructions, when executed by the at least one processor 120 individually or collectively, may cause the electronic device 101 to identify a third application for displaying other information through the widget, based at least in part on the user input 311 or 313. The instructions, when executed by the at least one processor 120 individually or collectively, may cause the electronic device 101 to display the other information provided by the third application through the widget.

The instructions, when executed by the at least one processor 120 individually or collectively, may cause the electronic device 101 to display an image corresponding to the third application as a wallpaper of the lock screen.

The user input may include an input for selecting a mode for a setting associated with a use of the first application according to a use environment of the electronic device 101.

The instructions, when executed by the at least one processor 120 individually or collectively, may cause the electronic device 101 to identify that information displayed through the widget is changed. The instructions, when executed by the at least one processor 120 individually or collectively, may cause the electronic device 101 to identify an image based on the changed information. The instructions, when executed by the at least one processor 120 individually or collectively, may cause the electronic device 101 to display the identified image as a wallpaper of the lock screen.

The instructions, when executed by the at least one processor 120 individually or collectively, may cause the electronic device 101 to receive a user input to the widget. The instructions, when executed by the at least one processor 120 individually or collectively, may cause the electronic device 101 to, based at least in part on the user input, expand the widget such that the widget is expanded in a first direction toward the first icon and the second icon and in a second direction perpendicular to the first direction. The instructions, when executed by the at least one processor 120 individually or collectively, may cause the electronic device 101 to display the information through the expanded widget. The instructions, when executed by the at least one processor 120 individually or collectively, may cause the electronic device 101 to receive another user input 415 to an area other than the expanded widget. The instructions, when executed by the at least one processor 120 individually or collectively, may cause the electronic device 101 to display the information through the widget, based at least in part on the another user input 415.

The instructions, when executed by the at least one processor 120 individually or collectively, may cause the electronic device 101 to change a display of the second icon 240 to a graphic object indicating a function associated with ending a call, based at least in part on determining that the notification corresponds to a call request and the first icon corresponds to a phone application.

The instructions, when executed by the at least one processor 120 individually or collectively, may cause the electronic device 101 to receive a user input to the expanded widget while the notification corresponding to the call request is displayed through the expanded widget. The instructions, when executed by the at least one processor 120 individually or collectively, may cause the electronic device 101 to connect a call corresponding to the call request, based at least in part on the user input. The instructions, when executed by the at least one processor 120 individually or collectively, may cause the electronic device 101 to display other information corresponding to the call connection, through the expanded widget. The instructions, when executed by the at least one processor 120 individually or collectively, may cause the electronic device 101 to change the graphic object for the second icon to indicate an associated application that was previously indicated, after the call connection is ended.

The instructions, when executed by the at least one processor 120 individually or collectively, may cause the electronic device 101 to identify another user input to the graphic object during the call connection. The instructions, when executed by the at least one processor 120 individually or collectively, may cause the electronic device 101 to end the call connection, based at least in part on the another user input. The instructions, when executed by the at least one processor 120 individually or collectively, may cause the electronic device 101 to display the information through the widget.

The instructions, when executed by the at least one processor 120 individually or collectively, may cause the electronic device 101 to receive a user input associated with the second icon. The instructions, when executed by the at least one processor 120 individually or collectively, may cause the electronic device 101 to display other information corresponding to a third application associated with the second icon, through the widget.

As described above, a method may be performed by an electronic device 101 including a display 260. The method may include displaying a lock screen including a widget located between a first icon and a second icon through the display 260, in a lock state of the electronic device 101. The method may include displaying information corresponding to a first application through the widget. The method may include obtaining a notification from a second application while displaying the lock screen. The method may include expanding the widget to a location of the first icon and displaying the notification through the widget, based at least in part on determining that the second application is associated with the first icon. The method may include displaying the notification through the widget, based at least in part on determining that the second application is not associated with the first icon and the second icon.

The method may include receiving a user input 311 or 313 to the widget. The method may include identifying a third application for displaying other information through the widget, based at least in part on the user input 311 or 313. The method may include displaying the other information provided by the third application through the widget.

The method may include displaying an image corresponding to the third application as a wallpaper of the lock screen.

The user input may include an input for selecting a mode for a setting associated with a use of the first application according to a use environment of the electronic device 101.

The method may include identifying that information displayed through the widget 220 is changed. The method may include identifying an image based on the changed information. The method may include displaying the identified image as a wallpaper of the lock screen.

The method may include identifying that the information displayed through the widget is changed. The method may include displaying information through the widget 420 in a third state in which the widget 220 is expanded in a direction toward the icon areas 230 and 240 and a direction perpendicular to the direction, based on the input 411. The method may include identifying another input 415 to an area other than the widget 220 in the third state. The method may include displaying the information through the widget 220 in the first state, based on the another input 415.

The method may include receiving a user input to the widget. The method may include expanding the widget such that the widget is expanded in a first direction toward the first icon and the second icon and a second direction perpendicular to the first direction, based at least in part on the user input. The method may include displaying the information through the expanded widget. The method may include receiving another user input 415 to an area other than the expanded widget. The method may include displaying the information through the widget based at least in part on the another user input 415.

The method may include changing a display of the second icon 240 to a graphic object indicating a function associated with ending a call, based at least in part on determining that the notification corresponds to a call request and the first icon corresponds to a phone application.

The method may include receiving a user input to the expanded widget while the notification corresponding to the call request is displayed through the expanded widget. The method may include connecting a call corresponding to the call request, based at least in part on the user input. The method may include displaying other information corresponding to the call connection through the expanded widget. The method may include changing the graphic object for the second icon to indicate an associated application that was previously indicated, after the call connection is ended.

The method may include identifying another user input to the graphic object during the call connection. The method may include ending the call connection based at least in part on the another user input. The method may include displaying the information through the widget.

The method may include receiving a user input associated with the second icon. The method may include displaying other information corresponding to a third application associated with the second icon through the widget.

As described above, a non-transitory computer readable storage medium may store a program including instructions. The instructions, when executed by at least one processor 120 of an electronic device 101 with a display 260 individually or collectively, may cause the electronic device 101 to display a lock screen including a widget located between a first icon and a second icon through the display 260 in a lock state of the electronic device 101. The instructions, when executed by the at least one processor 120 individually or collectively, may cause the electronic device 101 to display information corresponding to a first application through the widget. The instructions, when executed by the at least one processor 120 individually or collectively, may cause the electronic device 101 to obtain a notification from a second application while displaying the lock screen. The instructions, when executed by the at least one processor 120 individually or collectively, may cause the electronic device 101 to expand the widget to a location of the first icon and display the notification through the widget, based at least in part on determining that the second application is associated with the first icon. The instructions, when executed by the at least one processor 120 individually or collectively, may cause the electronic device 101 to display the notification through the widget, based at least in part on determining that the second application is not associated with the first icon and the second icon.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (260),
at least one processor (120) comprising processing circuitry, and
memory (130) comprising one or more storage media storing instructions,
wherein the instructions, when executed, individually or collectively, by the at least one processor (120), cause the electronic device (101) to:
display, in a lock state of the electronic device (101), a lock screen comprising a widget located between a first icon and a second icon through the display (260),
display, through the widget, information corresponding to a first application,
obtain, while displaying the lock screen, a notification from a second application,
based at least in part on determining that the second application is associated with the first icon, expand the widget to a location of the first icon and display the notification through the widget, and
based at least in part on determining that the second application is not associated with the first icon and the second icon, display the notification through the widget.

2. The electronic device (101) of claim 1,
wherein the instructions, when executed, individually or collectively, by the at least one processor (120), cause the electronic device (101) to:
receive a user input (311, 313) to the widget,
based at least in part on the user input (311, 313), identify a third application for displaying other information through the widget, and
display the other information provided by the third application through the widget.

3. The electronic device (101) of claim 2,
wherein the instructions, when executed, individually or collectively, by the at least one processor (120), cause the electronic device (101) to:
display an image corresponding to the third application as a wallpaper of the lock screen.

4. The electronic device (101) of claim 2 or 3,
wherein the user input comprises an input for selecting a mode for setting associated with a use of the first application according to a use environment of the electronic device (101).

5. The electronic device (101) of any one of claims 1 to 4, further comprising:
communication circuitry,
wherein the instructions, when executed, individually or collectively, by the at least one processor (120), cause the electronic device (101) to:
identify that the electronic device (101) is connected with an external electronic device through the communication circuitry, and
based at least in part on determining that the electronic device (101) is connected with the external electronic device through the communication circuitry, display other information provided from a fourth application associated with the external electronic device through the widget.

6. The electronic device (101) of any one of claims 1 to 5,
wherein the instructions, when executed, individually or collectively, by the at least one processor (120), cause the electronic device (101) to:
receive a user input to the widget,
based at least in part on the user input, expand the widget such that the widget is expanded in a first direction toward the first icon and the second icon and in a second direction perpendicular to the first direction,
display the information through the expanded widget,
receive another user input (415) to an area other than the expanded widget, and
based at least in part on the another user input (415), display the information through the widget.

7. The electronic device (101) of any one of claims 1 to 6,
wherein the instructions, when executed, individually or collectively, by the at least one processor (120), cause the electronic device (101) to:
based at least in part on determining that the notification corresponds to a call request and the first icon corresponds to a phone application, change a display of the second icon (240) to a graphic object indicating a function associated with ending a call.

8. The electronic device (101) of claim 7,
wherein the instructions, when executed, individually or collectively, by the at least one processor (120), cause the electronic device (101) to:
receive a user input to the expanded widget while the notification corresponding to the call request is displayed through the expanded widget,
based at least in part on the user input, connect a call corresponding to the call request, display, through the expanded widget, other information corresponding to the call connection, and
after the call connection is ended, change the graphic object for the second icon to indicate an associated application that was previously indicated.

9. The electronic device (101) of claim 8,
wherein the instructions, when executed, individually or collectively, by the at least one processor (120), cause the electronic device (101) to:
identify another user input to the graphic object during the call connection,
based at least in part on the another user input, end the call connection, and
display the information through the widget.

10. The electronic device (101) of any one of claims 1 to 9,
wherein the instructions, when executed, individually or collectively, by the at least one processor (120), cause the electronic device (101) to:
receive a user input associated with the second icon, and
display, through the widget, other information corresponding to a third application associated with the second icon.

11. A method of an electronic device (101) comprising a display (260), the method comprising:
displaying, in a lock state of the electronic device (101), a lock screen comprising a widget located between a first icon and a second icon through the display (260),
displaying, through the widget, information corresponding to a first application,
obtaining, while displaying the lock screen, a notification from a second application,
based at least in part on determining that the second application is associated with the first icon, expanding the widget to a location of the first icon and displaying the notification through the widget, and
based at least in part on determining that the second application is not associated with the first icon and the second icon, displaying the notification through the widget.

12. The method of claim 11, further comprising:
receiving a user input (311, 313) to the widget,
based at least in part on the user input (311, 313), identifying a third application for displaying other information through the widget, and
displaying the other information provided by the third application through the widget.

13. The method of claim 12, further comprising:
displaying an image corresponding to the third application as a wallpaper of the lock screen.

14. The method of claim 12 or 13,
wherein the user input comprises an input for selecting a mode for setting associated with a use of the first application according to a use environment of the electronic device (101).

15. The method of any one of claims 11 to 14, further comprising:
identifying that the electronic device (101) is connected with an external electronic device through communication circuitry, and
based at least in part on determining that the electronic device (101) is connected with the external electronic device through the communication circuitry, displaying other information provided from a fourth application associated with the external electronic device through the widget.
